# EUROPEAN PATENT APPLICATION

(11) **EP 4 822 527 A1**
(43) Date of publication of application: **14.10.2026**
(21) Application number: 26171670.8
(22) Date of filing: 10.04.2026
(51) Int. Cl.: G06F 9/46, G06F 9/48

(54) **APPLICATION PROGRAMMING INTERFACE TO PAUSE INSTRUCTIONS**

(30) Priority: 10.04.2025 US 202519175736
(71) Applicant: Nvidia Corporation, Santa Clara, CA 95051 (US)
(72) Inventor: TYAGI, Abhishek, Santa Clara, 95051 (US); NAIR, Saumya, Santa Clara, 95051 (US); JAIN, Ashutosh, Santa Clara, 95051 (US); PARIKH, Alok, Santa Clara, 95051 (US)
(74) Representative: Mathys & Squire

(57) **Abstract**

Apparatuses, systems, and techniques to perform one or more application programming interfaces to cause a graphic processing unit (GPU) to pause one or more instructions and/or cause one or more instructions to be resumed. In at least one embodiment, one or more processors comprising one or more circuits are to perform an application programming interface (API) to pause performance of one or more graphics processing unit (GPU) instructions, wherein the GPU instructions are associated with a context or application indicated to the API.

## Description

### CROSS-REFERENCE TO RELATED APPLICATIONS

This application incorporates by reference for all purposes the full disclosure of co-pending U.S. Patent Application No.19/175,758, filed concurrently herewith, entitled "APPLICATION PROGRAMMING INTERFACE TO RESUME INSTRUCTIONS" (Attorney Docket No. 0112912-F22US0).

### TECHNICAL FIELD

At least one embodiment pertains to a processor to perform an application programming interface (API) to pause and/or cause one or more indicated instructions. In at least one embodiment, a processor comprising circuitry is to perform an API to pause performance of one or more graphics processing unit (GPU) instructions scheduled to be performed on a GPU, wherein the GPU instructions are associated with one or more identifiers indicated to the API.

### BACKGROUND

An application performed on a GPU may include instructions that a user would like performed differently, such as in a different order. Techniques for generating and causing such instructions to be performed outside of their initial ordering, for example in an ordering desired be a user, can be improved.

### SUMMARY

The invention is defined by the claims. In order to illustrate the invention, aspects and embodiments which may or may not fall within the scope of the claims are described herein.

Apparatuses, systems, and techniques to perform one or more application programming interfaces to cause a graphic processing unit (GPU) to pause one or more instructions and/or cause one or more instructions to be resumed. In at least one embodiment, one or more processors comprising one or more circuits are to perform an application programming interface (API) to pause performance of one or more graphics processing unit (GPU) instructions, wherein the GPU instructions are associated with a context or application indicated to the API.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 is a block diagram illustrating a system 100 to perform one or more APIs associated with pausing and resuming GPU instructions, according to at least one embodiment;
FIG. 2A and B are block diagrams illustrating a system to pause instructions associated with one or more contexts, according to at least one embodiment;
FIG. 3A and B are block diagrams illustrating a system to resume instructions associated with one or more contexts, according to at least one embodiment;
FIG. 4 is a block diagram illustrating a system to use an API to cause a processor to pause instructions associated with a context, according to at least one embodiment;
FIG. 5 is a process flow diagram illustrating an API to cause a processor to pause instructions associated with a context, according to at least one embodiment;
FIG. 6 is a block diagram illustrating a system to use an API to cause a processor to pause instructions associated with an application, according to at least one embodiment;
FIG. 7 is a process flow diagram illustrating an API to cause a processor to pause instructions associated with an application, according to at least one embodiment;
FIG. 8 is a block diagram illustrating a system to use an API to cause a processor to resume performing instructions associated with a context, according to at least one embodiment;
FIG. 9 is a process flow diagram illustrating an API to cause a processor to resume performing instructions associated with a context, according to at least one embodiment;
FIG. 10 is a block diagram illustrating a system to use an API to cause a processor to resume performing instructions associated with an application, according to at least one embodiment;
FIG. 11 is a process flow diagram illustrating an API to cause a processor to resume performing instructions associated with an application, according to at least one embodiment;
FIG. 12 illustrates a processor and storage, in accordance with at least one embodiment;
FIG. 13 illustrates an example data center system, in accordance with at least one embodiment;
FIG. 14 illustrates an system-on-a-chip (SOC), in accordance with at least one embodiment;
FIG. 15A illustrates a parallel processor, in accordance with at least one embodiment;
FIG. 15B illustrates a processing cluster, in accordance with at least one embodiment;
FIG. 15C illustrates a graphics multiprocessor, in accordance with at least one embodiment;
FIG. 16 illustrates an accelerator processor, in accordance with at least one embodiment;
FIG. 17A illustrate a central processing unit, in accordance with at least one embodiment;
FIG. 17B illustrates a core of central processing unit in FIG. 17A, in accordance with at least one embodiment;
FIG. 18 illustrates another accelerator processor, in accordance with at least one embodiment;
FIG. 19 illustrates a neuromorphic processor, in accordance with at least one embodiment;
FIG. 20 illustrates a supercomputer, in accordance with at least one embodiment;
FIG. 21 illustrates another accelerator processor, in accordance with at least one embodiment;
FIG. 22 illustrates another processor, in accordance with at least one embodiment;
FIG. 23 illustrates another accelerator processor, in accordance with at least one embodiment;
FIG. 24 illustrates a tensor processing unit, in accordance with at least one embodiment;
FIG. 25 illustrates a RISC-V-compatible processor, in accordance with at least one embodiment;
FIGS. 26A and 26B illustrate a language processing unit, in accordance with at least one embodiment;
FIG. 27 illustrates a software stack of a programming platform, in accordance with at least one embodiment;
FIG. 28 illustrates software that is supported by a programming platform, in accordance with at least one embodiment;
FIG. 29 illustrates compiling code to execute on programming platforms of FIG. 28, in accordance with at least one embodiment;
FIG. 30 illustrates an example of an autonomous vehicle and its system architecture, in accordance with at least one embodiment;
FIG. 31A illustrates inference and/or training logic, in accordance with at least one embodiment;
FIG. 31B illustrates inference and/or training logic, in accordance with at least one embodiment; and
FIG. 31C illustrates training and deployment of a neural network, in accordance with at least one embodiment.

### DETAILED DESCRIPTION

In the following description, numerous specific details are set forth to provide a more thorough understanding of at least one embodiment. However, it will be apparent to one skilled in the art that the inventive concepts may be practiced without one or more of these specific details.

In an example embodiment, a GPU performs instructions in an order in which those instructions were placed into a queue by a host program. In some cases, this presents a technical challenge if higher-priority instructions should be performed before other instructions that are already in the queue. A programmer may, for example, wish to write code that sends additional instructions to the GPU and to have those instructions performed before already-queued instructions. In this example embodiment, a processor comprises circuitry to perform an API to pause or resume performance of one or more GPU instructions. In some cases, these instructions may be those associated with a context of the GPU. In other cases, these instructions may be those associated with an application. Further, this application may have multiple contexts, so that by pausing instructions associated with the application, the instructions associated with each of these multiple contexts are also paused.

In a further aspect of the example, APIs to pause execution of GPU instructions cause instructions indicated by using the API to be removed from or deactivated in a queue of instructions whose performance is to be scheduled on a GPU. The instructions may, in embodiments of this example, correspond to GPU kernels. In an embodiment, APIs to pause execution of GPU instructions may cause a scheduler to cease scheduling the indicated instructions for performance on the GPU. In embodiments, the APIs to pause execution of GPU instructions may restore a state of threads that are performing the GPU instructions.

In a further aspect of the example, APIs to resume execution of GPU instructions cause instructions indicated by using the API to be readded from or reactivated in a queue of instructions whose performance is to be scheduled on a GPU. In an embodiment, APIs to resume execution of GPU instructions may cause a scheduler to resume scheduling the indicated instructions for performance on the GPU. In embodiments, the APIs to resume execution of GPU instructions may restore a state of threads that were, prior to being paused, performing the GPU instructions.

In a further aspect of the example, these APIs may be used to control relative execution priority between different contexts within an application, and between different applications. For example, within an application, an API to pause GPU instructions associated with a context may be used to give higher execution priority to other contexts in the same application. Similarly, an API to pause GPU instructions associated with a host program may be used to give higher execution priority to other applications. In at least one embodiment, the APIs may be used to cause time slices to be shared between instructions associated with a first context or host program and instructions associated with a second context or host program.

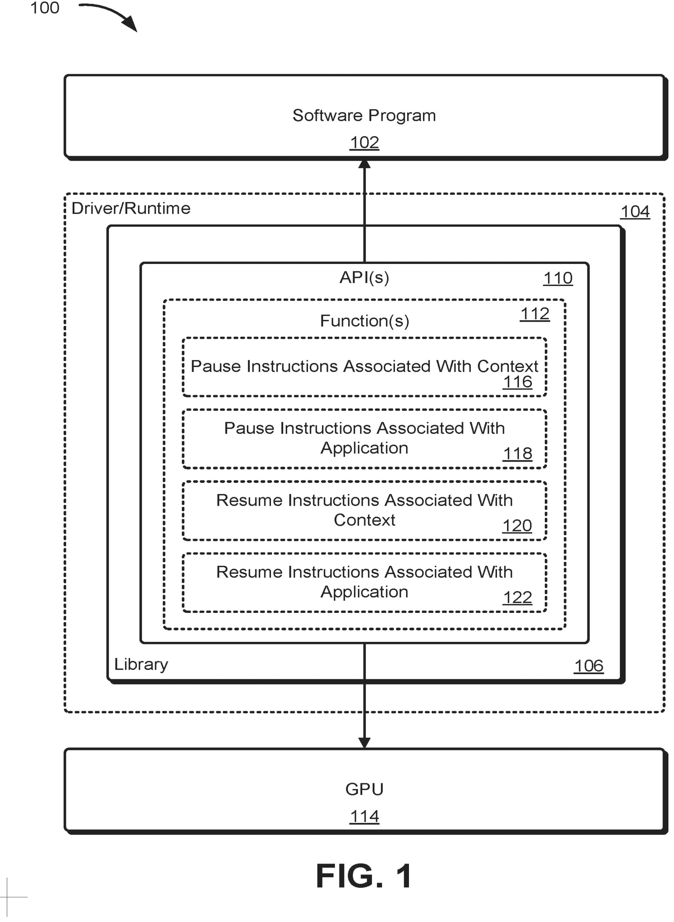

FIG. 1 is a block diagram illustrating a system 100 to perform one or more application programming interfaces (APIs) associated with pausing and resuming GPU instructions, according to at least one embodiment. In at least one embodiment, system 100 includes a software program 102, driver/runtime 104, one or more libraries 106, a GPU 114, and/or one or more APIs 110.

A technical problem may include that a GPU 114 performs instructions (e.g., kernels) in the order in which those instructions were placed into a queue by a host program, even if higher-priority instructions need to be performed before other instructions that are already in the queue. Users, such as programmers or other engineers, may like to be able to use an API to send instructions to a GPU 114 to be performed so that those instructions are performed before already-queued instructions.

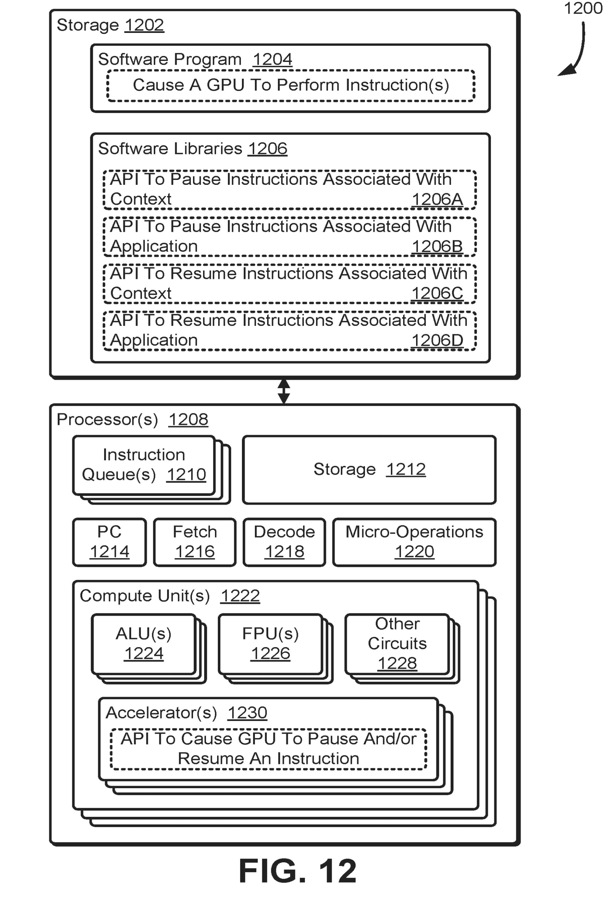

Embodiments described herein are described in reference to 114 GPU, which can include various specialized circuits to perform workloads associated with, for example, graphics rendering, video playback, artificial intelligence, and simulation. Examples of GPUs can include those described in relation to FIGS. 12-31, or elsewhere herein. In addition, although the term GPU is used herein in relation to various embodiments, similar or corresponding embodiments may also be practiced using other types of parallel processors and accelerators, including those described in relation to FIGS. 12-31, or elsewhere herein.

In at least one embodiment, system 100 includes an API 110 (e.g., cuCtxPauseExecution()) to pause 116 one or more GPU instructions associated with a context, such as by indicating first instructions before which second instructions are to be performed. The input to the cuCtxPauseExecution() API 110 may include an identifier of a GPU context. When performed, the API may cause a GPU to pause performing all instructions that the GPU is currently scheduled to perform for the indicated GPU context. To do this, an API 110 may cause the GPU scheduler to stop scheduling new instructions that are associated with the context, wait for pending instructions associated with that context to complete, and then stores state information, such as the state of the registers and program counters. The API 110 returns a success or failure indicator.

In at least one embodiment, system 100 includes an API 110 (e.g.,, cuCtxPauseAll()) to pause 118 one or more instructions associated with an application, such as a GPU to pause performing all of one or more kernels it is currently performing for an application. The application may have multiple different GPU contexts, and as such the API 110 may pause instructions associated with multiple different contexts. When performed, the API may cause a GPU to pause performing all instructions that the GPU is currently scheduled to perform for an application, which may also be referred to as a host program or by other related terminology. To do this, the API may cause the GPU scheduler to stop scheduling new instructions for the host program, waits for pending instructions associated with that host to complete, and then stores state information, such as the state of the registers and program counters. The API may return a success or failure indicator.

In at least one embodiment, system 100 includes an API 110 (e.g., cuCtxResumeExecution()) to resume 120 one or more instructions associated with a context. As an example, a GPU may resume 120 performing one or more instructions whose performance was previously paused (e.g., by an API 110). The input to the cuCtxResumeExecution() API may include an identifier of one or more instructions to be resumed, such as one or more instructions previously paused using cuCtxPauseExecution(). When performed, the API may use stored state information to restore the state of the threads of the group and uses a stored program counter for each thread to resume each thread starting at the instruction after the last completed instruction.

In at least one embodiment, system 100 includes an API 110 (e.g., cuCtxResumeAll()) that is to resume 122 one or more instructions associated with an application, such as all kernels associated with an application. In embodiments, the API may not receive any parameters as input, but may instead obtain information about the associated program by invoking other APIs to determine an identity of a calling application. When performed, the API may cause a GPU to resume performance of all threads that were being performed on behalf of a host program and then paused. To do this, the API may identify all paused threads to be performed on behalf of a host program that called the API, restores their state (e.g., values stored in registers of the threads) and begins performing each thread starting at the instruction immediately after the last instruction that was already performed before the pause. The API may return a success or failure indicator.

In at least one embodiment, a software program 102 is a software module, such as those described in FIG. 12. In at least one embodiment, a software program 102 comprises one or more software modules. In at least one embodiment, a software module is as further described non-exclusively in FIG. 12. In at least one embodiment, one or more APIs 110 are sets of software instructions that, if executed, cause one or more processors to perform one or more computational operations. In at least one embodiment, one or more APIs 110 are distributed or otherwise provided as a part of one or more libraries 106, runtimes 104, drivers 104, and/or any other grouping of software and/or executable code further described herein. In at least one embodiment, one or more APIs 110 perform one or more computational operations in response to invocation by software programs 102. In at least one embodiment, a software program 102 is a collection of software code, commands, instructions, or other sequences of text to instruct a computing device to perform one or more computational operations and/or invoke one or more other sets of instructions, such as APIs 110 or API functions 112, to be executed. In at least one embodiment, functionality provided by one or more APIs 110 includes software functions 112, such as those usable to accelerate one or more portions of software programs 102 using one or more parallel processing units (PPUs), such as graphics processing units (GPUs). In at least one embodiment, a software program is a neural network. In at least one embodiment, a software program includes one or more algorithms.

In at least one embodiment, APIs 110 are hardware interfaces to one or more circuits to perform one or more computational operations. In at least one embodiment, one or more software APIs 110 described herein are implemented as one or more circuits to perform one or more techniques described in conjunction with FIGS. 1-12. In at least one embodiment, one or more software programs 102 comprise instructions that, if executed, cause one or more hardware devices and/or circuits to perform one or more techniques described in conjunction with FIGS. 1-12.

In at least one embodiment, software programs 102, such as user-implemented software programs, utilize one or more application programming interfaces (APIs) 110 to perform various computing operations, such as memory reservation, matrix multiplication, arithmetic operations, or any computing operation performed by parallel processing units (PPUs), such as graphics processing units (GPUs), as further described herein. In at least one embodiment, one or more APIs 110 provide a set of callable functions 112, referred to herein as APIs, API functions, and/or functions, that individually perform one or more computing operations, such as computing operations related to parallel computing. In at least one embodiment, one or more APIs 110 provide functions 112 to pause 116 one or more instructions (e.g., kernels) associated with a context, to pause 118 one or more instructions associated with an application, to resume 120 one or more instructions associated with a context, to resume 122 one or more instructions associated with an application, and/or otherwise perform operations described herein. In at least one embodiment, one or more APIs 110 provide functions 112 to pause 118 one or more instructions associated with an application, to resume 120 one or more instructions associated with a context, to resume 122 one or more instructions associated with an application, and/or otherwise perform operations described herein.

In at least one embodiment, one or more software programs 102 interact or otherwise communicate with one or more APIs 110 to perform one or more computing operations using one or more PPUs, such as a GPU 114. In at least one embodiment, one or more computing operations using one or more PPUs comprise at least one or more groups of computing operations to be accelerated by execution at least in part by said one or more PPUs. In at least one embodiment, one or more software programs 102 interact with one or more APIs 110 to facilitate parallel computing using a remote or local interface.

In at least one embodiment, an interface is software instructions that, if executed, provide access to one or more functions 112 provided by one or more APIs 110. In at least one embodiment, a software program 102 uses a local interface when a software developer compiles one or more software programs 102 in conjunction with one or more libraries 106 comprising or otherwise providing access to one or more APIs 110. In at least one embodiment, one or more software programs 102 are compiled statically in conjunction with pre-compiled libraries 106 or uncompiled source code comprising instructions to perform one or more APIs 110. In at least one embodiment, one or more software programs 102 are compiled dynamically and said one or more software programs utilize a linker to link to one or more pre-compiled libraries 106 comprising one or more APIs 110.

In at least one embodiment, a software program 102 uses a remote interface when a software developer executes a software program that utilizes or otherwise communicates with a library 106 comprising one or more APIs 110 over a network or other remote communication medium. In at least one embodiment, one or more libraries 106 comprising one or more APIs 110 are to be performed by a remote computing service, such as a computing resource services provider. In another embodiment, one or more libraries 106 comprising one or more APIs 110 are to be performed by any other computing host providing said one or more APIs 110 to one or more software programs 102.

In at least one embodiment, one or more software programs 102 utilize one or more APIs 110 to allocate and otherwise manage memory to be used by said software programs 102. In at least one embodiment, one or more software programs 102 utilize one or more APIs 110 to allocate and otherwise manage memory to be used by one or more portions of said software programs 102 to be accelerated using one or more PPUs, such as GPUs or any other accelerator or processor further described herein. In at least one embodiment, those software programs 102 use an API 110 to perform one or more functions 112 and/or perform operations described herein.

In at least one embodiment, an API 110 is an API to facilitate parallel computing. In at least one embodiment, an API 110 is any other API further described herein. In at least one embodiment, an API 110 is provided by a driver and/or runtime 104. In at least one embodiment, an API 110 is provided by a CUDA user-mode driver. In at least one embodiment, an API 110 is provided by a CUDA runtime. In at least one embodiment, a driver 104 is data values and software instructions that, if executed, perform or otherwise facilitate operation of one or more functions 112 of an API 110 during load and execution of one or more portions of a software program 102. In at least one embodiment, a runtime 104 is data values and software instructions that, if executed, perform or otherwise facilitate operation of one or more functions 112 of an API 110 during execution of a software program 102. In at least one embodiment, one or more software programs 102 utilize one or more APIs 110 implemented or otherwise provided by a driver and/or runtime 104 to pause 116 one or more instructions associated with a context, to pause 118 one or more instructions associated with an application, to resume 120 one or more instructions associated with a context, and/or to resume 122 one or more instructions associated with an application; where said neural network is selected by one or more software programs 102 during execution by one or more PPUs, such as GPUs.

In at least one embodiment, one or more software programs 102 utilize one or more APIs 110 provided by a driver and/or runtime 104 to pause 116 one or more instructions associated with a context, to pause 118 one or more instructions associated with an application, to resume 120 one or more instructions associated with a context, and/or to resume 122 one or more instructions associated with an application. In at least one embodiment, one or more APIs 110 provide software programs are to pause 116 one or more instructions associated with a context, to pause 118 one or more instructions associated with an application, to resume 120 one or more instructions associated with a context , and/or to resume 122 one or more instructions associated with an application by sending instructions to a GPU through a driver and/or runtime 104, as described above. In at least one embodiment, one or more software programs 102 utilize one or more APIs 110 provided by a driver and/or runtime 104 to allocate or otherwise reserve one or more blocks of memory of one or more PPUs, such as GPU 114. In at least one embodiment, one or more software programs 102 utilize one or more APIs 110 provided by a driver and/or runtime 104 to indicate, allocate, or otherwise reserve blocks of memory. In at least one embodiment, one or more APIs 110 are to pause 118 one or more instructions associated with an application, to resume 120 one or more instructions associated with a context, and/or to resume 122 one or more instructions associated with an application, as described in conjunction with any FIGS. 1-12.

In at least one embodiment, to improve software programs 102 usability and/or optimization of one or more portions of said software programs 102 to be accelerated by one or more PPUs, such as GPUs, in an embodiment, one or more APIs 110 provide one or more API functions 112 to pause 116 one or more instructions associated with a context, to pause 118 one or more instructions associated with an application, to resume 120 one or more instructions associated with a context, and/or to resume 122 one or more instructions associated with an application as described above and further described in conjunction with FIGS. 1-12. In at least one embodiment, an exemplary system 100 includes processor 1008 (see FIG. 610, comprising one or more circuits to perform one or more software programs to cause one or more functions 112. In at least one embodiment, an exemplary block diagram depicts system 100, comprising one or more processors to perform one or more software programs to pause 116 one or more instructions associated with a context, to pause 118 one or more instructions associated with an application, to resume 120 one or more instructions associated with a context, and/or to resume 122 one or more instructions associated with an application. In at least one embodiment, processor uses an API 110 to pause 116 one or more instructions associated with a context, to pause 118 one or more instructions associated with an application, to cause 120 a GPU to resume performing a instruction, to resume 122 one or more instructions associated with an application, otherwise perform operations described herein, and/or combinations thereof.

In at least one embodiment, system 100 includes a collection of one or more hardware and/or software computing resources with instructions that, when executed, performs one or more communication processes such as those described herein. In at least one embodiment, system 100 is a software program executing on computer hardware, application executing on computer hardware, and/or variations thereof. In at least one embodiment, one or more processes of system 100 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 100 uses a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to perform an API. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss).

In at least one embodiment, system 100 includes one or more modules such that said system performs one or more APIs described herein. In at least one embodiment, a module includes any combination of any type of logic (e.g., software, hardware, firmware) and/or circuitry configured to perform a function as described. In at least one embodiment, a module includes one or more circuits that form part of a larger system (e.g., an integrated circuit (IC), system on-chip (SoC), central processing unit (CPU), graphics processing unit (GPU), data processing unit (DPU), etc.). In at least one embodiment, a controller includes any combination of any type of logic (e.g., software, hardware, firmware) and/or circuitry configured to perform a function as described. In at least one embodiment, software includes software packages, code, programming language, drivers, instructions, instruction sets, or some combination thereof. In at least one embodiment, hardware includes hardwired circuits, programmable circuits, state machine circuits, fixed function circuits, execution unit circuits, firmware with stored instructions executed by programmable circuits, or some combination thereof.

In at least one embodiment, system 100 includes a logic unit. In at least one embodiment, a logic unit includes firmware logic, hardware logic, or some combination thereof configured to provide any function as described further herein. In at least one embodiment, a logic unit includes circuitry that forms part of a larger system (e.g., IC, SoC, CPU, GPU, DPU). In at least one embodiment, a logic unit includes logic circuitry for implementation of firmware and/or hardware to perform one or more APIs described herein.

In at least one embodiment, system 100 includes an engine. In at least one embodiment, an engine includes a module and/or logic unit as described further herein. In at least one embodiment, a component includes a module and/or logic unit as described further herein. In at least one embodiment, an engine includes software logic, firmware logic, hardware logic, or some combination thereof configured to provide any function as described further herein. In at least one embodiment, a component includes software logic, firmware logic, hardware logic, or some combination thereof configured to provide any function as described further herein. In at least one embodiment, operations performed by hardware and/or firmware may alternatively be implemented via a software module, which may be embodied as a software package, code and/or instruction set. In at least one embodiment, a logic unit may also utilize a portion of software to implement its function.

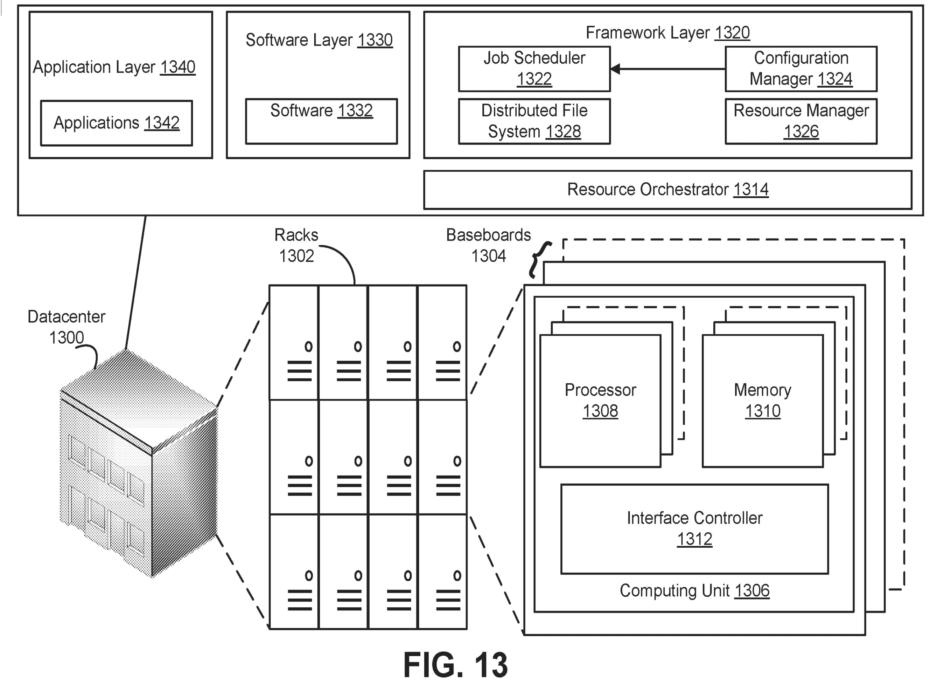

In at least one embodiment, system 100 includes one or more processors to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 100 is, is included in, and/or otherwise includes systems, as illustrated in FIGS. 1-12, to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 100 performs one or more processes illustrated in FIGS. 1-12, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 100 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein.

In at least one embodiment, system 100 includes one or more processors to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 100 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 100 performs one or more processes illustrated in FIGS. 1-12, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 100 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein.

In at least one embodiment, system 100 includes one or more processors to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 100 is, is included in, and/or otherwise includes systems illustrated in FIGS. 1-12 to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 100 performs one or more processes illustrated in FIGS. 1-12, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 100 includes one or more hardware illustrated in FIGS. 13 - 31C, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein.

In at least one embodiment, system 100 includes one or more processors to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 100 is, is included in, and/or otherwise includes systems illustrated in FIGS. 1-12 to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 100 performs one or more processes illustrated in FIGS. 1-12, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 100 includes one or more hardware illustrated in FIGS. 13 - 31C, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein.

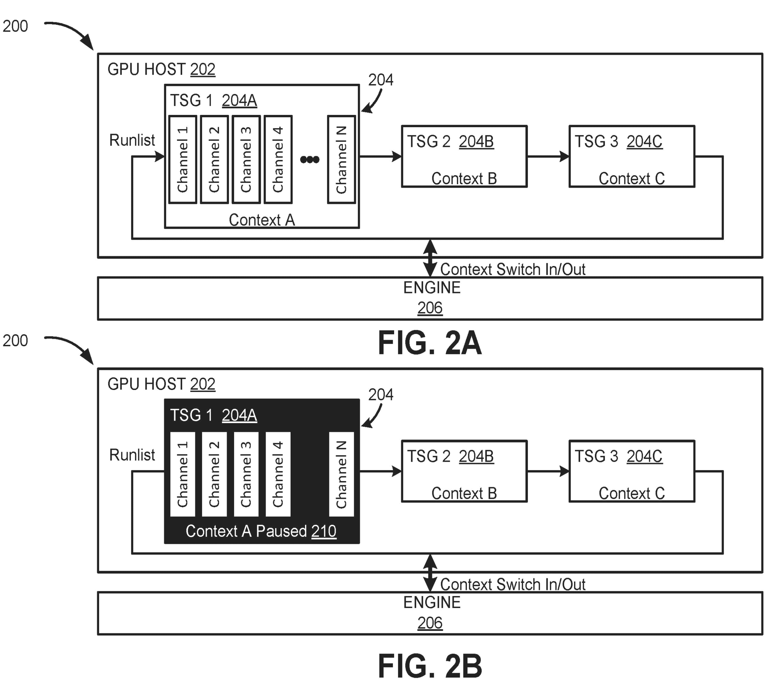

FIG. 2A and B are block diagrams illustrating a system 200 to pause instructions associated with one or more GPU contexts, according to at least one embodiment. In at least one embodiment, system 200 includes one or more GPUs (e.g., GPU host 202), one or more engines 206, one or more contexts, and/or one or more time slice groups (TSGs). In at least one embodiment, one or more GPU hosts 202 perform one or more applications to execute one or more instructions (e.g., kernels) corresponding to one or more contexts. In at least one embodiment, system 200 includes one or more contexts (e.g., context A, B, and/or C) which belong to one or more time slice groups (TSGs) 204, such as TSG 1 204A, TSG 2 204B, and/or TSG 3 204C.

In at least one embodiment, system 200 performs one or more APIs 110 (e.g., cuCtxPauseExecution()).In at least one embodiment, system 200 uses an API 110 which allows one or more users to pause one or all CUDA contexts (e.g., context A of TSG 1 204A, context B of TSG 2 204B, and/or context C of TSG 3 304C) within an application, enabling immediate execution of high-priority instructions by preempting ongoing work.

In at least one embodiment, for CUDA contexts backed by dedicated Time Slice Groups (TSGs), system 200 uses one or more synchronous APIs 110 to signal a kernel mode driver (KMD) to (i) disable a TSG followed by preempting a TSG for pausing and/or (ii) enable a TSG for resuming a CUDA context. In at least one embodiment, "Disable" followed by "preempt" signal removes a TSG from a runlist and stops any running instructions within that TSG. In at least one embodiment, when a TSG is re-enabled via a "resume" signal, it rejoins a runlist, allowing instructions in that TSG to resume execution.

In at least one embodiment, in a case of CUDA contexts that share a TSG, such as those managed by a Multi-Process Service (MPS), one or more APIs 110 stall work that has not yet been picked up by an ESCHED unit. In at least one embodiment, this is achieved by incorporating a semaphore acquire method at every launch. In at least one embodiment, a semaphore remains in a released state under normal operation but is modified during a pause API 110 call to block further enqueued work from being submitted.

In at least one embodiment, system 200 extends control to external processes by utilizing an interrupt handler thread in CUDA that listens for pause and resume signals through file descriptors. In at least one embodiment, system 200 end users to manage one or more CUDA contexts in an application from outside an application process. In at least one embodiment, system 200 by using one or more APIs 110, system 200 grants users and application administrators fine-grained control over GPU resources. In at least one embodiment, system 200 includes implementing custom scheduling logic, allowing for effective management of CUDA contexts to meet real-time performance requirements.

In at least one embodiment, system 200 includes one or more engines 206. In at least one embodiment, engine 206 includes a module and/or logic unit as described further herein. In at least one embodiment, a component includes a module and/or logic unit as described further herein. In at least one embodiment, engine 206 includes software logic, firmware logic, hardware logic, or some combination thereof configured to provide any function as described further herein. In at least one embodiment, a component includes software logic, firmware logic, hardware logic, or some combination thereof configured to provide any function as described further herein. In at least one embodiment, operations performed by hardware and/or firmware may alternatively be implemented via a software module, which may be embodied as a software package, code and/or instruction set. In at least one embodiment, a logic unit may also utilize a portion of software to implement its function. In at least one embodiment, a context is an environment within which one or more kernels executes, such as information pertaining to a state (e.g., memory allocations and kernel configurations). In at least one embodiment, a queue is otherwise illustrated by performing one or more instructions (e.g., kernels) according to one or more runlists of one or more contexts.

In at least one embodiment, one or more engines 206 sends one or more signals to a GPU host 202 to initiate pausing of one or more contexts, such as context A in TSG 1 204A. In at least one embodiment, when a context A is paused 210, a GPU proceeds to one or more next time slice groups 204, such as TSG 2 204B and TSG 3 204C.

In at least one embodiment, system 200 includes one or more processors to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 200 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 200 performs one or more processes illustrated in FIGS. 1-12, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 200 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein.

In at least one embodiment, system 200 includes one or more processors to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 200 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 200 performs one or more processes illustrated in FIGS. 1-12, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 200 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein.

In at least one embodiment, system 200 includes one or more processors to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 200 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 200 performs one or more processes illustrated in FIGS. 1-12, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 200 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein.

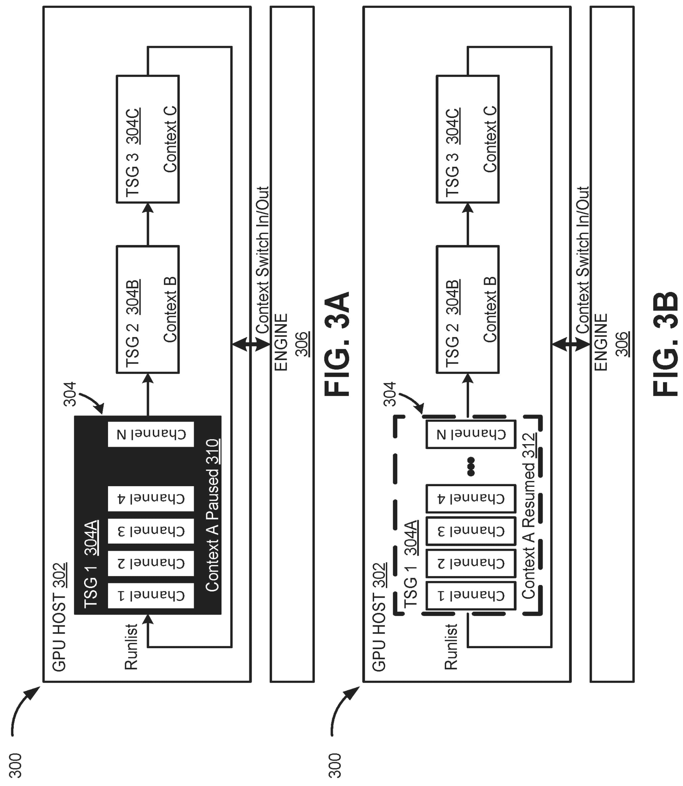

FIG. 3A and B are block diagrams illustrating a system 300 to resume one or more contexts, according to at least one embodiment. In at least one embodiment, system 300 includes one or more GPUs (e.g., GPU host 302), one or more engines 306, one or more contexts, and/or one or more time slice groups (TSGs). In at least one embodiment, one or more GPU hosts 302 perform one or more applications to execute one or more instructions (e.g., kernels) corresponding to one or more contexts. In at least one embodiment, system 300 includes one or more contexts (e.g., context A, B, and/or C) which belong to one or more time slice groups (TSGs) 304, such as TSG 1 304A, TSG 3 304B, and/or TSG 3 304C.

In at least one embodiment, system 300 includes one or more engines 306. In at least one embodiment, engine 306 includes a module and/or logic unit as described further herein. In at least one embodiment, a component includes a module and/or logic unit as described further herein. In at least one embodiment, engine 306 includes software logic, firmware logic, hardware logic, or some combination thereof configured to provide any function as described further herein. In at least one embodiment, a component includes software logic, firmware logic, hardware logic, or some combination thereof configured to provide any function as described further herein. In at least one embodiment, operations performed by hardware and/or firmware may alternatively be implemented via a software module, which may be embodied as a software package, code and/or instruction set. In at least one embodiment, a logic unit may also utilize a portion of software to implement its function. In at least one embodiment, a context is an environment within which one or more kernels executes, such as information pertaining to a state (e.g., memory allocations and kernel configurations). In at least one embodiment, a queue is otherwise illustrated by performing one or more instructions (e.g., kernels) according to one or more runlists of one or more contexts.

In at least one embodiment, system 300 performs one or more APIs 110, such as to resume 120 and/or 122 one or more one or more instructions of a context associated with an application (e.g., one or more kernels corresponding to one or more contexts and TSGs 304). In at least one embodiment, one or more engines 306 sends one or more signals to a GPU host 302 to initiate resuming of one or more contexts previously paused, such as context A paused 310 in TSG 1 304A. In at least one embodiment, when a context A paused 310 is resumed, a host GPU 302 proceeds to return Context A to a runlist in its time slice group 304, such as TSG 1 304A. In at least one embodiment, system 300, upon receiving a signal from an API 110, returns context A paused 310 to a runlist, such as that context A is resumed 312 in TSG 1 304A.

In at least one embodiment, system 300 includes one or more processors to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 300 is, is included in, and/or otherwise includes systems illustrated in FIGS. 1-12 to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 300 performs one or more processes illustrated in FIGS. 1-12, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 300 includes one or more hardware illustrated in FIGS. 13 - 31C, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein.

In at least one embodiment, system 300 includes one or more processors to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 300 is, is included in, and/or otherwise includes systems illustrated in FIGS. 1-12 to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 300 performs one or more processes illustrated in FIGS. 1-12, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 300 includes one or more hardware illustrated in FIGS. 13 - 31C, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein.

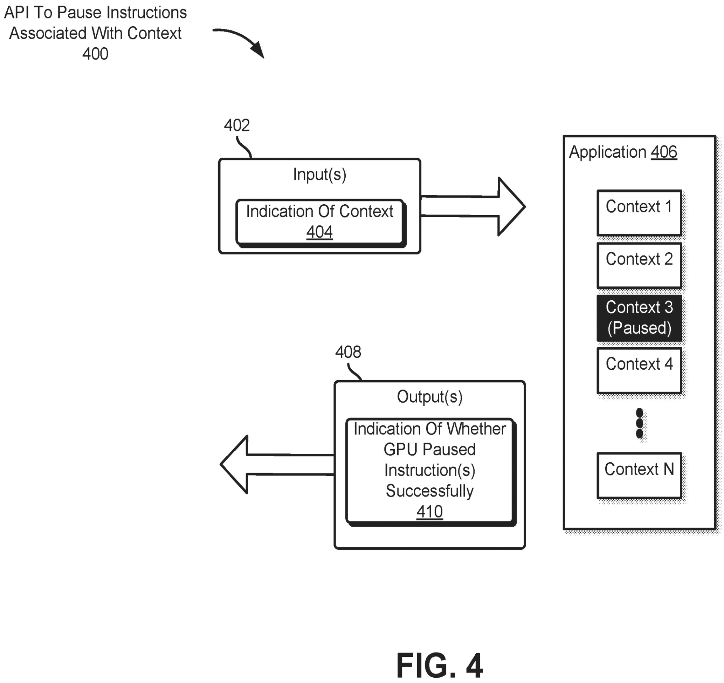

FIG. 4 is a block diagram illustrating a system 400 to use an API to cause a processor to pause an instruction, according to at least one embodiment. In at least one embodiment, system 400 includes one or more APIs 110 (e.g., to pause 116 one or more instructions associated with a context 404), one or more processors (e.g., host GPUs 202, see FIG. 2), one or more inputs 402 (e.g., one or more contexts 404), one or more engines 202, and/or one or more applications 406, one or more instructions (e.g., application 406) executing using one or more contexts 404, and/or one or more components described herein.

In at least one embodiment, system 400 performs an API 110 (e.g., cuCtxPauseExecution()) to pause 116 one or more instructions associated with a context 404, such as by indicating first instructions before which second instructions are to be performed. In at least one embodiment, one or more inputs 402, to perform an API 110 to pause 116 one or more instructions associated with a context 404, are to include an indication of one or more contexts 404 to be paused (e.g., an indication of a first instruction) and/or a second identifier of second instructions to be performed before first instructions. In at least one embodiment, an indication includes one or more identifiers, such as a kernel identifier. In at least one embodiment, when system 400 uses an API 110 pause 116 one or more instructions associated with a context 404, an API pauses one or more instructions (e.g., kernels) of an application 406 and a processor performs a next instruction in a clock cycle and/or puts second instructions at a beginning of a queue of instructions (e.g., kernels) to be performed by a GPU. In at least one embodiment, as an example, if context 3 is paused in a TSG, a GPU proceeds to perform a next instruction in context 4 of a subsequent time slice.

In at least one embodiment, system 400 performs process 500 to use an API 110 to pause 116 one or more instructions associated with a context 404. In at least one embodiment, an output 408 of performing an API 110 to pause 116 one or more instructions associated with a context 404 is to include an indication 410 of whether a GPU paused a instruction successfully. In at least one embodiment, in system 400, a GPU provides an output 408 as response to performing an API 110, such as an output 408 of one or more indications 410 (e.g., flag) of success, such as "success," "failure," and/or variations thereof.

In at least one embodiment, system 400 includes a collection of one or more hardware and/or software computing resources with instructions that, when executed, performs one or more communication processes such as those described herein. In at least one embodiment, system 400 is a software program executing on computer hardware, application executing on computer hardware, and/or variations thereof. In at least one embodiment, one or more processes of system 400 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 400 uses a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to select one or more neural networks to perform one or more wireless signal operations. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss).

In at least one embodiment, system 400 includes one or more processors to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 400 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 400 performs one or more processes illustrated in FIGS. 1-12, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 400 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein.

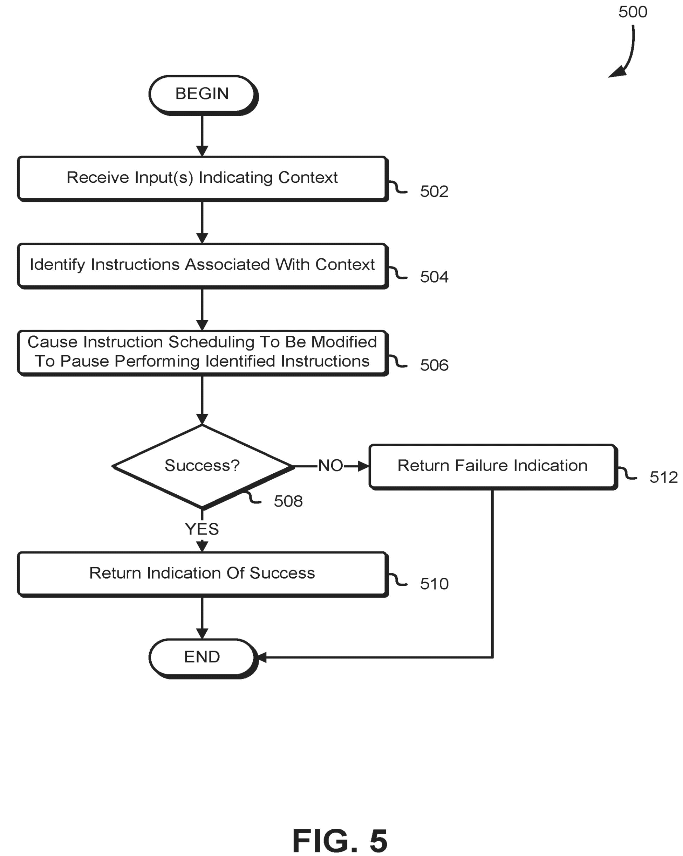

FIG. 5 is a process 500 flow diagram illustrating using an API to cause a processor to pause an instruction, according to at least one embodiment. In at least one embodiment, process 500 includes one or more steps to receive 502 one or more inputs indicating a context, to identify 504 one or more instructions associated with a context, to cause 506 an instruction's scheduling to be modified to pause performing one or more identified instructions return an indication, to return 512 an indication, to return 510 an indication of success, perform one or more operations described in FIGS. 1-12, and/or combinations thereof. In at least one embodiment, process 500 begins when invoked by one or more processors.

In at least one embodiment, a processor performs a process 500 which includes using an API which receives 502 as input one or more indications (e.g., identifiers) of one or more contexts. As an example, a kernel may be paused and a context may be indicated to be paused and/or indicated to be performed in lieu of or prior to one or more instructions to be paused.

In at least one embodiment, a processor performs a process 500 which includes an API to identify 504 one or more instructions associated with a context, such as by removing from a queue of instructions (e.g., kernels) to be performed. In at least one embodiment, a processor performs a process 500 which includes causing 504 a GPU to pause performing an indicated instruction corresponding to one or more contexts and/or said processor performing process 500 proceeds to cause 506 an instruction's scheduling to be modified to pause performing one or more identified instructions. A system performing process 500 may cause an instruction's scheduling to be modified to pause performing an identified instruction and/or proceed to decision block 508.

In at least one embodiment, a decision in decision block 508 is "YES," if a processor (e.g., GPU host 202) successfully paused an indicated instruction and/or performed a second indicated instruction, otherwise a decision is "NO." In at least one embodiment, if a decision in decision block 508 is "YES," a processor returns 508 one or more indications of success, which may include storing a flag in memory. In at least one embodiment, if a decision in decision block 508 is "NO," a processor performing process 500 returns one or more indications of not success, error, or variations thereof, such as by storing a flag in memory.

In at least one embodiment, a processor performs a process 500 which includes using an API 1206A (see FIG. 12) to pause performing an indicated instruction associated with a context, such as to pause performance of a kernel of application 406. In at least one embodiment, a system performing process 500 is described in conjunction with performing an API operation using system 400, such as an API 110 and/or API 1206A. In at least one embodiment, upon returning 510 and/or 512 one or more indications, a system performing process 500 performs one or more operations described herein and/or proceeds to end.

In at least one embodiment, one or more processors uses process 500, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, as an example, a machine readable medium (e.g., non-transitory) having stored thereon a set of instructions, which if performed by one or more processors, cause one or more processors to perform process 500, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, process 500 is, is included in, and/or otherwise includes processes illustrated in FIGS. 1-12 to include receiving one or more application programming interface (API) parameters indicating a context of performing graphics processing unit (GPU) instructions on a GPU; identify one or more instructions associated with the indicated context that are scheduled to be performed on the GPU; cause, in response to receiving the parameters, the performance of the one or more instructions to be paused and/or otherwise perform operations described herein. In at least one embodiment, one or more systems illustrated in FIGS. 1-12 perform process 500, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, one or more hardware illustrated in FIGS. 13 - 31C use process 500, such as to perform an application programming interface (API) to pause performance of one or more graphics processing unit (GPU) instructions scheduled to be performed on a GPU, wherein the GPU instructions are associated with one or more identifiers indicated to the API and/or otherwise performs operations described herein.

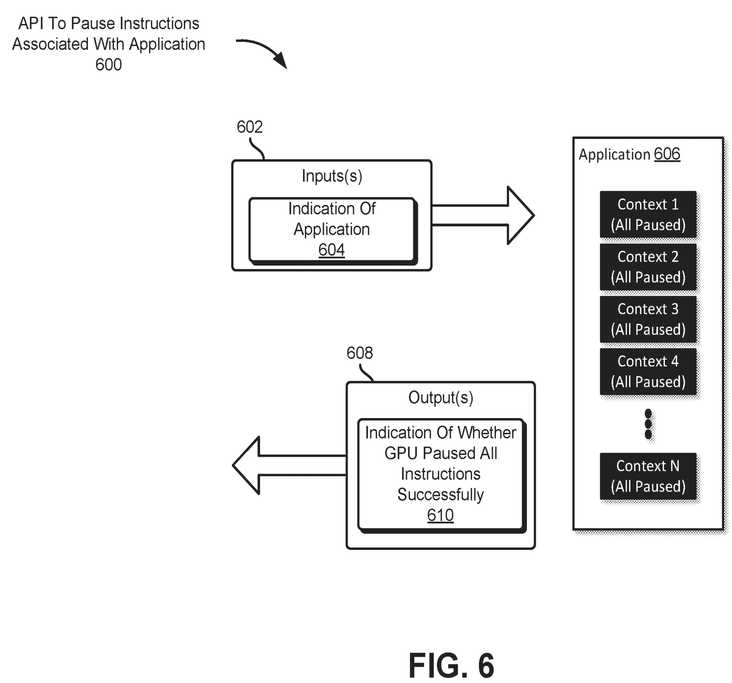

FIG. 6 is a block diagram illustrating a system 600 to use an API to cause a processor to pause a set of instructions, according to at least one embodiment. In at least one embodiment, system 600 includes one or more APIs 110 (e.g., to pause 118 one or more instructions associated with an application), one or more processors (e.g., host GPUs 202, see FIG. 2), one or more engines 202, and/or one or more applications 606, one or more instructions (e.g., kernels) executing using one or more contexts, and/or one or more components described herein.

In at least one embodiment, system 600 performs an API 110 (e.g.,, cuCtxPauseAll()) to pause 118 one or more instructions associated with an application, such as an application 606. In at least one embodiment, an API 110 to pause 118 one or more instructions associated with an application does not require, though may include, one or more parameters as input 602, such as an indication 604 to a GPU of one or more instructions to be paused that are associated with an application 606. In at least one embodiment, when system 600 invokes API 110 (e.g.,, cuCtxPauseAll()) to pause 118 one or more instructions associated with an application, it pauses all contexts corresponding to all said kernels that were requested by an application 606. In at least one embodiment, after an API 110 pauses 118 one or more instructions associated with an application, a second API 110 (e.g., to resume 120 and/or 122 one or more instructions associated with a context and/or application) can be used to resume one or more instructions.

In at least one embodiment, system 600 performs process 700 to use an API 110 to pause 118 one or more instructions associated with an application . In at least one embodiment, an output 608 of performing an API 110 to pause 118 one or more instructions associated with an application includes an indication 610 of whether a GPU paused all instructions in a set of instructions successfully. In at least one embodiment, in system 600, a GPU provides an output 608 as response to performing an API 110, such as an output 608 of one or more indications 610 (e.g., flag) of success, such as "success," "failure," and/or variations thereof. In at least one embodiment, an example includes pausing contexts 1 through N of a set of contexts of an application 606 when an API 110, to pause 118 one or more instructions associated with an application, is invoked.

In at least one embodiment, system 600 includes a collection of one or more hardware and/or software computing resources with instructions that, when executed, performs one or more communication processes such as those described herein. In at least one embodiment, system 600 is a software program executing on computer hardware, application executing on computer hardware, and/or variations thereof. In at least one embodiment, one or more processes of system 600 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 600 uses a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to select one or more neural networks to perform one or more wireless signal operations. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss).

In at least one embodiment, system 600 includes one or more processors to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 600 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 600 performs one or more processes illustrated in FIGS. 1-12, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 600 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein.

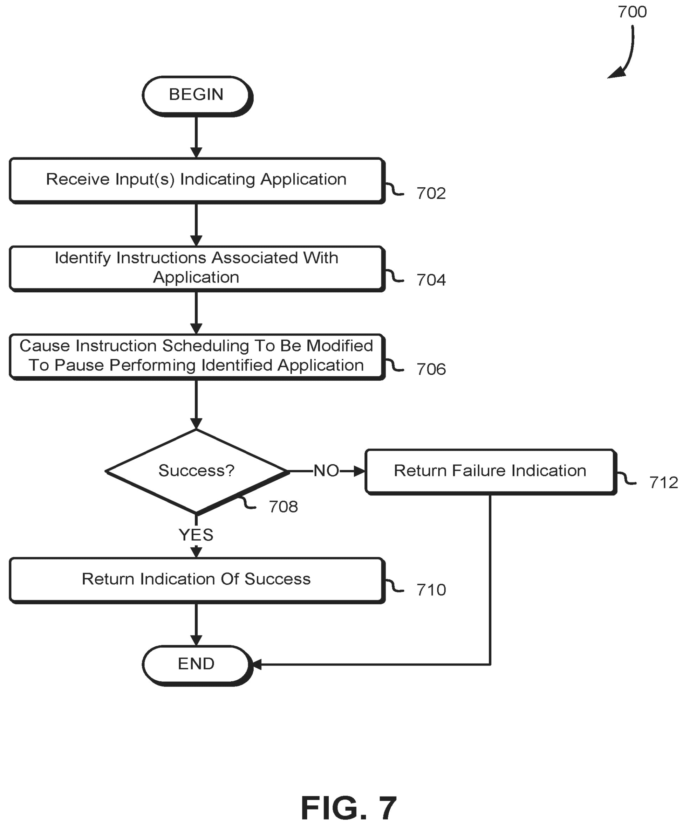

FIG. 7 is a process 700 flow diagram illustrating using an API to cause a processor to pause a set of instructions, according to at least one embodiment. In at least one embodiment, process 700 includes one or more steps to receive 702 one or more inputs indicating an application, identify 704 one or more instructions associated with an application, cause 706 instruction scheduling to be modified to pause performing identified instructions of an application, perform one or more operations described in FIGS. 1-12, and/or combinations thereof. In at least one embodiment, process 700 begins when invoked by one or more processors.

In at least one embodiment, a processor performs a process 700 which includes using an API which may receive 702 as input one or more indications 704 of an application whose GPU instructions are to be paused, one or more indications of an instruction to be performed in lieu of and/or prior to one or more paused instructions, and/or one or more inputs described herein. In an embodiment the API may also be performed without an input and just an invocation. In this case, 702 may comprise the API determining the identity of the application that invoked the API.

In at least one embodiment, a processor performs a process 700 which includes an API to cause (e.g., pause 118) a GPU to identify 704 one or more instructions associated with an application 606, such as by proceeding to a next instruction in a queue of instructions (e.g., kernels) to be performed (e.g., next corresponding time slice). In at least one embodiment, a processor performs a process 700 to identify 704 one or more instructions associated with an application and/or then proceeds to cause 708 an instruction's scheduling to be modified to pause performing one or more instructions of an identified application.

In at least one embodiment, a decision in decision block 708 is "YES," if a processor (e.g., GPU host 202) successfully paused an application, otherwise a decision is "NO." In at least one embodiment, if a decision in decision block 708 is "YES," a processor returns 708 one or more indications of success, which may include storing a flag in memory. In at least one embodiment, if a decision in decision block 708 is "NO," a processor performing process 700 returns one or more indications of not success, error, or variations thereof, such as by storing a flag in memory.

In at least one embodiment, a processor performs a process 700 which includes using an API 1206B (see FIG. 12) to cause a GPU to pause one or more instructions associated with an application, such as to pause a set of kernels of an application 606. In at least one embodiment, a system performing process 700 is described in conjunction with performing an API operation with system 600, such as an API 110 and/or API 1206B. In at least one embodiment, upon returning 712 and/or 710 one or more indications, a system performing process 700 performs one or more operations described herein and/or proceeds to end.

In at least one embodiment, one or more processors uses process 700, such as a process including one or more operations to receive, via an application programming interface (API), an indication that performance of one or more instructions scheduled to be performed on a graphics processing unit (GPU) instructions is to be paused; identify one or more instructions associated with a program that has invoked the API; and cause, in response to the invocation of the API, the performance of the identified one or more scheduled instructions to be paused and/or otherwise perform operations described herein. In at least one embodiment, as an example, a machine readable medium (e.g., non-transitory) having stored thereon a set of instructions, which if performed by one or more processors, cause one or more processors to perform process 700, such as to receive, via an application programming interface (API), an indication that performance of one or more instructions scheduled to be performed on a graphics processing unit (GPU) instructions is to be paused; identify one or more instructions associated with a program that has invoked the API; and cause, in response to the invocation of the API, the performance of the identified one or more scheduled instructions to be paused and/or otherwise perform operations described herein. In at least one embodiment, process 700 is, is included in, and/or otherwise includes processes illustrated in FIGS. 1-12 to receive, via an application programming interface (API), an indication that performance of one or more instructions scheduled to be performed on a graphics processing unit (GPU) instructions is to be paused; identify one or more instructions associated with a program that has invoked the API; and cause, in response to the invocation of the API, the performance of the identified one or more scheduled instructions to be paused and/or otherwise perform operations described herein.

In at least one embodiment, one or more systems illustrated in FIGS. 1-12 perform process 700, such as to receive, via an application programming interface (API), an indication that performance of one or more instructions scheduled to be performed on a graphics processing unit (GPU) instructions is to be paused; identify one or more instructions associated with a program that has invoked the API; and cause, in response to the invocation of the API, the performance of the identified one or more scheduled instructions to be paused and/or otherwise perform operations described herein. In at least one embodiment, one or more hardware illustrated in FIGS. 13 - 31C use process 700, such as to receive, via an application programming interface (API), an indication that performance of one or more instructions scheduled to be performed on a graphics processing unit (GPU) instructions is to be paused; identify one or more instructions associated with a program that has invoked the API; and cause, in response to the invocation of the API, the performance of the identified one or more scheduled instructions to be paused and/or otherwise performs operations described herein.

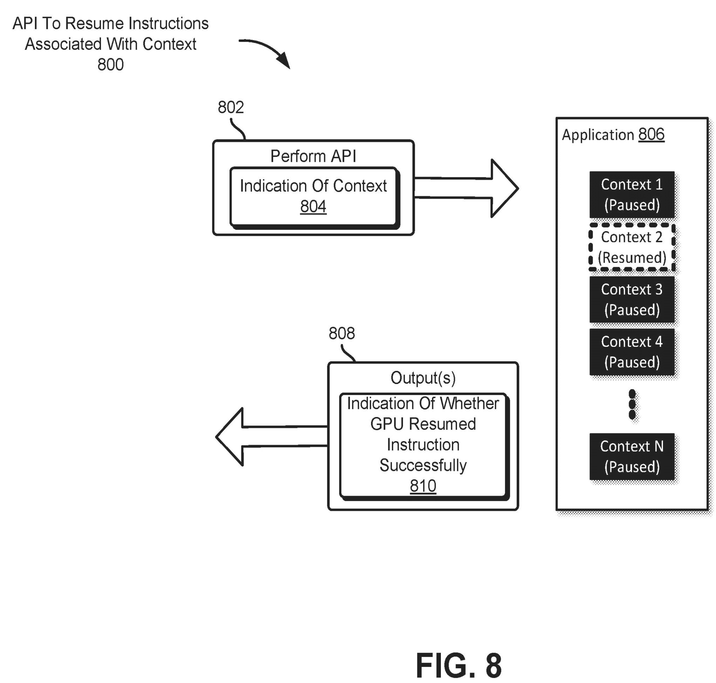

FIG. 8 is a block diagram illustrating a system 800 to use an API to cause a processor to resume performing one or more instructions, according to at least one embodiment. In at least one embodiment, system 800 includes one or more APIs 110 (e.g., to resume 120 one or more instructions associated with a context), one or more processors (e.g., host GPUs 302, see FIG. 3), one or more engines 302, and/or one or more applications 806, one or more instructions (e.g., kernels) executing using one or more contexts, and/or one or more components described herein.

In at least one embodiment, system 800 performs an API 110 (e.g., cuCtxResumeExecution()) that causes 120 a GPU to resume performing one or more instructions whose performance was previously paused (e.g., by an API 110). In at least one embodiment, system 800 inputs to an API 110 to cause 120 a GPU to resume performing one or more instructions (e.g., instructions and/or kernels) are an indication 804 of one or more contexts of one or more applications 806 (e.g., one or more instructions) that will be resumed. In at least one embodiment, when system 800 performs an API 110 to cause 120 a GPU to resume performing one or more instructions (e.g., kernels) is performed, an API causes one or more instructions indicated to an API to be inserted in its previous clock cycle rejoining a runlist (e.g., previous time slice) and/or joins at a head of a queue of instructions to be performed.

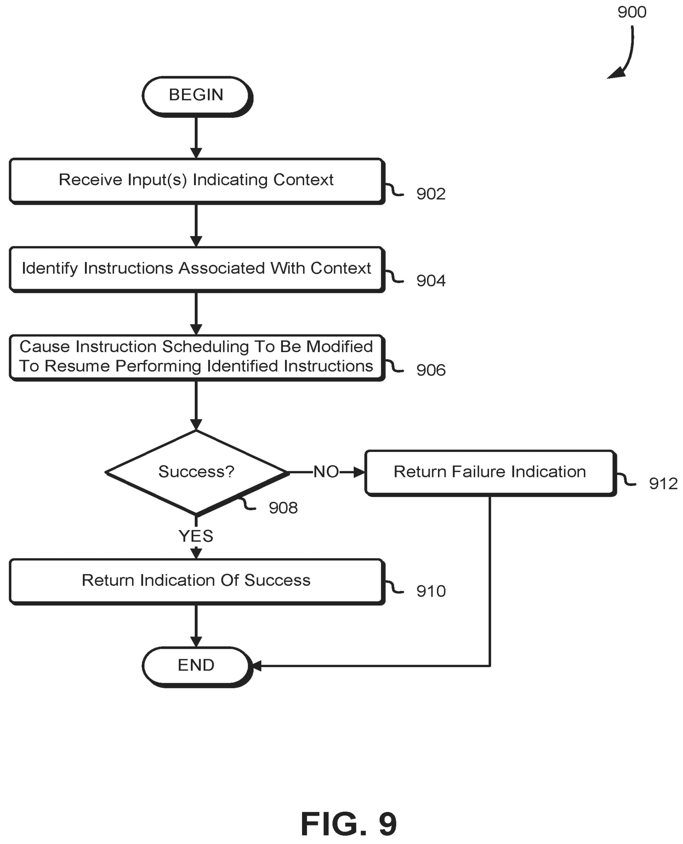

In at least one embodiment, system 800 performs process 900 (see FIG. 9) to use an API 110 to cause 120 a GPU to resume performing a instruction (e.g., kernel). In at least one embodiment, an output 808 of performing 802 an API 110 to cause 120 a GPU to resume performing a instruction (e.g., kernel) includes an indication 810 of whether a GPU resumed a instruction successfully. In at least one embodiment, in system 800, a GPU provides an output 808 as response to performing 802 an API 110, such as an output 808 of one or more indications 810 (e.g., flag) of success, such as "success," "failure," and/or variations thereof. In at least one embodiment, an example includes resuming a selected instruction of context 2 of an application 806 when an API 110, to resume 120 one or more instructions associated (e.g., corresponding to) with a context, is invoked.

In at least one embodiment, system 800 includes a collection of one or more hardware and/or software computing resources with instructions that, when executed, performs one or more communication processes such as those described herein. In at least one embodiment, system 800 is a software program executing on computer hardware, application executing on computer hardware, and/or variations thereof. In at least one embodiment, one or more processes of system 800 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 800 uses a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to select one or more neural networks to perform one or more wireless signal operations. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss).

In at least one embodiment, system 800 includes one or more processors to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 800 is, is included in, and/or otherwise includes systems illustrated in FIGS. 1-12 to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 800 performs one or more processes illustrated in FIGS. 1-12, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 800 includes one or more hardware illustrated in FIGS. 13 - 31C, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein.

FIG. 9 is a process 900 flow diagram illustrating using an API to cause a processor to resume performing one or more instructions, according to at least one embodiment. In at least one embodiment, process 900 includes one or more steps to receive 902 one or more inputs indicating a context, identify 904 one or more instructions associated with a context, cause 906 an instruction's scheduling to be modified to resume performing one or more identified instructions, return 912 an indication, return 910 an indication of success, perform one or more operations described in FIGS. 1-12, and/or combinations thereof. In at least one embodiment, process 900 begins when invoked by one or more processors. In at least one embodiment, a processor performs a process 900 which includes using an API which receives 902 as input one or more indications 804 (e.g., identifiers) of a context.

In at least one embodiment, a processor performs a process 900 which includes an API to identify 904 (e.g., and cause 120) one or more instructions associated with a context, such as by returning to a queue of instructions (e.g., kernels) to be performed (e.g., in a corresponding time slice). A processor may perform a process 900 identifying 904 one or more instruction corresponding to one or more contexts and/or said processor performing process 900 may then proceed to cause an instruction's scheduling to be modified to resume performing one or more identified instructions. As an example, scheduling may be modified using one or more schedulers. A system may perform process 900 to at least cause an instruction's scheduling to be modifed to resume performing one or more identified instructions and/or proceed to decision block 908.

In at least one embodiment, a decision in decision block 908 is "YES," if a processor (e.g., GPU host 302) successfully resumed an indicated instruction, otherwise a decision is "NO." In at least one embodiment, if a decision in decision block 906 is "YES," a processor returns 910 one or more indications of success, which may include storing a flag in memory. In at least one embodiment, if a decision in decision block 908 is "NO," a processor performing process 900 returns one or more indications of not success, error, or variations thereof, such as by storing a flag in memory.

In at least one embodiment, a processor performs a process 900 which includes using an API 1206C (see FIG. 12) to resume one or more instructions associated with a context, such as to resume performance of a kernel of an application 806. In at least one embodiment, a system performing process 900 is described in conjunction with performing 802 an API operation, such as an API 110 and/or API 1206C. In at least one embodiment, upon returning 912 and/or 910 one or more indications, a system performing process 900 performs one or more operations described herein and/or proceeds to end.

In at least one embodiment, one or more processors uses process 900, such as a process to receive one or more application programming interface (API) parameters indicating a context of graphics processing unit (GPU) instructions on a GPU; identify one or more instructions associated with the indicated context that are paused on the GPU; and cause, in response to receiving the parameters, the performance of the one or more paused instructions to be resumed and/or otherwise perform operations described herein. In at least one embodiment, as an example, a machine readable medium (e.g., non-transitory) having stored thereon a set of instructions, which if performed by one or more processors, cause one or more processors to perform process 900, such as to receive one or more application programming interface (API) parameters indicating a context of graphics processing unit (GPU) instructions on a GPU; identify one or more instructions associated with the indicated context that are paused on the GPU; and cause, in response to receiving the parameters, the performance of the one or more paused instructions to be resumed and/or otherwise perform operations described herein. In at least one embodiment, process 900 is, is included in, and/or otherwise includes processes illustrated in FIGS. 1-12 to receive one or more application programming interface (API) parameters indicating a context of graphics processing unit (GPU) instructions on a GPU; identify one or more instructions associated with the indicated context that are paused on the GPU; and cause, in response to receiving the parameters, the performance of the one or more paused instructions to be resumed and/or otherwise perform operations described herein. In at least one embodiment, one or more systems illustrated in FIGS. 1-12 perform process 900, such as to receive one or more application programming interface (API) parameters indicating a context of graphics processing unit (GPU) instructions on a GPU; identify one or more instructions associated with the indicated context that are paused on the GPU; and cause, in response to receiving the parameters, the performance of the one or more paused instructions to be resumed and/or otherwise perform operations described herein. In at least one embodiment, one or more hardware illustrated in FIGS. 13 - 31C use process 900, such as to receive one or more application programming interface (API) parameters indicating a context of graphics processing unit (GPU) instructions on a GPU; identify one or more instructions associated with the indicated context that are paused on the GPU; and cause, in response to receiving the parameters, the performance of the one or more paused instructions to be resumed and/or otherwise performs operations described herein.

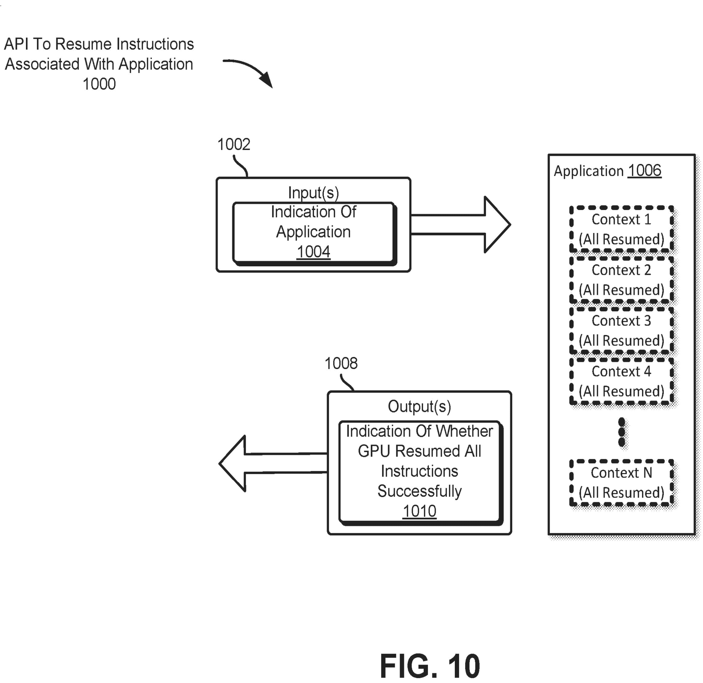

FIG. 10 is a block diagram illustrating a system 1000 to use an API to cause a processor to resume performing one or more sets of instructions, according to at least one embodiment. In at least one embodiment, system 1000 includes one or more APIs 110 (e.g., to resume 122 one or more instructions associated with an application), one or more processors (e.g., host GPUs 302, see FIG. 3), one or more engines 302, and/or one or more applications 1006, one or more instructions (e.g., kernels) executing using one or more contexts, and/or one or more components described herein.

In at least one embodiment, system 1000 includes an API 110 (e.g., cuCtxResumeAll()) that is to resume 122 one or more instructions associated with an application, such as all kernels associated with an application. In at least one embodiment, this API 110 to resume 122 one or more instructions associated with an application is performed after an API 110 was used to stop performance of one or more kernels associated with an application. In at least one embodiment, an API 110 does not require, though may include, one or more inputs 1002. As an example, an input 1002 may include an indication 1004 of an application 1006. In at least one embodiment, when system 1000 performs API 110 to resume 122 one or more instructions associated with an application, said API causes any kernels of an application that were previously paused to be added back to a queue of instructions to be performed.

In at least one embodiment, system 1000 performs process 1100 to use an API 110 to resume 122 one or more instructions associated with an application. In at least one embodiment, an output 1008 of performing 1002 an API 110 to resume 122 one or more instructions associated with an application includes an indication 1010 of whether a GPU resumed all instructions in a set of instructions successfully. In at least one embodiment, in system 1000, a GPU provides an output 1008 as response to performing 1002 an API 110, such as an output 1008 of one or more indications 1010 (e.g., flag) of success, such as "success," "failure," and/or variations thereof. As an example, a processor may resume any contexts 1 through N that were previously paused for an application 1006 when an API 110, to resume 122 one or more instructions associated with an application, is invoked.

In at least one embodiment, system 1000 includes a collection of one or more hardware and/or software computing resources with instructions that, when executed, performs one or more communication processes such as those described herein. In at least one embodiment, system 1000 is a software program executing on computer hardware, application executing on computer hardware, and/or variations thereof. In at least one embodiment, one or more processes of system 1000 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 1000 uses a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to select one or more neural networks to perform one or more wireless signal operations. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss).

In at least one embodiment, system 1000 includes one or more processors to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 1000 is, is included in, and/or otherwise includes systems illustrated in FIGS. 1-12 to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 1000 performs one or more processes illustrated in FIGS. 1-12, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 1000 includes one or more hardware illustrated in FIGS. 13 - 31C, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein.

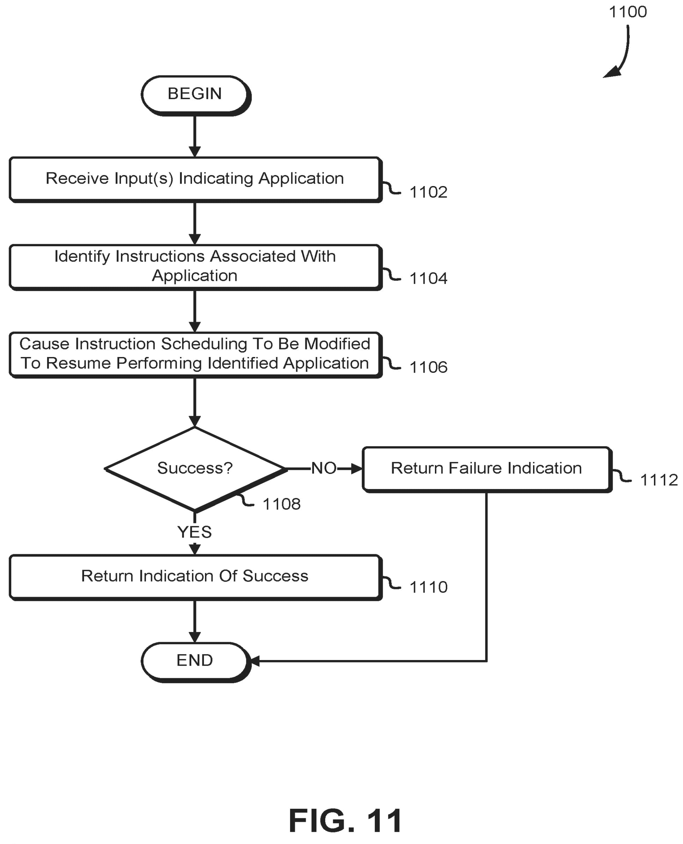

FIG. 11 is a process 1100 flow diagram illustrating using an API to cause a processor to resume performing one or more sets of instructions, according to at least one embodiment. In at least one embodiment, process 1100 includes one or more steps to receive 1102 one or more inputs indicating an application, identify 1104 one or more instructions associated with an application, cause 1106 an instruction's scheduling to resume performing one or more instructions of an identified application, return 1112 an indication (e.g., error and/or not success), return 1112 an indication of success, perform one or more operations described in FIGS. 1-12, and/or combinations thereof. In at least one embodiment, process 1100 begins when invoked by one or more processors.

In at least one embodiment, a processor performs a process 1100 which includes using an API which may receive 1102 as input one or more indications 1004 to resume all instructions in a set of instructions previously paused (e.g., using one or more APIs 110), and/or one or more inputs described herein. In an embodiment the API may also be performed without an input and just an invocation. In this case, 1102 may comprise the API determining the identity of the application that invoked the API.

In at least one embodiment, a processor performs a process 1100 which includes an API to identify 1104 one or more instructions associated with an application 1006, such as by proceeding to return said instruction to a queue of instructions (e.g., kernels) to be performed (e.g., in a corresponding time slice). In at least one embodiment, a processor performs a process 1100 to identify 1104 one or more instructions (e.g., contexts) associated with an application and/or then proceeds to cause 1106 one or more instruction's scheduling to be modified to resume performing one or more instructions of an identified application. In at least one embodiment, a processor performs a process 1100 to cause 1106 one or more instruction's scheduling to be modified to resume performing one or more instructions of an identified application and/or proceeds to decision block 1108.

In at least one embodiment, a decision in decision block 1108 is "YES," if a processor (e.g., GPU host 302) successfully resumed all instructions in a set of instructions, otherwise a decision is "NO." In at least one embodiment, if a decision in decision block 1108 is "YES," a processor returns 1108 one or more indications of success, which may include storing a flag in memory. In at least one embodiment, if a decision in decision block 1108 is "NO," a processor performing process 1100 returns one or more indications of not success, error, or variations thereof, such as by storing a flag in memory.

In at least one embodiment, a processor performs a process 1100 which includes using an API 1206D (see FIG. 12) to resume one or more instructions associated with an application, such as to resume performance of all kernels in a set of kernels of an application 1006. In at least one embodiment, a system performing process 1100 is described in conjunction with performing 1002 an API operation, such as an API 110 and/or API 1206D. In at least one embodiment, upon returning 1110 and/or 1112 one or more indications, a system performing process 1100 performs one or more operations described herein and/or proceeds to end.

In at least one embodiment, one or more processors uses process 1100, such as a process to receive, via an application programming interface (API), an indication that performance of one or more paused instructions a graphics processing unit (GPU) instructions is to be resumed; identify one or more paused instructions associated with a program that has invoked the API; cause, in response to the invocation of the API, the performance of the identified one or more paused instructions to be resumed and/or otherwise perform operations described herein. In at least one embodiment, as an example, a machine readable medium (e.g., non-transitory) having stored thereon a set of instructions, which if performed by one or more processors, cause one or more processors to perform process 1100, such as to receive, via an application programming interface (API), an indication that performance of one or more paused instructions a graphics processing unit (GPU) instructions is to be resumed; identify one or more paused instructions associated with a program that has invoked the API; cause, in response to the invocation of the API, the performance of the identified one or more paused instructions to be resumed and/or otherwise perform operations described herein.

In at least one embodiment, process 1100 is, is included in, and/or otherwise includes processes illustrated in FIGS. 1-12 to receive, via an application programming interface (API), an indication that performance of one or more paused instructions a graphics processing unit (GPU) instructions is to be resumed; identify one or more paused instructions associated with a program that has invoked the API; cause, in response to the invocation of the API, the performance of the identified one or more paused instructions to be resumed and/or otherwise perform operations described herein. In at least one embodiment, one or more systems illustrated in FIGS. 1-12 perform process 1100, such as to receive, via an application programming interface (API), an indication that performance of one or more paused instructions a graphics processing unit (GPU) instructions is to be resumed; identify one or more paused instructions associated with a program that has invoked the API; cause, in response to the invocation of the API, the performance of the identified one or more paused instructions to be resumed and/or otherwise perform operations described herein. In at least one embodiment, one or more hardware illustrated in FIGS. 13 - 31C use process 1100, such as to receive, via an application programming interface (API), an indication that performance of one or more paused instructions a graphics processing unit (GPU) instructions is to be resumed; identify one or more paused instructions associated with a program that has invoked the API; cause, in response to the invocation of the API, the performance of the identified one or more paused instructions to be resumed and/or otherwise performs operations described herein.

FIG. 12 illustrates a processor 1208 and storage 1202, in accordance with at least one embodiment. In at least one embodiment, at least one example of system 1200 includes software and hardware to cause a GPU to pause, cause, and/or resume performance of one or more instructions (e.g., kernels), or otherwise perform any of the operations described herein, according to at least one embodiment. System 1200 can include storage 1202 and processor(s) 1208. Storage 1202 can include, for example, memory, cache, or other storage described further herein. Storage 1202 can be separate from processor(s) 1208, or storage 1202 can be included in processor(s) 1208 (e.g., in storage 1212). In at least one embodiment, software program 1204 and/or software libraries (or instructions) 1206 can be stored in memory, cache, or other storage and provided to processor(s) 1208 to cause one or more circuits of processor(s) 1208 to perform operations described herein. In at least one embodiment, software program 1204 and/or software libraries (or instructions) 1206 can be integrated into one or more circuits of processor(s) 1208. Software program 1204, which can be used to perform any of the operations described herein, may be stored on storage 1202.

In at least one embodiment, software program 1204 can include one or more software modules. In at least one embodiment, one or more modules include to pause, cause, and/or resume performance of one or more instructions (e.g., kernels and/or instructions).

In at least one embodiment, as used in any implementation described herein, unless otherwise clear from context or stated explicitly to contrary, a module refers to any combination of software logic, firmware logic, hardware logic, and/or circuitry configured to provide functionality described herein. In at least one embodiment, software is embodied as a software package, code and/or instruction set or instructions, and "hardware," as used in any implementation described herein, includes, for example, singly or in any combination, hardwired circuitry, programmable circuitry, state machine circuitry, fixed function circuitry, execution unit circuitry, and/or firmware that stores instructions performed by programmable circuitry. In at least one embodiment, modules are, collectively or individually, embodied as circuitry that forms part of a larger system, for example, an integrated circuit (IC), system on-chip (SoC), and so forth. In at least one embodiment, a module performs one or more processes in connection with any suitable processing unit and/or combination of processing units, such as one or more CPUs, GPUs, GPGPUs, PPUs, and/or variations thereof including those further described herein.

In at least one embodiment, software program 1204 can include a collection of software code, commands, instructions, or other sequences of text to instruct a computing device to perform one or more computational operations and/or invoke one or more other sets of instructions, such as API(s) or API function(s) or Instruction Set Architecture (ISA) level instructions, to be executed or otherwise performed. Instructions (e.g., hardware instructions) or microcode can involve ISA level instructions, which can include native ISA instructions or non-native ISA instructions. Software program 1204 and/or software libraries 1206 (e.g., one or more modules) can be distributed among multiple processors that communicate over a bus, network, by writing to shared memory, and/or any suitable communication process such as those described herein.

In at least one embodiment, system 1200 can include one or more software libraries 1206 that can, for example, provide one or more APIs and/or ISA instructions. In at least one embodiment, one or more APIs and/or ISA instructions can be used to cause a GPU to pause, cause, and/or resume performance of one or more instructions (e.g., kernels). In at least one embodiment, one or more software libraries 1206 can be included in drivers and/or runtimes. In at least one embodiment, software libraries 1206 (e.g., including one or more APIs and/or ISA instructions) can include sets of software instructions that, if executed or otherwise performed, cause processor(s) 1208 to perform one or more computational operations, such as any of the operations described herein. In at least one embodiment, one or more APIs and/or ISA instructions can be distributed or otherwise provided as a part of one or more software libraries 1206, runtimes, drivers, and/or any other grouping of software and/or executable code further described herein. In at least one embodiment, one or more APIs and/or ISA instructions can perform one or more computational operations in response to invocation by software program 1204.

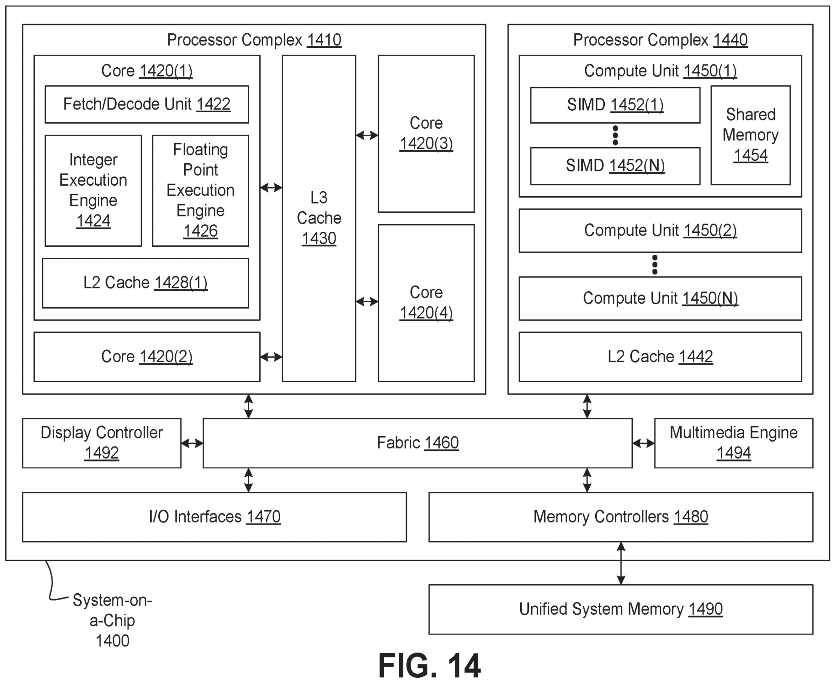

Processor(s) 1208 may include any number of processors and any suitable processing unit and/or combination of processing units, such as, but not limited to, central processing units ("CPUs"), graphics processing units ("GPUs"), or other processors (including accelerators, field programmable gate arrays (FPGAs), graphics processors, parallel processors, GPGPUs, DPUs, and/or variations thereof including those further described herein), including any processors described herein, such as, but not limited to, processors in FIGS. 14-26. In at least one embodiment, processor(s) 1208 can retrieve or fetch instructions (e.g., one or more APIs and/or ISA instructions) from storage 1202 using, for example, instruction fetch 1216 (e.g., for an Instruction Fetch stage). Instructions can include instructions to cause a GPU to pause, cause, and/or resume performance of one or more instructions (e.g., kernels). In at least one embodiment, processor(s) 1208 can include storage 1212 and instruction queue 1210 to store and queue instructions fetched from storage 1202. In at least one embodiment, fetched instructions can be decoded by decode 1218 to determine what operation should be performed by processor(s) 1208 (e.g., in an Instruction Decode stage). In at least one embodiment, processor(s) 1208 can fetch additional operands (data) that may be used for instructions, and operands can be stored, e.g., in registers or storage 1212. In at least one embodiment, micro-operations 1220 can perform operations on data stored in one or more registers or storage 1212. For example, each step of instructions fetched by processor(s) 1208 can be decomposed during execution so processor(s) 1208 can execute instructions in steps through a series of micro-operations 1220. In at least one embodiment, program counter (PC) 1214 can hold an address for a next instruction and can be updated to point to the next instruction to be executed by processor(s) 1208.

In at least one embodiment, processor(s) 1208 can perform instructions (e.g., in an Execution stage). For example, processor(s) 1208 can perform an operation specified by the instructions, such as an arithmetic operation, a logical operation, or a data transfer. In at least one embodiment, compute unit(s) 1222 can execute instructions to perform any of the operations described herein. In at least one embodiment, compute unit(s) can include ALU(s) 1224 (Arithmetic Logic Units), which may be used for performing arithmetic and logical operations. In at least one embodiment, compute unit(s) can include FPU(s) (Floating Point Units) 1226, which may be used for performing floating-point calculations. In at least one embodiment, other circuits 1228 can be used to perform other operations, such as vector and/or scalar operations. In at least one embodiment, accelerator(s) 1230 can include one or more matrix multiplication accelerators, one or more parallel processing units (PPUs), such as GPUs, or any other accelerator or processor further described herein. In at least one embodiment, software program 1204 can utilize one or more APIs and/or ISA instructions to perform various computing operations with accelerator(s) 1230, such as matrix multiplication, arithmetic operations, or any other computing operation further described herein. In at least one embodiment, one or more computing operations using accelerator(s) 1230 can include at least one or more groups of computing operations to be accelerated by execution at least in part by accelerator(s) 1230, including to cause a GPU to pause, cause, and/or resume performance of one or more instructions (e.g., kernels).

In at least one embodiment, system 1200 can be used to perform one or more instructions that include functions or operations, such as those described in connection with FIGS. 1-12. In at least one embodiment, system 1200 comprising one or more processors causes one or more circuits to cause a GPU to pause, cause, and/or resume performance of one or more instructions (e.g., kernels) and/or otherwise perform operations described herein. In at least one embodiment, system 1200 is included in and/or otherwise includes systems illustrated in FIGS. 1-12 to cause one or more circuits to perform an API to cause a GPU to pause, cause, and/or resume performance of one or more instructions (e.g., kernels) and/or otherwise perform operations described herein. In at least one embodiment, system 1200 includes one or more hardware illustrated in FIGS. 1-12, such as to perform an API to cause a GPU to pause, cause, and/or resume performance of one or more instructions (e.g., kernels) and/or otherwise perform operations described herein.

In at least one embodiment, system 1200 includes one or more processors to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 1200 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 1200 performs one or more processes illustrated in FIGS. 1-12, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein. In at least one embodiment, system 1200 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are associated with one or more identifiers indicated to the API and/or otherwise perform operations described herein.

In at least one embodiment, system 1200 includes one or more processors to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 1200 is, is included in, and/or otherwise includes systems illustrated in FIGS. 1-12 to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 1200 performs one or more processes illustrated in FIGS. 1-12, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein. In at least one embodiment, system 1200 includes one or more hardware illustrated in FIGS. 13 - 31C, such as to perform an application programming interface (API) to pause performance of one or more graphics processing unit (GPU) instructions scheduled to be performed on a GPU, wherein the GPU instructions are identified by the API as being associated with a program that has invoked the API and/or otherwise perform operations described herein.

In at least one embodiment, system 1200 includes one or more processors to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 1200 is, is included in, and/or otherwise includes systems illustrated in FIGS. 1-12 to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 1200 performs one or more processes illustrated in FIGS. 1-12, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein. In at least one embodiment, system 1200 includes one or more hardware illustrated in FIGS. 13 - 31C, such as to perform an application programming interface (API) to resume performance of one or more graphics processing unit (GPU) instructions whose scheduled performance on a GPU has been paused, wherein the GPU instructions are associated with one or more identifiers indicated to the API and/or otherwise perform operations described herein.

In at least one embodiment, system 1200 includes one or more processors to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 1200 is, is included in, and/or otherwise includes systems illustrated in FIGS. 1-12 to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 1200 performs one or more processes illustrated in FIGS. 1-12, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein. In at least one embodiment, system 1200 includes one or more hardware illustrated in FIGS. 13 - 31C, such as to perform an application programming interface (API) to resume performance of one or more graphics processing unit (GPU) instructions whose performance on a GPU has been paused, wherein the GPU instructions are identified by the API as being associated with a program that has invoked the API and/or otherwise perform operations described herein.

In preceding and following descriptions, various techniques are described. For purposes of explanation, specific configurations and details are set forth in order to provide a thorough understanding of possible ways of implementing techniques. However, it will also be apparent that techniques described below may be practiced in different configurations without specific details. Furthermore, well-known features may be omitted or simplified to avoid obscuring techniques being described.

### DATA CENTER

FIG. 13 illustrates an example data center 1300, in accordance with at least one embodiment. Data center 1300 may include one or more rooms having racks 1302 and auxiliary equipment used to house one or more racks 1302 and one or more baseboards 1304. Rack 1302 can include one or more baseboards 1304. Rack 1302 can include a housing that receives and supports individual baseboards 1304. Operational aspects of rack 1302 may be regulated at a rack level, corresponding to a group of baseboards 1304, or at a baseboard level, corresponding to individual baseboards 1304, among other options. Rack 1302 or baseboards 1304 can have particularly selected maximum operating parameters, such as, but not limited to, power consumption, operating frequencies, and others. Data center 1300 can be supported by various cooling systems, such as, but not limited to, cooling towers, cooling loops, pumps, and other support systems. Cooling systems may include sensors and controllers to monitor and managing cooling properties for racks 1302. Baseboards 1304 within racks 1302 can get operational power from one or more power distribution units (PDUs; not shown). PDUs may be arranged within racks 1302, for example between racks 1302 including baseboards 1304, or within racks 1302 that also house baseboards 1304.

Racks 1302 and baseboards 1304 can include sub-systems, modules, add-in cards, and other semiconductor components. Baseboards 1304 can include one or more computing units 1306 that can include one or more processors 1308, one or more memory 1310, and an interface controller 1312. Computing units 1306 may include any number of processors, such as, but not limited to, central processing units ("CPUs"), graphics processing units ("GPUs"), or other processors (including accelerators, field programmable gate arrays (FPGAs), graphics processors, etc.), including any processors described herein, such as, but not limited to, processors in FIGS. 14-26. Computing units 1306 can include one or more memory storage devices 1310 (e.g., dynamic read-only memory, solid state storage or disk drives), as well as network input/output ("NW I/O") devices, network switches, virtual machines ("VMs"), power modules, and cooling modules, etc. One or more computing units 1306 may be a server having one or more of above-mentioned computing resources.

Computing units 1306 can include separate groupings of computing units housed within one or more racks (not shown), or many racks housed in data centers at various geographical locations (also not shown). Separate groupings of computing units may include grouped compute, network, memory or storage resources that may be configured or allocated to support one or more workloads. Several computing units (e.g., including CPUs and/or other processors) may be grouped within one or more racks to provide compute resources to support one or more workloads. A resource orchestrator 1314 may configure or otherwise control one or more computing units 1306 or groups of computing units. Resource orchestrator 1314 may include a software design infrastructure ("SDI") management entity for data center 1300. Resource orchestrator 1314 may include hardware, software or some combination thereof.

Data center 1300 can include any one of or any combination of a framework layer 1320, a software layer 1330 and an application layer 1340. As shown in FIG. 13, framework layer 1320 includes a job scheduler 1322, a configuration manager 1324, a resource manager 1326 and a distributed file system 1328. Framework layer 1320 may include a framework to support software 1332 of software layer 1330 and/or one or more application(s) 1342 of application layer 1340. Software 1332 or application(s) 1342 may respectively include web-based service software or applications, such as, but not limited to, those provided by Amazon Web Services, Google Cloud and Microsoft Azure. Framework layer 1320 may be a type of free and open-source software web application framework such as, but not limited to, Apache Spark^{™} (hereinafter "Spark") that may utilize distributed file system 1328 for large-scale data processing (e.g., "big data"). Job scheduler 1322 may include a Spark driver to facilitate scheduling of workloads supported by various layers of data center 1300. Configuration manager 1324 may be capable of configuring different layers such as, but not limited to, software layer 1330 and framework layer 1320 including Spark and distributed file system 1328 for supporting large-scale data processing. Resource manager 1326 may be capable of managing clustered or grouped computing units 1306 mapped to or allocated for support of distributed file system 1328 and job scheduler 1322. Resource manager 1326 may coordinate with resource orchestrator 1314 to manage these mapped or allocated computing resources.

Software 1332 can be included in software layer 1330 and may include software used by at least portions of a computing unit 1306, one or more computing units 1306, groups of computing units 1306, and/or distributed file system 1328 of framework layer 1320. One or more types of software may include, but are not limited to, Internet web page search software, e-mail virus scan software, database software, and streaming video content software.

Application(s) 1342 can be included in application layer 1340 and may include one or more types of applications used by at least portions of a computing unit 1306, one or more computing units 1306, groups of computing units 1306, and/or distributed file system 1328 of framework layer 1320. One or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

Any of configuration manager 1324, resource manager 1326, and resource orchestrator 1314 may implement any number and type of self-modifying actions based on any amount and type of data acquired in any technically feasible fashion. Self-modifying actions may relieve a data center operator of data center 1300 from making possibly bad configuration decisions and possibly avoiding underutilized and/or poor performing portions of a data center.

Data center 1300 may include tools, services, software or other resources to train one or more machine learning models or predict or infer information using one or more machine learning models in accordance with one or more embodiments described herein. For example, a machine learning model may be trained by calculating weight parameters in accordance with a neural network architecture using software and computing resources described above with respect to data center 1300. Trained machine learning models corresponding to one or more neural networks may be used to infer or predict information using resources described above with respect to data center 1300 by using weight parameters calculated through one or more training techniques described herein.

Data center 1300 may use CPUs, application-specific integrated circuits (ASICs), GPUs, FPGAs, or other hardware (e.g., embodiments in FIGS. 14-26) to perform some or all of processes and techniques described elsewhere herein, such as, but not limited to, training and/or inferencing using above-described resources. Moreover, one or more software and/or hardware resources described above may be configured as a service to allow users to train or performing inferencing of information, such as, but not limited to, image recognition, speech recognition, or other artificial intelligence services.

In at least one embodiment, processor 1308 can include one of the processors below and/or comprises one or more circuits to perform an application programming interface (API) to pause and/or cause one or more indicated instructions or otherwise perform any of the operations described above or elsewhere herein. In at least one embodiment, processor 1308 is configured by software 1332 to perform an application programming interface (API) to pause and/or cause one or more indicated instructions or otherwise perform any of the operations described above or elsewhere herein. Data center 1300 may use logic, CPUs, application-specific integrated circuits (ASICs), GPUs, FPGAs, or other hardware (e.g., embodiments in FIGS. 14-26) to perform any of the operations described above or elsewhere herein.

### PROCESSORS

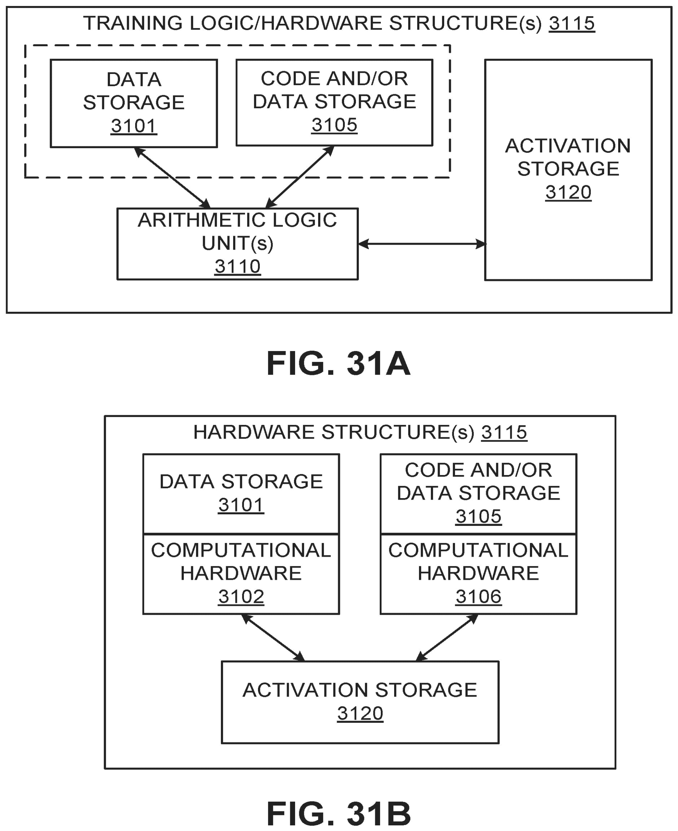

The following figures set forth, without limitation, example processors and processing systems that can be used to perform an application programming interface (API) to pause and/or cause one or more indicated instructions or otherwise perform some or all of processes, operations and/or and techniques described elsewhere herein. Example processors and processing systems can be configured by software to perform an application programming interface (API) to pause and/or cause one or more indicated instructions or otherwise perform any of the operations described above or elsewhere herein. Processors and processing systems can include logic, central processing units (CPUs), application-specific integrated circuits (ASICs), graphics processing units (GPUs), field programmable arrays (FPGAs), XPUs (i.e., any compute architecture that best fits the need of an application) or other hardware (e.g., embodiments in FIGS. 14-26) to perform any of the operations described above, below, or elsewhere herein. Processors and/or processing systems described herein can include one or more circuits that can be used to perform an application programming interface (API) to pause and/or cause one or more indicated instructions or otherwise perform any of the operations described above or elsewhere herein. As used herein, one or more circuits can be configured by software to perform an application programming interface (API) to pause and/or cause one or more indicated instructions or otherwise perform any of the operations described above or elsewhere herein. FIGS. 31A and 31B illustrate logic 3115 which, as described elsewhere herein, can be used in one or more devices to perform operations such as, but not limited to, those discussed herein in accordance with at least one embodiment. Logic can refer, for example, to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU).

FIG. 14 illustrates a processor which is a system-on-a-chip (SOC) 1400 (which may be referred to as system-on-chip, a superchip, or another name), in accordance with at least one embodiment. SOC 1400 can include processor complex 1410 and processor complex 1440. SOC 1400 can include any number of processor complexes 1410 and/or processor complexes 1440 that may include any number of processors that are described herein, such as, but not limited to, those in FIGS. 14-26, in any combination. For example, processor 1410 may include a central processing unit (CPU), and processor 1440 may include a graphics processor. Alternatively, processor 1410 may include a graphics processor, and processor 1440 may include a graphics processor. SOC 1400 may include any number of display controllers 1492, any number of multimedia engines 1494, any number of I/O Interfaces 1470, any number of memory controllers 1480, and any number of fabrics 1460 in any combination. For explanatory purposes, multiple instances of like objects are denoted herein with reference numbers identifying the object and parenthetical numbers identifying the instance where needed. SOC 1400 can include a processor from Broadcom in Palo Alto, CA.

Processor complex 1410 can include a CPU, processor complex 1440 can include a GPU, and SOC 1400 can include a processing unit that integrates 1410 and 1440 onto a single chip. Some instructions may be assigned to processor complex 1410 and other instructions may be assigned to processor complex 1440. Processor complex 1410 can be configured to execute main control software associated with SOC 1400, such as, but not limited to, an operating system. Processor complex 1410 can be the master processor of SOC 1400, controlling and coordinating operations of other processors. Processor complex 1410 can issue commands that control the operation of processor complex 1440 to perform some or all of the operations described herein. Processor complex 1410 can be configured to execute host executable code derived from CUDA or other source code (e.g., HIP source code), and processor complex 1440 can be configured to execute device executable code derived from CUDA or other source code in order to perform any of the operations described herein.

Processor complex 1410 can include cores 1420(1)-1420(4) and a cache (e.g., L3 cache) 1430 to store information to perform operations described herein. Processor complex 1410 may include any number of cores 1420 and any number and type of caches in any combination. Cores 1420 can be configured to execute instructions of a particular instruction set architecture ("ISA") to perform some or all of the operations described herein. Each core 1420 can include a CPU core. Core 1420(1)-1420(4) can be referred to as a computing units or compute units. SOC 1400 can includes any number of processor complexes 1410, fabric 1460, I/O interfaces 1470, and memory controllers 1480.

Each core 1420 can include a fetch/decode unit 1422, an integer execution engine 1424, a floating point execution engine 1426, and an L2 cache 1428. Fetch/decode unit 1422 can fetch instructions to perform some or all of the operations described herein (such as, but not limited to, an API that is compiled into instructions) and decode such instructions, generate micro-operations, and dispatch separate micro-instructions to integer execution engine 1424 and/or floating point execution engine 1426. Fetch/decode unit 1422 can concurrently dispatch one micro-instruction to integer execution engine 1424 and another micro-instruction to floating point execution engine 1426. Integer execution engine 1424 can execute integer and memory operations. Floating point engine 1426 can execute floating point and vector operations. Fetch-decode unit 1422 can dispatch micro-instructions to one or more execution engines that replaces both integer execution engine 1424 and floating point execution engine 1426.

Each core 1420(i), where i is an integer representing a particular instance of core 1420, may access L2 cache 1428(i) included in core 1420(i). Each core 1420 included in core complex 1410(j), where j is an integer representing a particular instance of core complex 1410, can be connected to other cores 1420 included in core complex 1410(j) via L3 cache 1430(j) included in core complex 1410(j). Cores 1420 included in core complex 1410(j), where j is an integer representing a particular instance of core complex 1410, can access all of L3 cache 1430(j) included in core complex 1410(j). L3 cache 1430 may include any number of slices.

Processor complex 1440 can be a graphics complex that can be configured to perform compute operations (e.g., compute operations involved in operations described herein) in a highly-parallel fashion. Processor complex 1440 can be configured to execute graphics pipeline operations such as, but not limited to, draw commands, pixel operations, geometric computations, and other operations associated with rendering an image to a display. Processor complex 1440 can be configured to execute operations unrelated to graphics, such as, but not limited to, neural network training and/or simulations. Processor complex 1440 can be configured to execute both operations related to graphics and operations unrelated to graphics.

Processor complex 1440 can include any number of compute units 1450(1)-1450(N), where N is any integer greater than 1, and an L2 cache 1442. Compute units 1450 can share L2 cache 1442, which may store information to be used to perform some or all of the operations described herein. L2 cache 1442 can be partitioned. Processor complex 1440 can include any number of compute units 1450 and any number (including zero) and type of caches. Processor complex 1440 can include any amount of dedicated graphics hardware.

Each compute unit 1450 can include any number of SIMD units 1452(1)-1452(N), where N is any integer greater than 1, and a shared memory 1454. Each SIMD unit 1452 can implement a SIMD architecture and can be configured to some or all of the operations described herein, in parallel. Each compute unit 1450 may execute any number of thread blocks, but each thread block can execute on a single compute unit 1450, although in some embodiments a thread block can execute on multiple compute units. A thread block can include any number of threads of execution. A workgroup can be a thread block. Each SIMD unit 1452 can execute a group of threads. A group of threads (e.g., 16 threads), which can also be referred to as a warp, or subgroup, or wavefront (e.g., as used by AMD and Intel), where each thread in the warp, wave, subgroup, or wavefront can belong to a single thread block and is configured to process a different set of data based on a single set of instructions. Predication can be used to disable one or more threads in a warp, subgroup, or wavefront. A lane can be a thread. A work item can be a thread, such as, but not limited to, e.g., with OpenCL. Different warps, subgroups, or wavefronts in a thread block may synchronize together and communicate via shared memory 1454. Each compute unit 1450 can include one or more thread block clusters, where a thread block cluster can enable programmatic control of locality at a granularity larger than a single thread block of a single streaming multiprocessor (SM). Thread block clusters (also referred to as "clusters") can enable multiple thread blocks running concurrently across streaming multiprocessors to synchronize and collaboratively fetch, exchange, or otherwise use data. In at least one embodiment, streaming multiprocessors ("SMs") can be referred to streaming microprocessors, stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

Fabric 1460 can be a system interconnect that facilitates data and control transmissions across processor complex 1410, processor complex 1440, I/O interfaces 1470, memory controllers 1480, display controller 1492, and multimedia engine 1494, e.g., to perform some or all of the operations described herein. SOC 1400 may include any amount and type of system interconnect in addition to or instead of fabric 1460 that facilitates data and control transmissions across any number and type of directly or indirectly linked components that may be internal or external to SOC 1400. I/O interfaces 1470 can be representative of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 1470. Peripheral devices that can be coupled to I/O interfaces 1470 may include keyboards, mice, printers, scanners, joysticks or other types of game controllers, media recording devices, external storage devices, network interface cards, and so forth.

Display controller 1492 may display images on one or more display device(s), such as, but not limited to, a liquid crystal display ("LCD") device. Multimedia engine 1494 can include any amount and type of circuitry that is related to multimedia, such as, but not limited to, a video decoder, a video encoder, an image signal processor, etc. Memory controllers 1480 may facilitate data transfers between SOC 1400 and a unified system memory 1490. Processor complex 1410 and processor complex 1440 may share unified system memory 1490. Unified system memory 1490 can include various types of memory devices, including dynamic random access memory (DRAM) or graphics random access memory, such as, but not limited to, synchronous graphics random access memory (SGRAM), including graphics double data rate (GDDR) memory. Unified system memory 1490 may include 3D stacked memory, including but not limited to high bandwidth memory (HBM), HBM2e, or HDM3.

SOC 1400 may implement a memory subsystem that includes any amount and type of memory controllers 1480 and memory devices (e.g., shared memory 1454) that may be dedicated to one component or shared among multiple components in order to perform any of the operations described herein. SOC 1400 can implement a cache subsystem that includes one or more cache memories (e.g., L2 caches 1428, L3 cache 1430, and L2 cache 1442) that may each be private to or shared between any number of components (e.g., cores 1420, core complex 1410, SIMD units 1452, compute units 1450, and processor complex 1440).

In at least one embodiment, SOC 1400 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

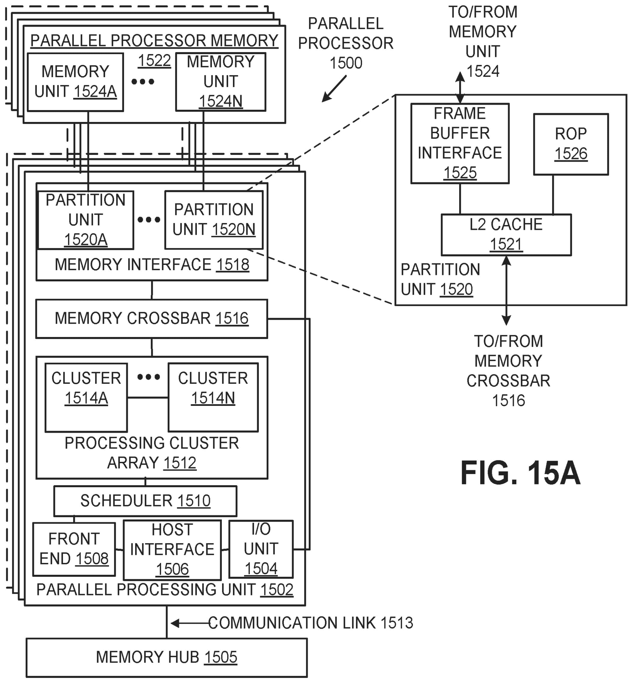

FIG. 15A illustrates a parallel processor 1500, in accordance with at least one embodiment. Parallel processor 1500 may be implemented using one or more circuits and may be referred to as a programmable processor (e.g., a CPU and/or GPU), logic, an application specific integrated circuit (ASIC), a field programmable gate array (FPGA) or other hardware (e.g., embodiments in FIGS. 14-26) to perform any of the operations described above or elsewhere herein.

Parallel processor 1500 can include a parallel processing unit 1502 to perform any of the operations described above or elsewhere herein. Parallel processing unit 1502 can include an I/O unit 1504 that enables communication with other devices, including other instances of parallel processing unit 1502. I/O unit 1504 may be directly connected to other devices. I/O unit 1504 may connect with other devices via use of a hub or switch interface, such as, but not limited to, a memory hub 1505. Connections between memory hub 1505 and I/O unit 1504 can form a communication link 1513. I/O unit 1504 may connect with a host interface 1506 and a memory crossbar 1516, where host interface 1506 receives commands directed to performing processing operations and memory crossbar 1516 receives commands directed to performing memory operations.

When host interface 1506 receives a command buffer via I/O unit 1504, host interface 1506 can direct work operations to perform those commands to a front end 1508. Front end 1508 can couple with a scheduler 1510 (which may be referred to as a sequencer), which is configured to distribute commands or other work items to a processing cluster array 1512. Scheduler 1510 can ensure that processing cluster array 1512 is properly configured and in a valid state before instructions may be distributed to a cluster of processing cluster array 1512. Scheduler 1510 may be implemented via firmware logic executing on a microcontroller. Microcontroller-implemented scheduler 1510 can be configurable to perform complex scheduling and work distribution operations at coarse and fine granularity, enabling rapid preemption and context switching of threads executing on processing array 1512. Host software can prove workloads for scheduling on processing cluster array 1512 via one of multiple graphics processing paths. Workloads can then be automatically distributed across processing array cluster 1512 by scheduler 1510 logic within a microcontroller including scheduler 1510.

Processing cluster array 1512 can perform any of the operations described above or elsewhere herein and can include up to "N" processing clusters (e.g., cluster 1514A, cluster 1514B, through cluster 1514N), where "N" represents a positive integer (which may be a different integer "N" than used in other figures). Each cluster 1514A-1514N of processing cluster array 1512 can execute a large number of concurrent threads. Scheduler 1510 can allocate work to clusters 1514A-1514N of processing cluster array 1512 using various scheduling and/or work distribution algorithms, which may vary depending on workload arising for each type of program or computation. Scheduling can be handled dynamically by scheduler 1510, or can be assisted in part by compiler logic during compilation of program logic configured for execution by processing cluster array 1512. Different clusters 1514A-1514N of processing cluster array 1512 can be allocated for processing different types of programs or for performing different types of computations.

Processing cluster array 1512 can be configured to perform various types of parallel processing operations, such as, but not limited to, any of the operations described above or elsewhere herein. Processing cluster array 1512 can be configured to perform general-purpose parallel compute operations. For example, processing cluster array 1512 can include logic to execute processing instructions including filtering of video and/or audio data, performing modeling operations, including physics operations, and performing data transformations.

Processing cluster array 1512 can be configured to perform parallel graphics processing operations. Processing cluster array 1512 can include additional logic to support execution of such graphics processing operations, including but not limited to, texture sampling logic to perform texture operations, as well as tessellation logic and other vertex processing logic. Processing cluster array 1512 can be configured to execute graphics processing related shader programs such as, but not limited to, vertex shaders, tessellation shaders, geometry shaders, and pixel shaders. Parallel processing unit 1502 can transfer data from system memory via I/O unit 1504 for processing. During processing, transferred data can be stored to on-chip memory (e.g., parallel processor memory 1522) during processing, then written back to system memory.

When parallel processing unit 1502 is used to perform graphics processing, scheduler 1510 can be configured to divide a processing workload into approximately equal sized instructions, to better enable distribution of graphics processing operations to multiple clusters 1514A-1514N of processing cluster array 1512. Portions of processing cluster array 1512 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of clusters 1514A-1514N may be stored in buffers to allow intermediate data to be transmitted between clusters 1514A-1514N for further processing.

Processing cluster array 1512 can receive processing instructions to be executed via scheduler 1510, which receives commands defining processing instructions from front end 1508. Processing instructions can include indices of data to be processed, e.g., surface (patch) data, primitive data, vertex data, and/or pixel data, as well as state parameters and commands defining how data is to be processed (e.g., what program is to be executed). Scheduler 1510 may be configured to fetch indices corresponding to instructions or may receive indices from front end 1508. Front end 1508 can be configured to ensure processing cluster array 1512 is configured to a valid state before a workload specified by incoming command buffers (e.g., batch-buffers, push buffers, etc.) is initiated.

Each of one or more instances of parallel processing unit 1502 can couple with a parallel processor memory 1522 to perform any of the operations described above or elsewhere herein. Parallel processor memory 1522 can be accessed via memory crossbar 1516, which can receive memory requests from processing cluster array 1512 as well as I/O unit 1504. Memory crossbar 1516 can access parallel processor memory 1522 via a memory interface 1518. Memory interface 1518 can include multiple partition units (e.g., partition unit 1520A, partition unit 1520B, through partition unit 1520N) that can each couple to a portion (e.g., memory unit) of parallel processor memory 1522. A number of partition units 1520A-1520N can be configured to be equal to a number of memory units, such that a first partition unit 1520A has a corresponding first memory unit 1524A, a second partition unit 1520B has a corresponding memory unit 1524B, and an N-th partition unit 1520N has a corresponding N-th memory unit 1524N. A number of partition units 1520A-1520N may not be equal to a number of memory units.

Memory units 1524A-1524N can include various types of memory devices, including dynamic random access memory (DRAM) or graphics random access memory, such as, but not limited to, synchronous graphics random access memory (SGRAM), including graphics double data rate (GDDR) memory. Memory units 1524A-1524N may also include 3D stacked memory, including but not limited to high bandwidth memory (HBM), HBM2e, or HDM3. Render targets, such as, but not limited to, frame buffers or texture maps may be stored across memory units 1524A-1524N, allowing partition units 1520A-1520N to write portions of each render target in parallel to efficiently use available bandwidth of parallel processor memory 1522. A local instance of parallel processor memory 1522 may be excluded in favor of a unified memory design that utilizes system memory in conjunction with local cache memory.

Any one of clusters 1514A-1514N of processing cluster array 1512 can process data that will be written to any of memory units 1524A-1524N within parallel processor memory 1522. Memory crossbar 1516 can be configured to transfer an output of each cluster 1514A-1514N to any partition unit 1520A-1520N or to another cluster 1514A-1514N, which can perform additional processing operations on an output. Each cluster 1514A-1514N can communicate with memory interface 1518 through memory crossbar 1516 to read from or write to various external memory devices. Memory crossbar 1516 can have a connection to memory interface 1518 to communicate with I/O unit 1504, as well as a connection to a local instance of parallel processor memory 1522, enabling processing units within different processing clusters 1514A-1514N to communicate with system memory or other memory that is not local to parallel processing unit 1502. Memory crossbar 1516 can use virtual channels to separate traffic streams between clusters 1514A-1514N and partition units 1520A-1520N.

Multiple instances of parallel processing unit 1502 can be provided on a single add-in card, or multiple add-in cards can be interconnected. Different instances of parallel processing unit 1502 can be configured to interoperate even if different instances have different numbers of processing cores, different amounts of local parallel processor memory, and/or other configuration differences. For example, some instances of parallel processing unit 1502 can include higher precision floating point units relative to other instances. Systems incorporating one or more instances of parallel processing unit 1502 or parallel processor 1500 can be implemented in a variety of configurations and form factors, including but not limited to desktop, laptop, or handheld personal computers, servers, workstations, game consoles, and/or embedded systems.

FIG. 15A further includes a block diagram of a partition unit 1520, in accordance with at least one embodiment. Partition unit 1520 is an instance of one of partition units 1520A-1520N of FIG. 15A. Partition unit 1520 can include an L2 cache 1521, a frame buffer interface 1525, and a ROP 1526 (raster operations unit). L2 cache 1521 can be a read/write cache that is configured to perform load and store operations received from memory crossbar 1516 and ROP 1526. Read misses and urgent write-back requests can be output by L2 cache 1521 to frame buffer interface 1525 for processing. Updates can also be sent to a frame buffer via frame buffer interface 1525 for processing. Frame buffer interface 1525 may interface with one of memory units in parallel processor memory, such as, but not limited to, memory units 1524A-1524N (shown as 1524) of FIG. 15A (e.g., within parallel processor memory 1522).

ROP 1526 can be a processing unit that performs raster operations such as, but not limited to, stencil, z test, blending, etc. ROP 1526 can then output processed graphics data that is stored in graphics memory. ROP 1526 can include compression logic to compress depth or color data that is written to memory and decompress depth or color data that is read from memory. Compression logic can be lossless compression logic that makes use of one or more of multiple compression algorithms. A type of compression that is performed by ROP 1526 can vary based on statistical characteristics of data to be compressed. For example, delta color compression is performed on depth and color data on a per-tile basis.

ROP 1526 can be included within each processing cluster (e.g., cluster 1514A-1514N of FIG. 15A) instead of within partition unit 1520. Read and write requests for pixel data may be transmitted over memory crossbar 1516 instead of pixel fragment data. Processed graphics data may be displayed on a display routed for further processing by processor(s), or routed for further processing by one of processing entities within parallel processor 1500 of FIG. 15A.

In at least one embodiment, parallel processor 1500 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

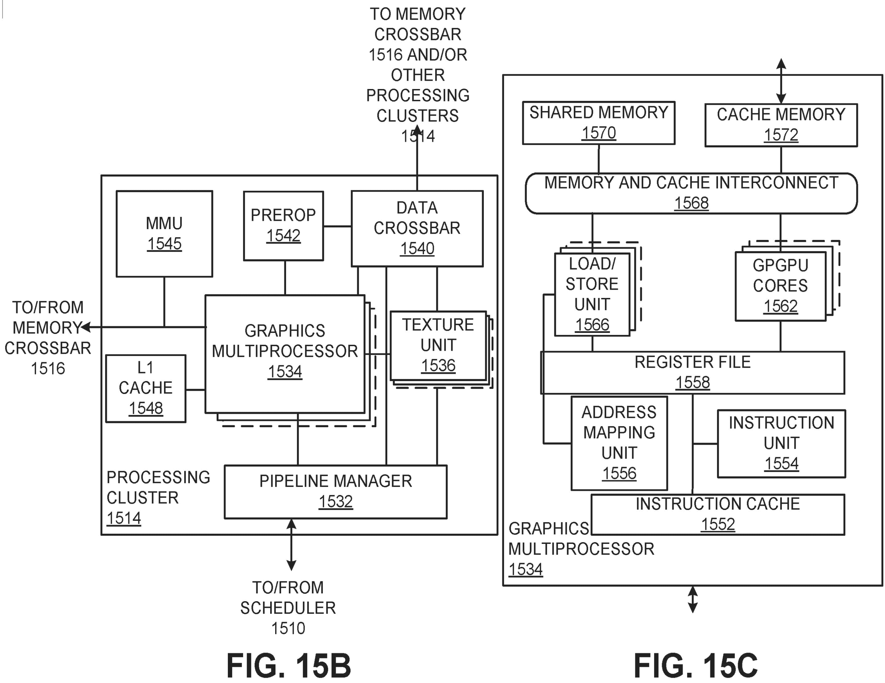

FIG. 15B includes a block diagram of a processing cluster 1514 within a parallel processing unit, in accordance with at least one embodiment. A processing cluster can be an instance of one of processing clusters 1514A-1514N of FIG. 15A that can be used to perform any of the operations described above or elsewhere herein. Processing cluster 1514 can be configured to execute many threads in parallel, where "thread" refers to an instance of a particular program executing on a particular set of input data. Single-instruction, multiple-data (SIMD) instruction issue techniques can be used to support parallel execution of a large number of threads without providing multiple independent instruction units. Single-instruction, multiple-thread (SIMT) techniques may be used to support parallel execution of a large number of generally synchronized threads, using a common instruction unit configured to issue instructions to a set of processing engines within each one of processing clusters.

Operation of processing cluster 1514 can be controlled via a pipeline manager 1532 that distributes processing instructions to SIMT parallel processors. Pipeline manager 1532 can receive instructions from scheduler 1510 of FIG. 15A and manages execution of those instructions via a graphics multiprocessor 1534 and/or a texture unit 1536. Graphics multiprocessor 1534 may be an example instance of a SIMT parallel processor. However, various types of SIMT parallel processors of differing architectures may be included within processing cluster 1514. One or more instances of graphics multiprocessor 1534 can be included within a processing cluster 1514. Graphics multiprocessor 1534 can process data and a data crossbar 1540 can be used to distribute processed data to one of multiple possible destinations, including other shader units. Pipeline manager 1532 can facilitate distribution of processed data by specifying destinations for processed data to be distributed via data crossbar 1540.

Each graphics multiprocessor 1534 within processing cluster 1514 can include an identical set of functional execution logic (e.g., arithmetic logic units, load-store units, etc.) to perform computations for any of the operations described above or elsewhere herein. Functional execution logic can be configured in a pipelined manner in which new instructions can be issued before previous instructions may be complete. Functional execution logic can support a variety of operations including integer and floating point arithmetic, comparison operations, Boolean operations, bit-shifting, and computation of various algebraic functions. Same functional-unit hardware can be leveraged to perform different operations and any combination of functional units may be present.

Instructions transmitted to processing cluster 1514 may constitute a thread, which can also be referred to as a warp, subgroup, wave, or a wavefront. A set of threads executing across a set of parallel processing engines can be referred to as a thread group. A thread group can execute a common program on different input data. Each thread within a thread group can be assigned to a different processing engine within a graphics multiprocessor 1534. A thread group may include fewer threads than a number of processing engines within graphics multiprocessor 1534. When a thread group includes fewer threads than a number of processing engines, one or more of processing engines may be idle during cycles in which that thread group is being processed. A thread group may also include more threads than a number of processing engines within graphics multiprocessor 1534. When a thread group includes more threads than number of processing engines within graphics multiprocessor 1534, processing can be performed over consecutive clock cycles. Multiple thread groups can be executed concurrently on a graphics multiprocessor 1534.

Graphics multiprocessor 1534 includes an internal cache memory to perform load and store operations, such as, but not limited to, any of the operations described above or elsewhere herein. Graphics multiprocessor 1534 can forego an internal cache and use a cache memory (e.g., L1 cache 1548) within processing cluster 1514. Each graphics multiprocessor 1534 may also have access to L2 caches within partition units (e.g., partition units 1520A-1520N of FIG. 15A) that can be shared among all processing clusters 1514 and may be used to transfer data between threads. Graphics multiprocessor 1534 may also access off-chip global memory, which can include one or more of local parallel processor memory and/or system memory. Any memory external to parallel processing unit 1502 may be used as global memory. Processing cluster 1514 can include multiple instances of graphics multiprocessor 1534 and can share common instructions and data, which may be stored in L1 cache 1548.

Each processing cluster 1514 may include an MMU 1545 (memory management unit) that can be configured to map virtual addresses into physical addresses. One or more instances of MMU 1545 may reside within memory interface 1518 of FIG. 15A. MMU 1545 can include a set of page table entries (PTEs) used to map a virtual address to a physical address of a tile and optionally a cache line index. MMU 1545 may include address translation lookaside buffers (TLB) or caches that may reside within graphics multiprocessor 1534 or L1 1548 cache or processing cluster 1514. A physical address can be processed to distribute surface data access locally to allow for efficient request interleaving among partition units. A cache line index may be used to determine whether a request for a cache line is a hit or miss.

A processing cluster 1514 may be configured such that each graphics multiprocessor 1534 is coupled to a texture unit 1536 for performing texture mapping operations, e.g., determining texture sample positions, reading texture data, and filtering texture data. Texture data can be read from an internal texture L1 cache (not shown) or from an L1 cache within graphics multiprocessor 1534 and can be fetched from an L2 cache, local parallel processor memory, or system memory, as needed. Each graphics multiprocessor 1534 can output processed instructions to data crossbar 1540 to provide processed instruction to another processing cluster 1514 for further processing or to store processed instruction in an L2 cache, local parallel processor memory, or system memory via memory crossbar 1516. A preROP 1542 (pre-raster operations unit) can be configured to receive data from graphics multiprocessor 1534, and direct data to ROP units, which may be located with partition units as described herein (e.g., partition units 1520A-1520N of FIG. 15A). PreROP 1542 unit can perform optimizations for color blending, organizing pixel color data, and performing address translations.

In at least one embodiment, processing cluster 1514 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

FIG. 15C shows a graphics multiprocessor 1534, in accordance with at least one embodiment, e.g., to perform any of the operations described above or elsewhere herein. Graphics multiprocessor 1534 can couple with pipeline manager 1532 of processing cluster 1514. Graphics multiprocessor 1534 can include an execution pipeline including but not limited to an instruction cache 1552 (that, e.g., can store instructions, such as, not limited to compiled API instructions), an instruction unit 1554, an address mapping unit 1556, a register file 1558, one or more general purpose graphics processing unit (GPGPU) cores 1562, and one or more load/store units 1566, where one or more load/store units 1566 can perform load/store operations to load/store instructions corresponding to performing an operation. GPGPU cores 1562 and load/store units 1566 can be coupled with cache memory 1572 and shared memory 1570 via a memory and cache interconnect 1568. GPGPU cores 1562 can be part of an SoC such as, but not limited to, part of integrated circuit 1400 in FIG. 14.

Instruction cache 1552 can receive a stream of instructions (e.g., to perform any of the operations described above or elsewhere herein) to execute from pipeline manager 1532. Instructions can be cached in instruction cache 1552 and dispatched for execution by an instruction unit 1554. Instruction unit 1554 can dispatch instructions as thread groups (e.g., warps, subgroups, wavefronts, or waves), with each thread of thread group assigned to a different execution unit within GPGPU cores 1562. An instruction can access any of a local, shared, or global address space by specifying an address within a unified address space. Address mapping unit 1556 can be used to translate addresses in a unified address space into a distinct memory address that can be accessed by load/store units 1566.

Register file 1558 can provide a set of registers for functional units of graphics multiprocessor 1534. Register file 1558 may provide temporary storage for operands connected to data paths of functional units (e.g., GPGPU cores 1562, load/store units 1566) of graphics multiprocessor 1534. Register file 1558 may be divided between each of functional units such that each functional unit is allocated a dedicated portion of register file 1558. Register file 1558 can be divided between different warps (which may be referred to as wavefronts, subgroups, and/or waves or threads) being executed by graphics multiprocessor 1534.

GPGPU cores 1562 can each include floating point units (FPUs) and/or integer arithmetic logic units (ALUs) that can be used to execute instructions of graphics multiprocessor 1534. GPGPU cores 1562 can be similar in architecture or can differ in architecture. A first portion of GPGPU cores 1562 can include a single precision FPU and an integer ALU while a second portion of GPGPU cores include a double precision FPU. FPUs can implement IEEE 754-2008 standard floating point arithmetic or enable variable precision floating point arithmetic. Graphics multiprocessor 1534 can additionally include one or more fixed function or special function units to perform specific functions such as, but not limited to, copy rectangle or pixel blending operations. One or more of GPGPU cores 1562 can also include fixed or special function logic.

GPGPU cores 1562 can include SIMD logic capable of performing a single instruction on multiple sets of data. GPGPU cores 1562 can physically execute SIMD4, SIMD8, and SIMD16 instructions and logically execute SIMD1, SIMD2, and SIMD32 instructions. SIMD instructions for GPGPU cores can be generated at compile time by a shader compiler or automatically generated when executing programs written and compiled for single program multiple data (SPMD) or SIMT architectures. Multiple threads of a program can be configured for an SIMT execution model that can be executed via a single SIMD instruction. For example, eight SIMT threads that perform same or similar operations can be executed in parallel via a single SIMD8 logic unit.

Memory and cache interconnect 1568 can include an interconnect network that connects each functional unit of graphics multiprocessor 1534 to register file 1558 and to shared memory 1570. Memory and cache interconnect 1568 may be a crossbar interconnect that allows load/store unit 1566 to implement load and store operations between shared memory 1570 and register file 1558. register file 1558 can operate at a same frequency as GPGPU cores 1562, thus data transfer between GPGPU cores 1562 and register file 1558 can have very low latency. Shared memory 1570 can be used to enable communication between threads that execute on functional units within graphics multiprocessor 1534. Cache memory 1572 can be used as a data cache for example, to cache texture data communicated between functional units and texture unit 1536. Shared memory 1570 can also be used as a program managed cache. Threads executing on GPGPU cores 1562 can programmatically store data within shared memory in addition to automatically cached data that is stored within cache memory 1572.

A parallel processor or GPGPU as described herein may be communicatively coupled to host/processor cores to accelerate graphics operations, machine-learning operations, pattern analysis operations, and various general purpose GPU (GPGPU) functions. A GPU may be communicatively coupled to host processor/cores over a bus or other interconnect (e.g., a highspeed interconnect such as, but not limited to, PCIe or NVLink). An SoC may include a parallel processor or GPGPU as described herein, where said parallel processor or said GPGPU is performed on said SoC. A GPU may be integrated on a package or chip as cores and communicatively coupled to cores over an internal processor bus/interconnect internal to a package or chip. Regardless a manner in which a GPU is connected, processor cores may allocate work to such GPU in a form of sequences of commands/instructions contained in a work descriptor. GPU then may use dedicated circuitry/logic for efficiently processing these commands/instructions to perform any of the operations described above or elsewhere herein.

In at least one embodiment, graphics multiprocessor 1534 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

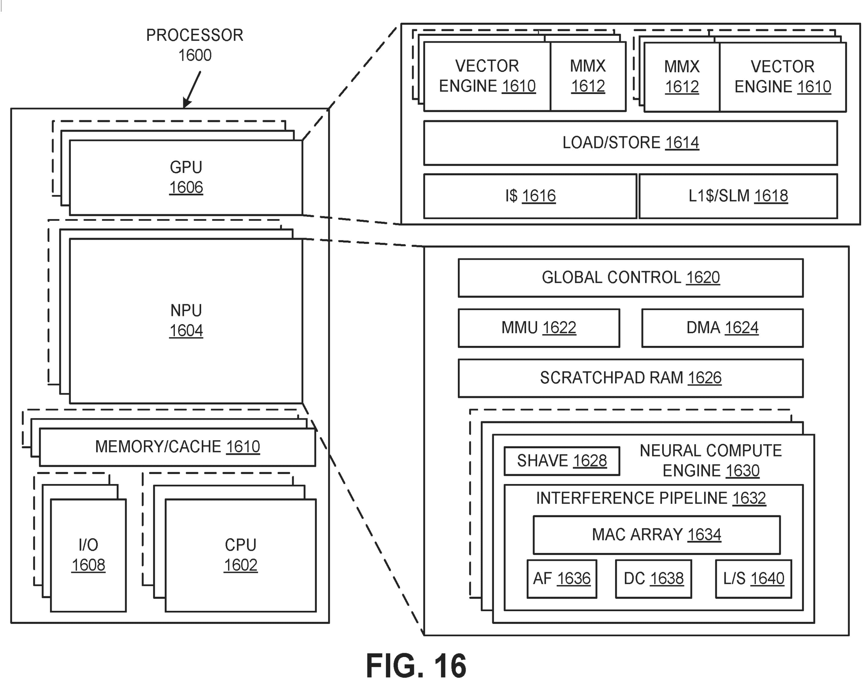

FIG. 16 shows a processor 1600, in accordance with at least one embodiment. Processor 1600 can include a processor with hybrid architecture (e.g., Lunar Lake or Meteor Lake) from Intel Corporation in Santa Clara, CA or another processor that shares at least some of the components described herein. Processor 1600 can include one or more Central Processing Unit(s) (CPU 1602), one or more Graphics Processing Unit(s) (GPU 1606), and/or one or more Neural Processing Unit(s) (NPU 1608) that can be, e.g., a dedicated AI accelerator that offloads artificial intelligence (AI) workloads from CPU 1602 and GPU 1606. Processor 1600 can use instructions that, if executed cause processor 1600 and/or any of its components to perform some or all of processes and techniques described elsewhere herein. Processor 1600 may include any number of memory and cache units 1610 to facilitate processing amongst different components of processor 1600. Memory and cache 1610 on processor 1600 may include one or more levels of cache (e.g., L1, L2, L3, and/or last-level cache) and high-bandwidth memory (e.g., HBM2e or HBM3) in any combination. With respect to processor 1600 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 1600 (e.g., in cache and/or memory). A result of API(s) can then be stored in storage within or outside of processor 1600, including registers, DRAM, flash, SRAM, cache, or other memory. One or more of APIs described herein can include a call.

Processor 1600 can include compute engines as CPUs 1602 and can include any number of cores, such as, but not limited to, up to 16 cores/22 threads. Cores in CPU 1602 can include P-cores (Performance), E- cores (Efficient) & LP-E cores (Low-power Efficient). Performance-cores can be used for low latency single-threaded, compute-intensive workloads, while Efficient-cores can be used for multi-threaded, less compute-intensive workloads. Low-power Efficient cores can be used for scalable multithreaded performance and offloading background instructions. P-cores can be used for single & limited threading performance, whereas E- and LP-E cores can be used for multi-threaded throughput and power efficiency.

GPU 1606 can include any number of graphics engines, such as, but not limited to, Intel^{®} Arc^{™} graphics engines (Xe LPG) with 8 Xe cores (up to 128 Execution Units or EUs). As shown in FIG. 16, GPU 1606 can include vector engines 1610 and matrix engines 1612, that, for example, can run FP, INT, and matrix operation instructions all at the same time or separately or in batches. GPU 1606 can include a load/store unit 1614, as well as other memory, such as, but not limited to, an instruction cache (I$) 1616 and L1 cache/subsystem local memory (SLM) 1618 that can, e.g., store instructions to perform any of the operations described above or elsewhere herein.

NPU 1604 can include one or more Intel^{®} AI Boost built-in neural processing unit(s) (NPUs). NPU 1604 can be enumerated to a host processor as an integrated PCIe device. NPU 1604 can include one or more (e.g., two) Neural Compute Engine (NCE) tiles 1630. Each tile can be configured with any combination of, but not limited to, (e.g., 2000) Multiply Accumulate (MAC) Engines 1634, a Post Processing Engine (not shown), a AI DSP Processor (not shown), and memory (2 MB of dedicated SRAM) per tile as shown in FIG. 16. For general compute needs, Neural Compute Engines 1630 can include interference pipeline 1632, activation function (AF) 1636, data conversion 1638, load/store 1640, and Streaming Hybrid Architecture Vector Engines (SHAVE) 1628 for high performance parallel computing, which can include DMA (Direct Memory Access) engines 1624 to shuttle data between system memory DRAM (Dynamic Random Access Memory) 1626 and a software managed cache. Built-in device MMU (Memory Management Unit) 1622 plus IOMMU (Input-Output Memory Management Unit) (not shown) can support multiple simultaneous hardware contexts and provide security isolation between execution contexts as per MCDM (Microsoft Compute Driver Model) architecture. Processor 1600 can also include a media unit (not shown) that is included on or separately from XCDs or other components of processor 1600 to enable video playback and video processing of compressed or non-compressed data, such using HEVC, AV1, VP9 and AVC HW accelerated decode support and HEVC, VP9 and AVC HW accelerated encode support.

A Intel^{®} Thread Director, which includes firmware that is built into processor 1600, can prioritize and manage distribution of workloads, sending instructions to optimized cores. For example, Thread Director can tie P-cores, E-cores and/or LP-E cores (described above) together with instruction-scheduling capabilities and ability to send less-demanding instructions to E-cores or LP-E cores. Intel^{®} Deep Learning Boost (Intel^{®} DL Boost) (not shown) can provide built in AI acceleration for training and inference workloads, and may include VNNI (for CPU) and DP4a (for GPU) instruction set support. This instruction set may be optimized with OpenVINO^{™} Toolkit and oneAPI to accelerate INT8 inferencing. A software stack, e.g., as described elsewhere herein, can be used to enable AI inference using OpenVINO^{™} toolkit. Processor 1600 can be configured to execute an application program, such as, but not limited to, a CUDA program.

In at least one embodiment, processor 1600 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

Processor 1600 can alternatively include a processor based on AI Engine Direct architecture from Qualcomm Corporation in Santa Clara, CA or another processor that shares at least some of the components described herein. that may include any number of NPUs, GPUs, CPUs and other related components, such as, but not limited to, NPU 1604 as a Hexagon NPU, GPU 1606 as a Adreno GPU, CPU 1602 as a Kryo or Qualcomm Oryon CPU, as well as a Qualcomm Sensing Hub (not shown) and a memory subsystem 1610, in any combination. Hexagon NPU 1604 can include a power rail a micro-tile inferencing unit, a hardware acceleration unit, a tensor unit, a scalar unit, and a vector unit (all not shown), which can have dedicated memory or share memory (e.g., cache or memory, such HBM3) for, e.g., storing instructions to perform any of the operations described above or elsewhere herein. Adreno GPU 1606 can provide graphics and parallel processing for AI in formats, such as, but not limited to, 32-bit floating point (FP32), 16-bit floating point (FP16), and 8-bit integer (INT8). Kryo or Qualcomm Oryon CPUs 1602 can perform AI workloads, and can handle contextualization for pervasive generative AI applications. CPU 1602 can also include an instruction fetch unit, a rename and retire unit, a memory management unit, a vector execution unit, an integer execution unit, and a load and store unit for processing and instruction management. With respect to processor 1600 and any of its components described above or elsewhere herein, one or more of APIs described herein can, for example, get compiled into instructions, which may be fetched by instruction fetch unit, decoded by a processor decoder or equivalents, scheduled (e.g., in order or out of order) for execution by a scheduler or equivalents, executed by execution logic or equivalents, reordered, and then retired by rename and retire unit. API(s) (and/or compiled instructions including API(s)) can be stored in any storage outside or inside of processor 1600 (e.g., in cache and/or memory). Any number of CPU cores 1602 may be included in any number of CPU cluster(s) that can be coupled to memory and/or cache, such as, but not limited to a shared L2 cache. Memory can be separate or shared, e.g., CPU clusters of CPU cores 1602 can couple to memory subsystem 1610 that can include fabric, system level cache and any number of memory management units that can, for example, read and write memory (e.g., DRAM). Qualcomm Sensing Hub (not shown) includes micro NPUs, a power rail, and traditional sensors (a gyrometer, accelerometer, even a barometer) with voice and data streams. Memory subsystem 1610 can include memory and cache on processor 1600, which may include one or more levels of cache (e.g., L1, L2, L3, and/or last-level cache) and high-bandwidth memory (e.g., HBM2e or HBM3) in any combination, e.g., for storing information and/or instructions to perform any of the operations described above or elsewhere herein. All or some of memory and/or cache in memory subsystem 1610 can be shared or used individually by any one or combinations of components (e.g., GPU 1606, NPU 1604, and CPU 1602) on processor 1600.

Qualcomm AI Engine 1600 may be programmed and controlled with an a software stack to perform some or all of the operations described herein, and include, e.g., a Qualcomm^{®} Neural Processing SDK for inferencing with versions for Android, Linux, and Windows. Developer libraries and services support programming languages, virtual platforms, and compilers. At a lower level of software stack, system software includes basic real-time operating system (RTOS), system interfaces, and drivers. Software stack supports different operating systems, including Android, Windows, Linux, and QNX, and deployment and monitoring infrastructure like Prometheus, Kubernetes, and Docker. For direct cross-platform access to GPU 1606, OpenCL and DirectML may be supported. For CPU 1602, a LLVM compiler infrastructure optimizations enable accelerated and efficient AI inference. With respect to Qualcomm AI Engine 1600 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of Qualcomm AI Engine 1600 (e.g., in cache and/or memory). A result of API(s) can then be stored in storage within or outside of Qualcomm AI Engine 1600, including registers, DRAM, flash, SRAM, cache, or other memory.

In at least one embodiment, processor 1600 or Qualcomm AI Engine 1600 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

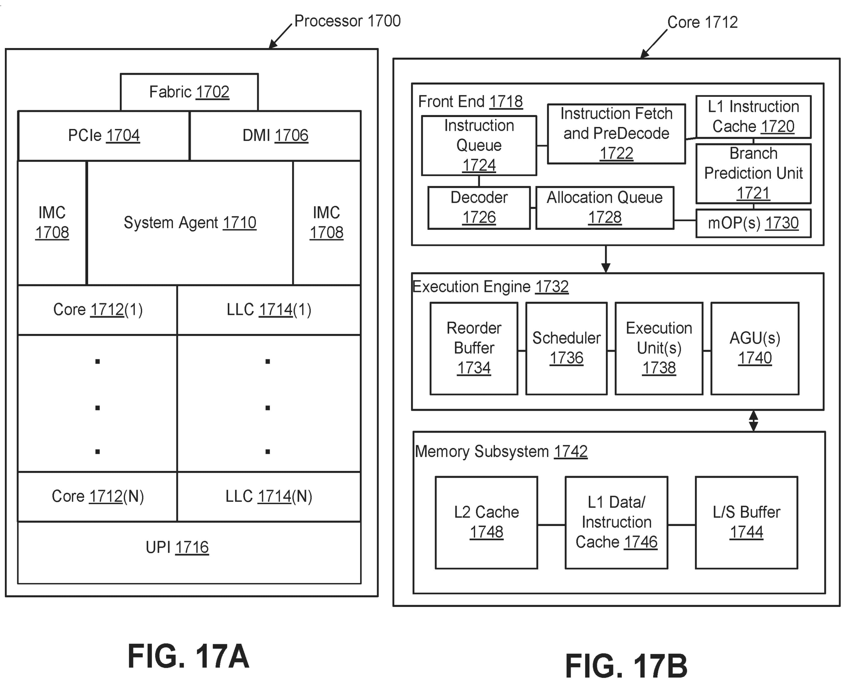

FIG. 17A illustrates a processor 1700, in accordance with at least one embodiment. Processor 1700 can include an processor with scalable family from Intel Corporation in Santa Clara, CA or another processor that shares at least some of the components described herein. Processor 1700 can include one or more cores 1712(1)-1712(N), where N is any integer greater than 1 that can perform the operations described elsewhere herein. Cores 1712(1)-1712(N) can be interlinked together using ring and/or mesh interconnects. With a mesh interconnects architecture, an array of vertical and horizontal communication paths may allow traversal from one core to another 1712(1)-1712(N) through a shortest path (hop on vertical path to correct row, and hop across horizontal path to correct column). For mesh interconnects, a die can house cores 1712(1)-1712(N) and can include a grid of converged mesh stops (CMS) that may be associated (e.g., 1:1) with cores 1712(1)-1712(N). Each core can be associated with one lower level cache (LLC) slice 1714(1)-1714(N), or cores 1712(1)-1712(N) can share cache, e.g., lower level cache. LLCs 1714(1)-1714(N) can be inclusive by incorporating blocks in higher level cache (e.g., L2 cache) or non-inclusive (having blocks that may be not present in higher level cache). Each core and LLC slice can include a Caching and Home Agent (CHA) (not shown) that can maintain cache coherency by providing scalability of resources across mesh interconnects for Intel^{®} Ultra Path Interconnect (Intel^{®} UPI 1716) cache coherency functionality. UPI 1716 can provide a coherent interconnect for scalable systems and can allow for multiple processors to share a single shared address space through links, such as, but not limited to, two or three UPI links per processor.

Processor 1700 can also include System Agent 1710 that can house and/or perform various functionalities, such as, but not limited to, memory management, display functions, and/or input/output (I/O) functions. For example, processor 1700 can include one or more integrated memory controller(s) (IMC) 1708. IMC 1708 can control and manage memory, such as, but not limited to, different memory types e.g., DDR ram, like DDR4 or others described elsewhere herein. System Agent 1710 can include a display controller (not shown) to support display(s). System Agent 1710 can also incorporate PCIe 1704 (e.g., up to 20 lanes of PCIe), e.g., that can connect with an external dedicated graphics hookup over DMI bus (e.g., Intel's DMI 3.0 bus) 1706. System Agent 1710 can include an Image Processing Unit (IPU) (not shown) which incorporates an image signal processor (ISP) on-die. Fabric 1702 can provide scalability for connecting to other nodes (e.g., processors, such as processor 1700), and can, for example, be used with Cornelis Networks, an element of Intel^{®} Scalable System Framework, that delivers the performance for high performance computing (HPC) workloads and the ability to scale to tens of thousands of nodes.

FIG. 17B illustrates components within core 1712, in accordance with at least one embodiment. Core 1712 can include front-end 1718, back-end or execution engine 1732, and memory subsystem 1742. Front-end 1718 can provide execution engine 1732 with operations (e.g., operations described elsewhere herein) by decoding instructions stored in memory. For example, front-end 1718 can include a micro-operations (µOps) cache path and/or a legacy path, along with branch prediction unit 1721 that can determine paths instructions. A legacy path for instructions may include fetching variable-length (e.g., x86) instructions from L1 instruction cache 1720 with instruction fetch and predecode 1722, queuing the instructions in instruction queue 1724, and decoding instructions using decoder 1726 into µOps that can be provided to allocation queue 1728. Alternatively, a µOPs cache path may include a cache containing already decoded µOps (µOps 1730) that can be sent to allocation queue 1728. Allocation queue 1728 can perform as an interface between front-end 1718 and execution engine 1732, and can provide instructions to execution engine 1732. One or more of API(s) described herein can, for example, get compiled into instructions that can be stored, processed, and executed by front-end 1718, execution engine 1732, and stored in memory subsystem 1742.

Execution engine 1732 can receive micro-operations into reorder buffer 1734, which can register allocation, rename, and retire µOPs. From reorder buffer, µOPs can be sent to scheduler 1736 that can be connected one or more different execution units 1738, which can be connected to address generation unit (AGU) 1740. Execution units 1738 can perform, e.g., basic arithmetic logic unit (ALU) operations, multiplication, division, and/or more complex operations, such as, but not limited to, various vector operations. Scheduler 1736 may manage queuing µOPs for one or more of execution units 1738 depending, e.g., on operations needed to be performed.

Memory subsystem 1742 can process load and store requests as well as ordering operations. For example, µOPs may relate to memory access (e.g. load and store), and those can be sent on dedicated scheduler ports that can perform those memory operations. Store and load operations, for example, can be sent to load and store buffer(s) 1744. Memory subsystem 1742 can also include shared or separate L1 data and instruction cache 1746, as well as L2 cache 1748 that can be used and shared by L1 data and instruction cache 1746. As described above for FIG. 17A, each core 1712 can be connected to a slice of a third level of cache (e.g., LLC 1714) that can be shared by all core 1712.

In at least one embodiment, processor 1700 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

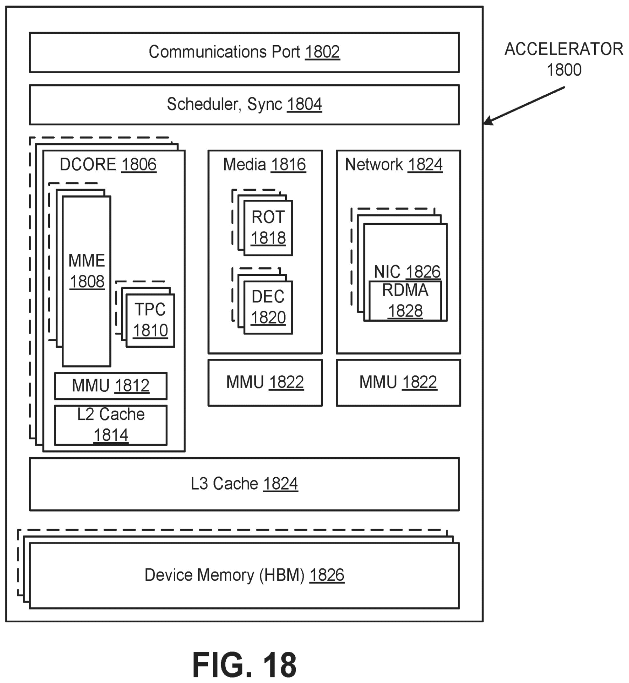

FIG. 18 illustrates an AI accelerator 1800, in accordance with at least one embodiment. Processor 1800 can include a processor with AI accelerator architecture from Intel Corporation in Santa Clara, CA or another processor that shares at least some of the components described herein. AI accelerator 1800 may use instructions that, if executed by AI accelerator 1800, cause AI accelerator 1800 to perform some or all of processes and techniques described elsewhere herein. For example, with respect to AI accelerator 1800 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of AI accelerator 1800 (e.g., in cache and/or memory). A result of API(s) can then be stored in storage within or outside of AI accelerator 1800, including registers, DRAM, flash, SRAM, cache, or other memory. AI accelerator 1800 may include one or more compute dies that can include homogeneous or heterogeneous processors. Compute dies may include one or more central processing units (CPU), one or more graphics processing units (GPU), or combinations of both.

In at least one embodiment, compute dies may include compute engines to perform AI computations. In at least one embodiment, AI accelerator 1800 compute dies may be split into any number of (e.g., four) clusters that may be referred to as a DCORE (Deep Learning Core) 1806 and contain any number of Matrix Multiplication Engines (MMEs) 1808, Tensor Processor Cores (TPCs) 1810, memory management unit 1812, and L2 Cache 1814, in any combination. MME(s) 1808 can perform operations that use Matrix Multiplication, like fully connected layers, convolutions and batched-General Matrix Multiplications (GEMMs). MMEs 1808 may be equipped with Multiply-Accumulate Units (MACs) (not shown) that, for example, may perform General Matrix Multiplication (GEMM) operations, such as, but not limited to, an AxB multiplication that involves generating tensor C[NxM] from two input tensors, A[NxK] and B[KxN]. MME(s) 1808 may be programmed with array dimensions, locations, data types, and various execution operands. MME(s) 1808 can retrieve tensors A and B from memory, pulling them into its streaming buffers for matrix multiplication to be performed in parallel by MACs. MME(s) 1808 may push tensor C back to memory upon completion. TPC(s) 1810 may include any number of scalar units for performing scalar operations, any number of vector units for performing vector operations, any number of register files or local memory units (e.g., a vector local memory), and load and store components for instructions, which can be coupled to memory or cache (e.g., HBM, L3 cache and/or L2 cache) (all not shown). TPCs can support different types of parallel processing, e.g., Very Long Instruction Word (VLIW) Single-Instruction Multiple-Data (SIMD) that supports data types, such as, but not limited to, FP32, BF16, FP16 & FP8 (both E4M3 and E5M2), UINT32, INT32, UINT16, INT16, UINT8 and INT8 datatypes. Any number of compute dies may be connected through an interconnect. An interconnect that can connect compute dies can be over an interposer bridge that, e.g., is transparent to software.

Memory on AI Accelerator 1800 may include one or more levels of cache (e.g., L1, L2, L3, and/or last-level cache) and high-bandwidth memory (e.g., HBM2e or HBM3) in any combination. Memory and/or cache systems can be unified or separate. Compute dies of AI accelerator 1800 may include on-die memory that includes one or more levels (e.g., two-levels) of cache. On-die SRAM or other memory described elsewhere herein can be used as a uniformly accessible last-level cache (L3) or split to slices of L2 cache that may be accessible to groups of MMEs 1808 and TPCs 1810. Using on-die memory as L2 or L3 cache can be fully configurable by software, which dynamically may decide per I/O tensor its optimal cache allocation. AI Accelerator 1800 may include one or more Memory Management Units (MMUs) 1822 for managing memory, such as allowing AI accelerator 1800 memory subsystem to operate in a virtual space when accessing VRAM.

AI accelerator 1800 may include a communications port (e.g., a PCIe Gen5 X16 port) 1802 for communicating with a host and Scheduling and Synchronization Unit 1804. AI accelerator 1800 may include Media Unit 1816 that may include any number or combinations of Media Decoder Engines (DECs) 1820 and Rotator Engines (ROT) 1818. AI accelerator 1800 may include a network unit 1824 that may include any number or combinations of network ports 1826 and accompanied RDMA Engine(s) 1828, L2 Cache, and memory (e.g., HBM2e or HBM3) stacks. AI accelerator 1800 can incorporate a programmable Control Path entity (not shown) to manage parallel and efficient execution of various engines. Control Path can include Submission Queues (SQs) that may be issued by runtime system, Completion Queues (CQs) that may be used for job completion reporting, a Programmable Scheduling Mechanism that may be utilized for instruction scheduling, a Programmable Hardware Synchronization Mechanism or 'Sync Manager (SM)' that may be used for hardware synchronization, a Programmable Interrupt Service Mechanism or 'Interrupt Manager (INTR)' that can enable passing of asynchronous events to drivers.

AI accelerator 1800 may include media decoding units that support Video Formats, such as, but not limited to, HEVC, Progressive H.264, SVC base layer, MVC, VP9, JPEG, Progressive JPEG. AI accelerator 1800 may support post processing of decoded media streams, such as, but not limited to, image down-scaling (resizing an image), vertical and horizontal scaling at different scaling ratios, Image up-scaling, Image cropping, bilinear scaling, and Lancos scaling. AI accelerator 1800 may implement two post processing channels per decoder unit, one with scalar (up and down) and one just to output the original image. AI accelerator 1800 may include a hardware rotator engine that performs the following transformations of an input image: 2D rotation, 3D rotation, Projection, distorting and undistorting images, resampling input data at user-defined coordinates, and rescaling.

RDMA 1828 over Converged Ethernet on AI accelerator 1800 may enable scaling from a single node (i.e., a single AI Accelerator 1800 to hundreds or thousands of nodes or AI Accelerators 1800). NW Subsystem 1824 can include an Intel^{®} Gaudi^{®} Communication Library (IGCL), a master conductor that orchestrates data movement, and a programable scheduling mechanism that can enable smooth activation of engines while maintaining instruction dependencies. A accelerator networking sub-system can include Gigabit Ethernet NIC ports 1826, a Layer2 MAC (not shown), and RDMA Engines 1828. AI Accelerator 1800 can include Aggregation Engines for performing summing activities. All engines in processor 1800 can operate in parallel, e.g., MME(s) 1808, TPC(s) 1810 and NIC(s) 1826 can all work at the same time. There can be dependency between operations running on different engines, e.g., output of one engine can be used as input of another engine, and/or MME, TPC and NIC can be scheduled to run in parallel. When one engine has completed its executing operation, another engine can be scheduled to start working on the next operation (immediately upon readiness of its inputs).

AI Accelerator 1800 can be operated and controlled using software layer 1828 that may include low-level components, such as, but not limited to, a graph compiler, an automatic kernel fuser and a library of precompiled kernels, as well as integration to AI ecosystems, such as, but not limited to, PyTorch, DeepSpeed, Hugging Face, vLLM, Ray and more, or as described elsewhere herein with respect to software and programming platforms. Software layer 1828 may include implementations of algorithms, such as, but not limited to, Paged Attention, Flash Attention and more. Software layer 1828 may generate optimized binary code that implements a given model topology, such as, but not limited to, performing operator fusion, data layout management, parallelization, pipelining and memory management, and graph-level optimizations.

In at least one embodiment, AI accelerator 1800 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

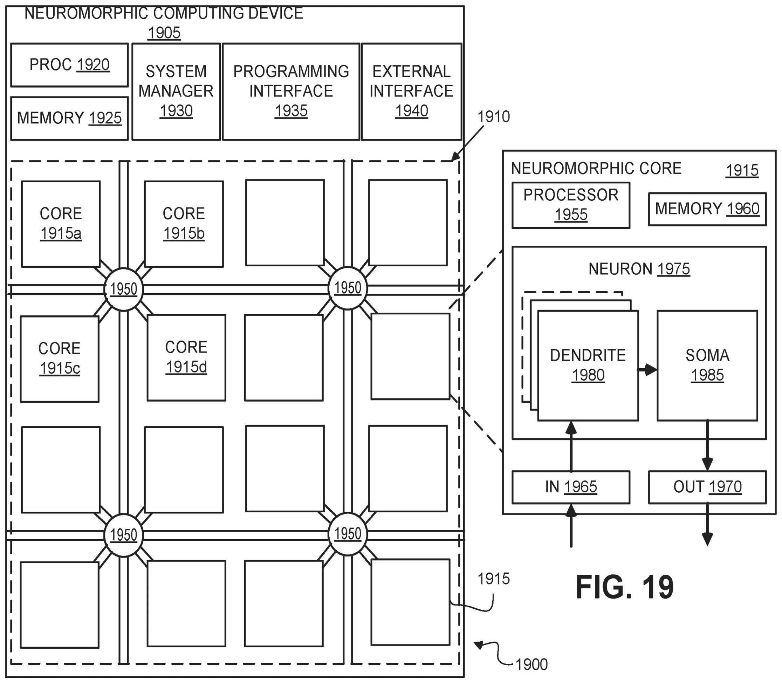

A neuromorphic computing system is described that adopts a multicore architecture where each core houses computing elements including neurons, synapses with on-chip learning capability, and local memory to store synaptic weights and routing tables. FIG. 19 is a simplified block diagram 1900 illustrating an example of at least a portion of such a neuromorphic computing device 1905, in accordance with at least one embodiment. Neuromorphic computing device 1905 can include a neuromorphic processor from Intel Corporation in Santa Clara, CA or another processor that shares at least some of the components described herein. As shown in this example, a device 1905 may be provided with a network 1910 of multiple neural network cores interconnected by an on-device network such that multiple different connections may be potentially defined between cores. For instance, a network 1910 of spiking neural network cores may be provided in device 1905 and may each communicate via short packetized spike messages sent from core to core over network channels. Each core (e.g., 1915) may possess processing and memory resources and logic to implement some number of primitive nonlinear temporal computing elements, such as, but not limited to, multiple (e.g., 1000+) distinct artificial neurons (referred to herein as "neurons"). For instance, each core may be capable of concurrently implementing multiple neurons such that neuromorphic cores may implement many multiples of neurons using device 1905. With respect to neuromorphic computing device 1905 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of neuromorphic computing device 1905 (e.g., in cache and/or memory). A result of API(s) can then be stored in storage within or outside of neuromorphic computing device 1905, including registers, DRAM, flash, SRAM, cache, or other memory equivalents.

Continuing with the example of FIG. 19, neuromorphic computing device 1905 may additionally include processor 1920 and system memory 1925 to implement one or more components to manage and provide functionality of neuromorphic computing device 1905. For instance, system manager 1930 may be provided to manage global attributes and operations of neuromorphic computing device 1905 (e.g., attributes affecting network of cores 1910, multiple cores in network 1910, interconnections of neuromorphic computing device 1905 with other devices, manage access to global system memory 1925, among other potential examples). In one example, system manager 1930 may manage the definition and provisioning of a specific routing tables to various routers in network 1910, orchestration of a network definition and attributes (e.g., weights, decay rates, etc.) to be applied in network 1910, core synchronization and time multiplexing management, routing of inputs to appropriate cores, among other potential functions.

As another example, neuromorphic computing device 1905 may additionally include programming interface 1935 through which a user or system may specify a neural network definition to be applied (e.g., through a routing table and individual neuron properties) and implemented by mesh 1910 of neuromorphic cores. A software-based programming tool may be provided with or separate from neuromorphic computing device 1905 through which a user may provide a definition for a particular neural network to be implemented using network 1910 of neuromorphic cores. Programming interface 1935 may take an input of a programmer to then generate corresponding routing tables and populate local memory of individual neuromorphic cores (e.g., 1915) with specified parameters to implement a corresponding, customized network of artificial neurons implemented by neuromorphic cores 1915.

In some cases, neuromorphic computing device 1905 may advantageously interface with and interoperate with other devices, including general purpose computing devices, to realize certain applications and use cases. Accordingly, external interface logic 1940 may be provided in some cases to communicate (e.g., over one or more defined communication protocols) with one or more other devices. An external interface 1940 may be utilized to accept input data from another device or external memory controller acting as a source of input data. External interface 1940 may be additionally or alternatively utilized to allow results or output of computations of a neural network implemented using neuromorphic computing device 1905 to be provided to another device (e.g., another general purpose processor implementing a machine learning algorithm) to realize additional applications and enhancements, among other examples.

As shown in FIG. 19, network 1910 of multiple neural network cores interconnected by an on-device network is shown illustrating a portion of a network fabric interconnecting multiple neuromorphic cores (e.g., 1915 a-d). For instance, a number of neuromorphic cores (e.g., 1915 a-d) may be provided in a mesh, with each core being interconnected by a network including a number of routers (e.g., 1950). In one implementation, each neuromorphic core (e.g., 1915 a-d) may be connected to a single one of routers (e.g., 1950) and routers may be connected to at least one other router (as shown at 1910 in FIG. 19). As an example, in one particular implementation, four neuromorphic cores (e.g., 1915 a-d) may be connected to a single router (e.g., 1950) and each of routers 1950 may be connected to two or more other routers to form a manycore mesh, allowing each neuromorphic core to interconnect with each other neuromorphic core in neuromorphic computing device 1905. Moreover, as each neuromorphic core may be configured to implement multiple distinct neurons, router network of neuromorphic computing device 1905 may similarly enable connections, or artificial synapses (or, simply, "synapses"), to be defined between any two of potentially many (e.g., 30,000+) neurons defined using network of neuromorphic cores 1910 provided in neuromorphic computing device 1905.

FIG. 19 shows a block diagram illustrating internal components of one example implementation of neuromorphic core 1915. In one example, a single neuromorphic core may implement some number of neurons (e.g. 1024) that share architectural resources of neuromorphic core 1915 in a time-multiplexed manner. In one example, each neuromorphic core 1915 may include processor block 1955 capable of performing arithmetic functions and routing in connection with the realization of a digitally implemented artificial neuron, such as, but not limited to, explained herein. Each neuromorphic core 1915 may additionally provide local memory in which a routing table may be stored and accessed for a neural network, accumulated potential of each soma of each neuron implemented using core 1915 may be tracked, parameters of each neuron implemented by core may 1915 be recorded, among other data and usage. Components, or architectural resources, of neuromorphic core 1915 may further include input interface 1965 to accept input spike messages generated by other neurons on other neuromorphic cores and output interface 1970 to send spike messages to other neuromorphic cores over mesh network 1910. In some instances, routing logic for neuromorphic core 1915 may be at least partially implemented using output interface 1970. Further, in some cases, core (e.g., 1915) may implement multiple neurons within an example SNN and some of these neurons may be interconnected. In such instances, spike messages sent between neurons hosted on core 1915 may forego communication over routing fabric of neuromorphic computing device 1905 and may instead by managed locally at particular neuromorphic core 1915.

Each neuromorphic core may additionally include logic to implement, for each neuron 1975, artificial dendrite 1980 and artificial soma 1985 (referred to herein, simply, as "dendrite" and "soma" respectively). Dendrite 1980 may be a hardware-implemented process that receives spikes from network 1910. Soma 1985 may be a hardware-implemented process that receives each dendrite's accumulated neurotransmitter amounts for the current time and evolves each dendrite and soma's potential state to generate outgoing spike messages at the appropriate times. Dendrite 1980 may be defined for each connection receiving inputs from another source (e.g., another neuron). In one implementation, dendrite process 1980 may receive and handle spike messages as they serially arrive in time-multiplexed fashion from network 1910. As spikes are received, neuron's activation (tracked using soma 1985 (and local memory 1960)) may increase. When neuron's activation exceeds a threshold set for neuron 1975, neuron 1975 may generate a spike message that is propagated to a fixed set of fanout neurons via output interface 1970. Network distributes spike messages to all destination neurons, and in response those neurons, in turn, may update their activations in a transient, time-dependent manner, and so on, potentially causing the activation of some of these destination neurons to also surpass corresponding thresholds and trigger further spike messages, as in real biological neural networks.

As noted above, neuromorphic computing device 1905 may reliably implement a spike-based model of neural computation. Such models may also be referred to as Spiking Neural Networks (SNNs). In addition to neuronal and synaptic state, SNNs also incorporate the concept of time. For instance, in an SNN, communication occurs over event-driven action potentials, or spikes, that convey no explicit information other than the spike time as well as an implicit source and destination neuron pair corresponding to the transmission of the spike. Computation occurs in each neuron as a result of the dynamic, nonlinear integration of weighted spike input. In some implementations, recurrence and dynamic feedback may be incorporated within an SNN computational model. Further, a variety of network connectivity models may be adopted to model various real world networks or relationships, including fully connected (all-to-all) networks, feed-forward trees, fully random projections, "small world" networks, among other examples. A homogeneous, two-dimensional network of neuromorphic cores, such as, but not limited to, shown in the example of FIG. 19 may advantageously supports all of these network models. As some or all cores of neuromorphic computing device 1905 may be connected, some or all neurons defined in cores may be therefore also fully connected through some number of router hops. Neuromorphic computing device 1905 may further include fully configurable routing tables to define a variety of different neural networks by allowing each core's neurons to distribute their spikes to any number of cores in mesh 1910 to realize fully arbitrary connectivity graphs.

In an improved implementation of a system capable of supporting SNNs, such as, but not limited to, a very large scale integration (VLSI) hardware device illustrated in the example of FIG. 19, high speed and reliable circuits may be provided to implement SNNs to model information processing algorithms as employed by a brain, but in a more programmable manner. For instance, while a biological brain can only implement a specific set of defined behaviors, as conditioned by years of development, a neuromorphic processor device may provide a capability to rapidly reprogram all neural parameters. Accordingly, a single neuromorphic processor may be utilized to realize a broader range of behaviors than those provided by a single slice of biological brain tissue. This distinction may be realized by adopting a neuromorphic processor with neuromorphic design realizations that differ markedly from those of neural circuits found in nature.

As an example, a neuromorphic processor may utilize time-multiplexed computation in both a spike communication network and neuron machinery of neuromorphic computing device 1905 to implement SNNs. Accordingly, physical circuitry of neuromorphic computing device 1905 may be shared among many neurons to realize higher neuron density. With time multiplexing, a network can connect N cores with O(N) total wiring length, whereas discrete point-to-point wiring would scale as O(N²), realizing a significant reduction in wiring resources to accommodate planar and non-plastic VLSI wiring technologies, among other examples. In neuromorphic cores, time multiplexing may be implemented through dense memory allocation, for instance, using Static Random Access Memory (SRAM), with shared buses, address decoding logic, and other multiplexed logic elements. State of each neuron may be stored in processor's memory, with data describing each neuron state including state of each neuron's collective synapses, all currents and voltages over its membrane, among other example information (such as, but not limited to, configuration and other information).

A neuromorphic processor may adopt a "digital" implementation that diverts from other processors adopting more "analog" or "isomorphic" neuromorphic approaches. For instance, a digital implementation may implement integration of synaptic current using digital adder and multiplier circuits, as opposed to analog isomorphic neuromorphic approaches that accumulate charge on capacitors in an electrically analogous manner to how neurons accumulate synaptic charge on their lipid membranes. Accumulated synaptic charge may be stored, for instance, for each neuron in local memory of a corresponding core. Further, at an architectural level of an example digital neuromorphic processor, reliable and deterministic operation may be realized by synchronizing time across a network of cores such that any two executions of a design, given same initial conditions and configuration, will produce identical results. Asynchrony may be preserved at a circuit level to allow individual cores to operate as fast and freely as possible, while maintaining determinism at a system level. Accordingly, a notion of time as a temporal variable may be abstracted away in neural computations, separating it from a "wall clock" time that the hardware utilized to perform the computation. Accordingly, in some implementation, a time synchronization mechanism may be provided that globally synchronizes neuromorphic cores at discrete time intervals. A synchronization mechanism allows neural computation to complete as fast as circuitry allows, with a divergence between run time and biological time that a neuromorphic system models.

In operation, neuromorphic computing device 1905 may begin in an idle state with all neuromorphic cores inactive. As each core asynchronously cycles through its neurons, it generates spike messages that a mesh interconnect routes to appropriate destination cores containing all destination neurons. Implementation of multiple neurons on a single neuromorphic core may be time-multiplexed, and a time step may be defined in which all spikes involving multiple neurons may be processed and considered using shared resources of a corresponding core. As each core finishes servicing its neurons for a respective time step, cores may, in some implementations, communicate (e.g., using a handshake) with neighboring cores using synchronization messages to flush a mesh of all spike messages in flight, allowing cores to safely determine that all spikes have been serviced for a time step. At that point all cores may be considered synchronized, allowing them to advance their time step and return to an initial state and begin a next time step.

Given this context, and as introduced above, a device (e.g., 1905) implementing a mesh 1910 of interconnected neuromorphic cores may be provided, with core 1915 implementing potentially multiple artificial neurons capable of being interconnected to implement an SNN. Each neuromorphic core (e.g., 1915) may provide two loosely coupled asynchronous processes: an input dendrite process (e.g., 1980) that receives spikes from network 1910 and applies them to an appropriate destination dendrite compartments at the appropriate future times, and output soma process (e.g., 1985) that receives each dendrite compartment's accumulated neurotransmitter amounts for the current time and evolves each dendrite and soma's membrane potential state, generating outgoing spike messages at appropriate times (e.g., when a threshold potential of a soma has been reached). Note that, from a biological perspective, dendrite and soma names used here only approximate a role of these functions and should not be interpreted too literally.

In at least one embodiment, neuromorphic computing device 1905 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

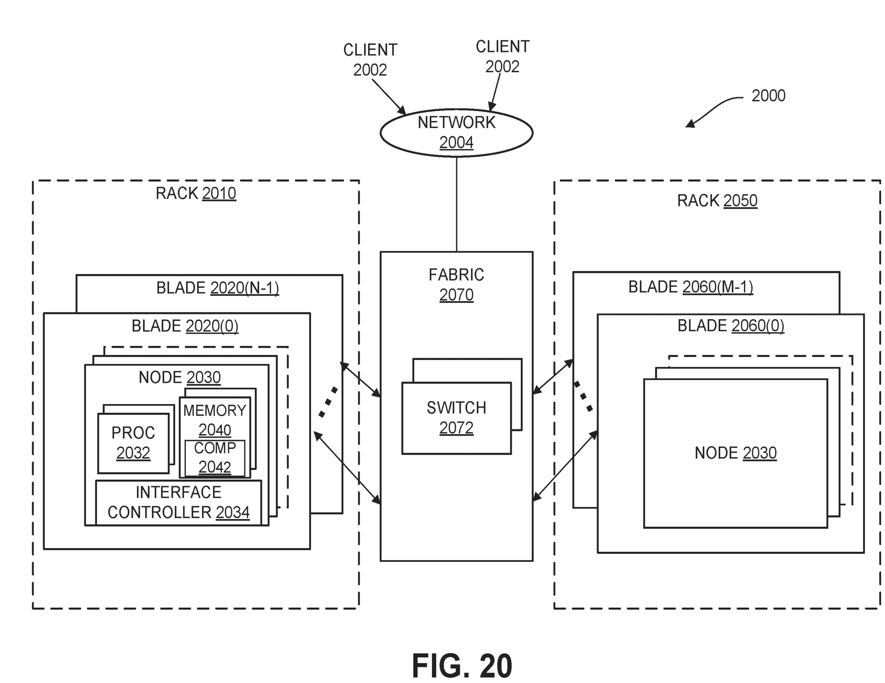

FIG. 20 is a block diagram of an embodiment of a multi-node network in which remote memory computation can be implemented, in accordance with any embodiment. System 2000 may represent a network of nodes described herein that can, e.g., be used to perform some or all of the operations described herein. System 2000 can represent a data center. System 2000 may represent a server farm. System 2000 may represent a data cloud or a processing cloud. System 2000 can represent a supercomputer. System 20 may include tens, hundreds, or thousands of nodes. Nodes of system 2000 may include processors, such as, but not limited to, central processing units (CPUs), graphics processing units (GPUs), or any combination of processors described herein, such as, but not limited to, other processors in FIGS. 14-26. With respect to any of processors in system 2000 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of a processor or node (e.g., in cache and/or memory). A result of API(s) can then be stored in storage within or outside of a processor or node, including registers, DRAM, flash, SRAM, cache, or other memory equivalents. System 2000 may include over nine thousand nodes, with each node including two Intel Xeon Max processors, six Intel Max series GPUs and a unified memory architecture, such as, but not limited to, that used in Intel Aurora Supercomputer from Intel Corporation in Santa Clara, CA or another supercomputer that shares at least some of the components described herein.

One or more clients 2002 make requests over network 2004 to system 2000. Network 2004 represents one or more local networks, or wide area networks, or a combination. Clients 2002 can be human or machine clients, which generate requests for execution of operations by system 2000. System 2000 executes applications or data computation instructions requested by clients 2002.

System 2000 can include one or more racks, which represent structural and interconnect resources to house and interconnect multiple computation nodes. Rack 2010 can include multiple nodes 2030. Rack 2010 may host multiple blade components 2020(0) to 2020(N-1), where N is an integer greater than or equal to 2. Hosting can refer to providing power, structural or mechanical support, and interconnection. Blades 2020(0) to 2020(N-1) can refer to computing resources on printed circuit boards (PCBs), where a PCB houses hardware components for one or more nodes 2030. Blades 2020(0) to 2020(N-1) may or may not include a chassis or housing or other "box" other than that provided by rack 2010. Blades 2020(0) to 2020(N-1) may include housing with exposed connector to connect into rack 2010. System 2000 may or may not include rack 2010, and each blade (e.g., 2020(0)) can include a chassis or housing that can stack or otherwise reside in close proximity to other blades and allow interconnection of nodes 2030. System 2000 may include 10,624 compute blades, which include 63,744 Intel Max Series GPUs and 21,248 Intel Xeon Max CPUs across 166 racks.

System 2000 can include fabric 2070, which represents one or more interconnectors for nodes 2030. Fabric 2070 can include multiple switches 2072 or routers or other hardware to route signals among nodes 2030. Additionally, fabric 2070 can couple system 2000 to network 2004 for access by clients 2002. In addition to routing equipment, fabric 2070 can be considered to include cables or ports or other hardware equipment to couples nodes 2030 together. Fabric 2070 can have one or more associated protocols to manage routing of signals through system 2000. A protocol or protocols is at least partly dependent on hardware equipment used in system 2000.

As illustrated, rack 2010 can include N blades (e.g., 2020(0) to 2020(N-1)). In addition to rack 2010, system 2000 can include rack 2050. As illustrated, rack 2050 may include M blades (e.g., 2060(0) to 2060(M-1)). M is not necessarily the same as N; thus, it will be understood that various different hardware equipment components could be used, and coupled together into system 2000 over fabric 2070. Blades 2060(0) to 2060(M-1) can be the same or similar to blades 2020(0) to 2020(N-1). Nodes 2030 can be any type of node as described herein, and may not be necessarily all the same type of node. System 2000 is not limited to being homogenous, nor is it limited to not being homogenous.

A node in blade 2020(0) is illustrated in detail. However, other nodes in system 2000 can be the same or similar. At least some nodes 2030 may be computation nodes, with processor 2032 and memory 2040. A computation node refers to a node with processing resources (e.g., one or more processors) that executes an operating system and can receive and process one or more instructions. At least some nodes 2030 can include storage server nodes with a server as processing resources 2032 and memory 2040. A storage server refers to a node with more storage resources than a computation node, and rather than having processors for execution of instructions, a storage server includes processing resources to manage access to storage nodes within a storage server.

Node 2030 can include interface controller 2034, which can represent logic to control access by node 2030 to fabric 2070. Logic can include hardware resources to interconnect to physical interconnection hardware. Logic can include software or firmware logic to manage interconnection. Interface controller 2034 can include a host fabric interface, which can include a fabric interface in accordance with any embodiment described herein.

Node 2030 may include memory subsystem 2040. Memory 2040 can include memory computation resources (comp) 2042, which represent one or more capabilities by memory 2040 to perform memory computations. System 2000 enables remote memory operations, such as, but not limited to, the operations described elsewhere herein. Thus, nodes 2030 can request memory computations by remote nodes, where data for computation remains local to an executing node instead of being sent over fabric 2070 or instead of being sent from memory to a fabric interface. In response to execution of memory computation, executing node can provide a result to a requesting node.

Processor 2032 can include one or more separate processors. Each separate processor can include a single processing unit, a multicore processing unit, or a combination. A processing unit can include a primary processor such as, but not limited to, a CPU (central processing unit), a peripheral processor such as, but not limited to, a GPU (graphics processing unit), or a combination. Memory 2040 can be or include memory devices and a memory controller.

Reference to memory devices can apply to different memory types. Memory devices generally refer to volatile memory technologies. Volatile memory is memory whose state (and therefore data stored on it) is indeterminate if power is interrupted. Nonvolatile memory refers to memory whose state is determinate even if power is interrupted. Dynamic volatile memory can refresh data stored in a device to maintain state. One example of dynamic volatile memory includes DRAM (dynamic random access memory), or some variant such as, but not limited to, synchronous DRAM (SDRAM). A memory subsystem as described herein may be compatible with a number of memory technologies, such as, but not limited to, DDR3 (dual data rate version 3, original release by JEDEC (Joint Electronic Device Engineering Council) on June 27, 2007, currently on release 21), DDR4 (DDR version 4, initial specification published in September 2012 by JEDEC), DDR4E (DDR version 4, extended, currently in discussion by JEDEC), LPDDR3 (low power DDR version 3, JESD209-3B, Aug 2013 by JEDEC), LPDDR4 (LOW POWER DOUBLE DATA RATE (LPDDR) version 4, JESD209-4, originally published by JEDEC in August 2014), WIO2 (Wide I/O 2 (WideI02), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5 (currently in discussion by JEDEC), HBM2 (HBM version 2), currently in discussion by JEDEC), or others or combinations of memory technologies, and technologies based on derivatives or extensions of such specifications.

In addition to, or alternatively to, volatile memory, in one embodiment, reference to memory devices can refer to a nonvolatile memory device whose state is determinate even if power is interrupted. In one embodiment, nonvolatile memory device is a block addressable memory device, such as, but not limited to, NAND or NOR technologies. Thus, a memory device can also include a future generation nonvolatile devices, such as, but not limited to, a three dimensional crosspoint (3DXP) memory device, other byte addressable nonvolatile memory devices, or memory devices that use chalcogenide phase change material (e.g., chalcogenide glass). In one embodiment, a memory device can be or include multi-threshold level NAND flash memory, NOR flash memory, single or multi-level phase change memory (PCM) or phase change memory with a switch (PCMS), a resistive memory, nanowire memory, ferroelectric transistor random access memory (FeTRAM), magnetoresistive random access memory (MRAM) memory that incorporates memristor technology, or spin transfer torque (STT)-MRAM, or a combination of any of the above, or other memory.

In at least one embodiment, system 2000 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

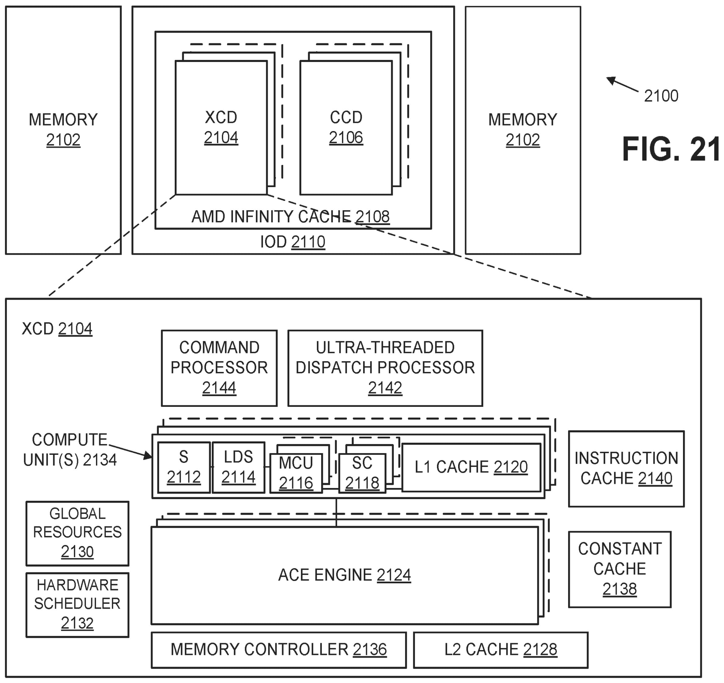

FIG. 21 illustrates accelerated processing unit 2100, in accordance with at least one embodiment. Accelerated processing unit 2100 can include a processor based on CDNA architecture from AMD Corporation in Santa Clara, CA or another processor that shares at least some of the components described herein. Accelerated processing unit 2100 can include one or more accelerator complex dies (XCDs) 2104 for performing operations described elsewhere herein, such as, but not limited to, graphics processing and/or parallel processing as well as computations with instruction-level parallelism, including support for a broad range of precisions (INT8, FP8, BF16, FP16, TF32, FP32, and FP64) and sparse matrix data (i.e. sparsity). XCDs may, in some instances, be referred to as Graphics Compute Dies (GCDs). Accelerated processing unit 2100 can include one or more complex compute dies (CCDs) 2106 for performing operations described elsewhere herein, such as, but not limited to, those operations performed by host processors. CCDs may, in some instances, be referred to as core complexes or CCXs, such as, but not limited to, CCXs used in AMD Ryzen processors. XCDs and CCDs can share any type of cache or memory (e.g., one or more memory units 2102), or have cache or memory allocated to each XCD or CCD or groups of XCDs or CCDs. For example, on-package AMD Infinity Fabric connects XCDs and CCD into shared AMD Infinity Cache 2108 and, in some embodiments, high-bandwidth memory (e.g., HMB3). Accelerated processing unit 2100 can include an AMD MI300a processor that includes three CPU chiplets (or CCDs) and six accelerator chiplets (XCDs) on top of four input-output dies (IODs) that may be layered on a piece of silicon that links them together (e.g., via AMD Infinity Fabric) to eight stacks of high-bandwidth DRAM that ring a superchip. An AMD MI300x processor substitutes CCDs for two more XCDs, for an accelerator-only system.

Accelerated processing unit 2100 can include one or more input/output (I/O) interfaces. For example, XCDs 2104 and CCDs 2106 can be together on one or more input-output dies (IODs) 2110 that can include one or more I/O interfaces. IODs 2110 can include of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 2170. I/O interfaces from IODs 2110 can also be used for connected one or more accelerated processing units 2100, e.g., in a server architecture.

Accelerated processing unit 2100 can include one or more memory units 2102 for storing instructions and other information used to perform operations described elsewhere herein. Memory units 2102 can include any volatile memory, such as, but not limited to, memory types described elsewhere herein and can include, e.g., high-bandwidth memory (e.g., HMB3) or high-bandwidth DRAM. Memory associated with accelerated processing unit 2100 (e.g., memory units 2102) can include system memory that can be used, for example, for commands, instructions and constants, and inputs and outputs. Memory units 2102 can also include device memory that can be used as storage and, for example, for commands, instructions and constants, and inputs and outputs, as return buffer(s) and for private data. Memory units 2102 can be linked to one or more IODs 2110. L1 cache 2120 starts a memory hierarchy that includes shared L2 cache 2128, e.g., within XCDs. AMD Infinity Cache^{™}, which is a last level cache (LLC) located on an active I/O die (IOD). CCDs 2106 and XCDs 2104 may have separate or shared memory. AMD Infinity Architecture and AMD Infinity Fabric^{™} technology can enable coherent, high-throughput unification of GPU and CPU chiplet technologies (e.g., XCDs, CCDs, and/or CCXs) with memory (e.g., stacked HBM3 memory) in single devices and across multi-device platforms.

As shown in FIG. 21, an XCD 2104 can include a shared set of global resources 2130, which can include hardware scheduler 2132 and Asynchronous Compute Engines (ACE) 2124 that send instructions (e.g., compute shader workgroups) to Compute Units (CUs or cores) 2134. ACEs 2124 (e.g., four) can be each associated with CUs 2134 (e.g., 40 CUs), and some of CUs 2134 can be disabled for yield management. CUs 2134 can have dedicated cache or share cache (e.g., L2 cache) 2128 that may be used to coalesce all memory traffic for a die. CUs 2134 can include threaded and parallel processor cores including instruction fetching and scheduling with Scheduler (S) 2112, matrix core unit (MCU) 2116 and shader core (SC) 2118 (e.g., execution units for scalar, vector and matrix data types), as well as load/store pipelines with an L1 cache 2120 and Local Data Share (LDS) 2114. Local data share can include, for example, a scratch RAM with built-in arithmetic capabilities that allow data to be shared between threads in a workgroup. An instruction cache 2140 (e.g., for storing and providing instructions for performing operations described elsewhere herein) and a constant cache 2138 can be connected to one or more CUs and can be shared between two CUs. Matrix cores 2116 can process a variety of data types, such as, but not limited to, INT8, FP8, FP16, BF16 and TF32 data types. Accelerated processing unit 2100 can include compute units 2134 that may be arranged in an array format, e.g., as a data-parallel-processor (DPP) array. Ultra-threaded dispatch processor 2142 can communicate with compute units 2134, and command processor 2144 can read commands that a host has written to memory-mapped registers in a system-memory address space (not shown). Command processor 2144 can send hardware-generated interrupts to a host processor (e.g., a CCD) when a command is completed. Memory controller 2136 can also have direct access to all device memory and host-specified areas of system memory. To satisfy read and write requests, memory controller 2136 can perform functions of a direct-memory access (DMA) controller, including computing memory-address offsets based on a format of requested data in memory. For example, one or more of APIs described herein can, for example, get compiled into instructions that can be stored in instruction cache 2140 and then fetched by instruction fetch logic in processor 2140, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2100 (e.g., in cache and/or memory). A result of API(s) can then be stored in storage within or outside of processor 2100, including registers, DRAM, flash, SRAM, cache, or other memory equivalents.

An application can include a program running on a host processor (e.g., a CCD) and programs, called kernels, running on one or more XCDs. Programs can be controlled by host commands that set internal base-address and other configuration registers, specify a data domain on which accelerated processing unit 2100 can operate, invalidate and flush caches on accelerated processing unit 2100, and cause accelerated processing unit 2100 to begin execution of a program. Kernels can be referred to as programs executed by accelerated processing unit 2100. A kernel can be executed independently on every work item, or as groups of work-items that can be referred to as a wavefront, which can execute a kernel on all work-items in a group (e.g., 64) in one pass. Compute units 2134 can include a scalar arithmetic logic unit (ALU), which can operates on one value per wavefront (common to all work items), a vector ALU, which can operate on unique values per work-item, a local data share 2114, which can allow work-items within a workgroup to communicate and share data, a scalar memory (not shown), which can transfer data between scalar general-purpose registers (SGPRs) and memory through a cache, and vector memory, which can transfer data between vector general-purpose registers (VGPRs) and memory, including sampling texture maps. Kernel control flow can be handled using scalar ALU instructions, which can includes if/else, branches and looping. Scalar ALU (SALU) and memory instructions can work on an entire wavefront and operate on one or more SGPRs. Vector memory and ALU instructions can operate on all work-items in a wavefront at one time.

In at least one embodiment, accelerated processing unit 2100 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

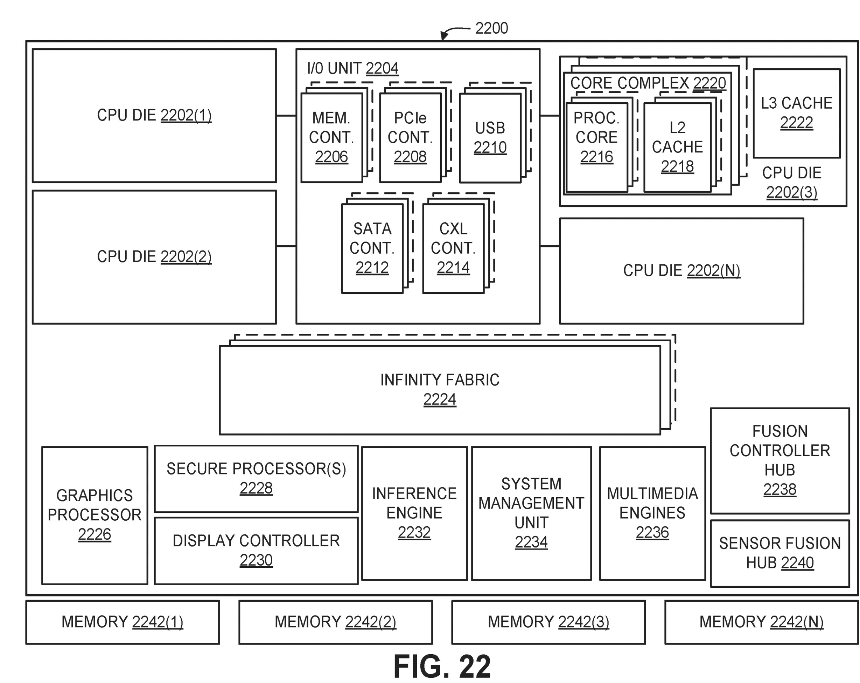

FIG. 22 illustrates a processor 2200, such as, but not limited to, a processor based on a Zen architecture (such as, e.g., Zen 1, 2, 3, 4, 5 or other) from AMD Corporation in Santa Clara, CA or another processor that shares at least some of the components described herein. Processor 2200 includes one or more CPU dies 2202(1)-2202(N), where N is any integer greater than 1. CPU die 2202 can include any number of processor cores 2216 (e.g., to perform any of the operations described elsewhere herein) and any number of cache memories (e.g., to store instructions and other information to perform any of the operations described elsewhere herein), in any combination. For example, L2 Cache units 2218 can be coupled to processor core(s) 2216, which can share and/or couple individually to L2 Cache units 2218. Processor cores 2216 can couple to L3 cache 2222 individually and/or share L3 Cache, which can be a lowest level cache (LLC) 2222 for access to data and other information used by processor cores 2216. One or more processor cores 2216 and one or more L2 Cache units 2218 can be included in a core complex (CCX) 2220 that can include (e.g., a 32 MB) shared cache (e.g., L3 cache 2222). Core complex 2220 can be fabricated onto a die (CCD or CPU die) 2202. For example, up to 12 core complexes 2220 can be configured into a processor along with 8 CPU dies 2202 to provide up to 96 processor cores 2216 for processor 2200. A 'Zen 4c' core complex 2220, for example, can include up to eight cores 2216 and a shared 16 MB L3 cache 2222. Two of these core complexes 2220 can be combined onto a single CPU die 2202 for 16 cores per die and a total of 32 MB of L3 cache 2222 per die. Up to eight of CPU dies 2202 may be combined with an I/O unit 2204 to provide CPUs with up to 128 processor cores 2216. Up to four 'Zen 4c' dies described above can be combined to provide CPUs with up to 64 processor cores 2216.

Processor 2200 can include a variety of configurations for input/output operations that are described further herein. I/O unit 2204 can include one or more memory controllers 2206 that can manage memory usage (e.g., DDR5 memory) for processor 2200. I/O unit 2204 may include one or more SATA disk controllers for managing storage 2212 and one or more Compute Express Link (CXL^{™}) 1.1+ memory controllers 2214 that can provide CPU-to-device and CPU-to-memory connections and can be flexibly assigned to specific functions at server design time. I/O unit 2204 may include PCIe controller 2208 for connecting peripherals and other components connected to processor 2200. I/O unit 2204 may include USB ports 2210 for connecting to other components separate from processor 2200. CPU dies 2202 can support any number of connections, e.g., one or two connections, to I/O unit 2204. As shown, I/O unit 2204 can include components described further herein, and I/O unit 2204 can be a I/O die that houses several different components. Memory controller 2206, PCIe controller 2208, USB ports 2210, SATA controller 2212, and/or CXL controller 2214 can be integrated anywhere within processor 2200 either separately or in any groups or combinations thereof.

Processor 2200 can include Infinity Fabric 2224 interconnects (which can be similar to or based on PCIe architectures) that can provide connections among CPUs (e.g., CPU dies 2202(1)-2202(N)), graphics processor(s) 2226, inference engine(s) 2232, and other components in a multi-chip architecture, such as secure processor(s) 2228 and I/O unit 2204. One or more AMD Infinity Fabric^{™} interconnects 2210 can connect to CPU dies 2202(1)-2202(N) and serve as a connection that is used between CPUs. One or more Infinity Fabric connections 2210 can connect each CPU die 2202 to I/O unit 2210.

In at least one embodiment, processor 2200 can include central processing units (CPUs) and other associated hardware and software described above and further herein. Processor 2200 can also include graphics processor(s) 2226. Graphics processor 2226 can be used for image generation and processing, as well as other computations and operations described further herein. Graphics processor 2226 can be based on RDNA 3 or 3.5 architecture from AMD in Santa Clara, CA. Graphics processor 2226 can include graphics compute dies (GCDs) and memory cache dies (MCDs). GCDs can include any number of compute units (CUs) for graphics or other processing, such as operations performed by arithmetic logic units (ALUs) that are described further herein. Graphics processor 2226 can include L2 cache that can be used by compute units. MCDs (not shown) can include any number of memory units and can include cache, such as L3 cache, as well as memory interfaces for coupling to memory, such as memory 2242(1)-(N), where N is an integer. Components within graphics processor 2226 can be connected using various approaches, such as using Infinity Fabric 2224 interconnects outside or within graphics processor 2226.

Inference engine 2232 can provide neural processing capabilities for processor 2200 for computational processes that are used for neural networks, deep learning, and other artificial intelligence-related operations described further herein. Processor 2200 can include secure processor(s) 2228 for managing security of processor 2200, display controller 2230 for controlling displays, a system management unit 2234 for managing and operating some or all of the components on processor 2200, multimedia engines 2236 for audio and video operations, fusion controller hub 2238 for managing USB, SATA and PCIe connections to processor 2200, and sensor fusion hub 2240 for managing sensors, such as accelerometers. Processor 2200 can also include memory 2242(1)-(N), where N is any integer. Memory can include different memory types, such as LPDDR5 and/or DDR5, or others described elsewhere herein.

For performing operations described further herein, processor 2200 can include an execution pipeline including a front-end that can include a cache (e.g., L1 cache) that stores instructions (not shown). Flow of instructions can be modified by a branch predictor. Instructions can be decoded by a decoder, dispatched to a back-end for execution, and renamed. Instruction fetch and decode pipes, for example, can be dispatched to integer or floating point execution operations that can be scheduled by a scheduler and transferred to vector and/or general-purpose registers. Floating point multiplier and/or add operations can be processed, and arithmetic logic units (ALUs) can also be used to perform computations, such as arithmetic and logic operations. Outputs from computation units can be coupled to a load/store queue, which can be connected to cache, such as L1 cache and/or L2 cache.

With respect to processor 2200 and any of its components described above or elsewhere herein, one or more of APIs or equivalents described herein can, for example, get compiled into instructions or equivalents (e.g., AVX-512 instructions based on an SIMD model), which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2200 (e.g., in cache and/or memory). A result of API(s) can then be stored in storage within or outside of processor 2200, including registers, DRAM, flash, SRAM, cache, or other memory equivalents.

In at least one embodiment, processor 2200 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

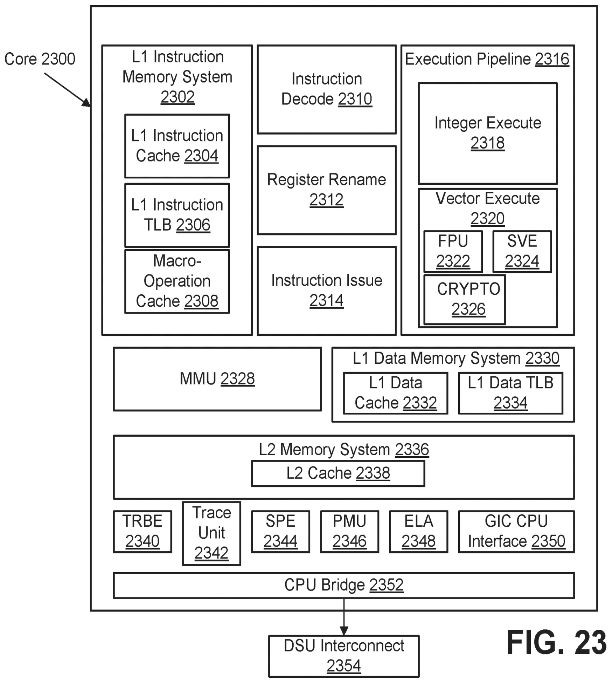

FIG. 23 illustrates an example of a processing core 2300 that may implement Arm architecture (e.g., v9.0-A) or another processor that shares at least some of the components described herein. Neoverse^{™} V2 core 2300 can be implemented inside a DynamIQ Shared Unit (DSU) cluster via DSU-110 interconnect 2354 for connected one or more cores, e.g., for parallel processing. Neoverse^{™} V2 core may be implemented as a single core in a DSU cluster that is configured for Direct connect, with or without L3 cache, snoop filter, or Snoop Control Unit (SCU) logic (not shown). Neoverse^{™} V2 core can include a CPU bridge 2352 that connects core 2300 to DSU-110 interconnect, which can also connect core 2300 to an external memory system and the rest of a system-on-a-chip. L1 instruction memory system 2302 can fetch instructions from an instruction cache 2304 and deliver instructions (e.g., one or more APIs described herein that may be compiled into instructions) to an instruction decode unit 2310, e.g., to perform some or all of operations described above or elsewhere herein. L1 instruction memory system 2302 may include L1 instruction cache 2304, e.g., with 64-byte cache lines, L1 instruction Translation Lookaside Buffer (TLB) 2306, e.g., with native support for 4KB, 16KB, 64KB, and 2MB page sizes, Macro-Operation Cache (MOP) 2308 (e.g., 1536-entry, 4-way skewed associative L0 MOP cache), which can contain decoded and optimized instructions for higher performance. Instruction decode unit 2310 can decode AArch64 instructions into internal format. Register rename unit 2312 can perform register renaming to facilitate out-of-order execution and dispatches decoded instructions to various issue queues. Instruction issue unit 2314 can control when decoded instructions may be dispatched to execution pipelines, and it can include issue queues for storing instructions pending dispatch to execution pipelines. Integer execution pipeline 2316 can be included in an execution pipeline and include integer execute unit 2318 that can perform arithmetic and logical data processing operations. Vector execute unit 2320 can be included in an execution pipeline and can perform Advanced SIMD and floating-point operations (FPU) 2322, execute Scalable Vector Extension (SVE) and Scalable Vector Extension 2 (SVE2) instructions 2324, and can optionally execute cryptographic instructions (Crypto) 2326. Advanced SIMD can include media and signal processing architecture that adds instructions primarily for audio, video, 3D graphics, image, and speech processing. A floating-point architecture provides support for single-precision and double-precision floating-point operations. L1 data memory system 2330 can execute load and store instructions, as well as service memory coherency requests. L1 data memory system 2330 can include an L1 data cache 2332 and a fully associative L1 data TLB 2334 with native support for 4KB, 16KB and 64KB page sizes and 2MB and 512MB block sizes. Memory Management Unit (MMU) 2328 can provide fine-grained memory system control through a set of virtual-to-physical address mappings and memory attributes that can be held in translation tables, which can be saved into TLB 2334 when an address is translated. L2 memory system 2336 can include L2 cache 2338, and it can be connected to DSU-110 2354 through an asynchronous CPU bridge 2352. Neoverse^{™} V2 core 2300 can support a range of debug, test, and trace options including a trace unit 2342 and a trace buffer 2340, and an Embedded Logic Analyzer (ELA) 2348. Neoverse^{™} V2 core 2300 can implement Statistical Profiling Extension (SPE) 2344 to provide a statistical view of the performance characteristics of executed instructions that software writers can use to optimize their code for better performance. Performance Monitoring Unit (PMU) 2346 can provide performance monitors that can be configured to gather statistics on operation of each core and memory system. Information can be used for debug and code profiling. Generic Interrupt Controller (GIC) CPU interface 2350, when integrated with an external distributor component, can be a resource for supporting and managing interrupts in a cluster system. In a cluster, there can be one CPU bridge 2352 between each Neoverse^{™} V2 core 2300 and DSU-110 2354. CPU bridge 2352 can control buffering and synchronization between core 2300 and DSU-1102354. CPU bridge 2352 can be asynchronous to allow different frequency, power, and area implementation points for each core 2300. CPU bridge 2352 can run synchronously without affecting other interfaces such as, but not limited to, debug and trace which can be asynchronous.

In at least one embodiment, core 2300 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

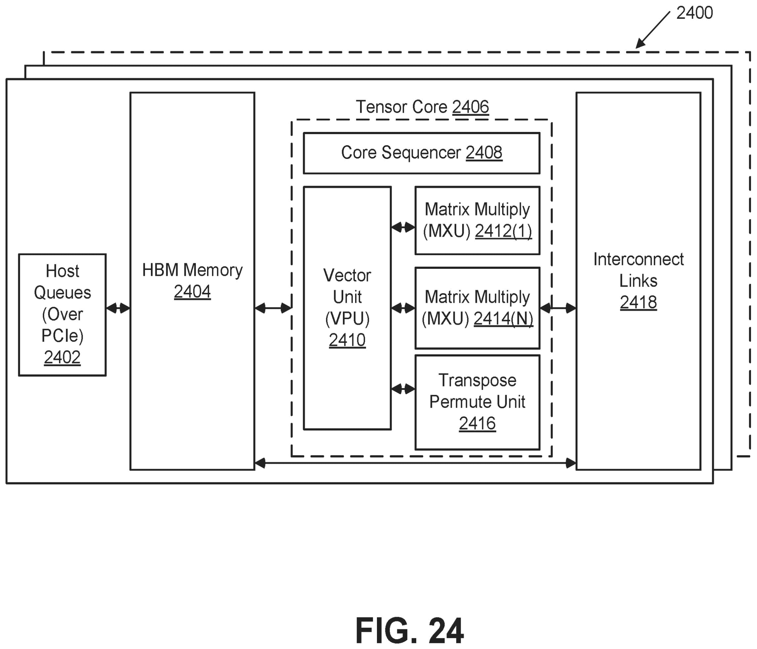

FIG. 24 illustrates one or more chips including one or more tensor processing units (TPUs) 2400, in accordance with at least one embodiment. TPUs 2400 in FIG. 24 can include application specific integrated circuits (ASICs), e.g., to perform some or all of the operations described above or elsewhere herein, such as, but not limited to, accelerate machine learning workloads performing matrix operations. TPUs 2400 may be ASICs from Alphabet Corporation in Mountain View, CA. Cloud TPU includes a cloud service that makes TPUs available as a scalable resource for processing instructions, such as, but not limited to, machine learning workloads that can run on frameworks such as, but not limited to, TensorFlow, Pytorch, and JAX.

Chip 2400 can include any number of TPUs that can include tensor cores 2406. Tensor core 2406 can include one or more core sequencer 2408, vector processing unit (VPU) 2410, matrix multiply unit (MXU) 2412(A)-2414(N), where N is any integer greater than 1, and a transpose permute unit 2416. Core Sequencer 2408 can fetch (e.g., VLIW (Very Long Instruction Word)) instructions from core's 2406 Instruction Memory (Imem), execute scalar operations using a scalar data memory (Smem) and scalar registers (Sregs) (not shown), and forward vector instructions to Vector Processing Unit (VPU) (2410. Instructions can, for example, launch eight operations: two scalar, two vector ALU, vector load and store, and a pair of slots that queue data to and from matrix multiply and transpose units. VPU 2410 can perform vector operations using a large on-chip vector memory (Vmem), and vector registers (Vregs). VPU 2410 can stream data to and from MXU through decoupling FIFOs. VPU 2410 can collect and distribute data to Vmem via data-level parallelism (2D matrix and vector functional units) and instruction-level parallelism (8 operations per instruction). A large two-dimensional matrix multiply unit (MXU) 2412(A)-2412(N) can, e.g., use a systolic array to reduce area and energy plus large, software-controlled on-chip memories instead of caches. Transpose Reduction Permute Unit 2416 can do (e.g., 128x128) matrix transposes, reductions, and permutations of VPU 2410 lanes. High Bandwidth Memory 2404 can be used for applications on chip, and it can be coupled to host queue(s) 2402, e.g., over PCIe. One or more chips 2400 can be connected together for computing. For example, one or more chips 2400 can be connected as a torus, e.g., a 2D torus. Chip 2400 can also include any number (e.g., four) Inter-Core Interconnect (ICI) links 2418 that can enable direct connections between chips to form a supercomputer.

With respect to any processors in chip 2400 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of any processors in chip 2400 (e.g., in cache and/or memory). A result of API(s) can then be stored in storage within or outside of any processors in chip 2400, including registers, DRAM, flash, SRAM, cache, or other memory equivalents.

In at least one embodiment, chip 2400 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

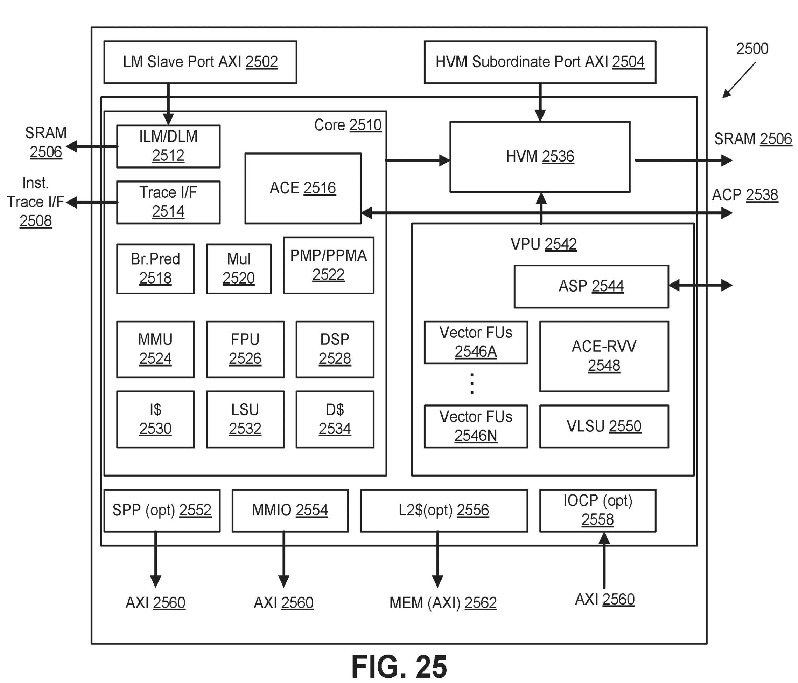

FIG. 25 illustrates a vector processor, in accordance with at least one embodiment. Vector processor 2500 may support a RISC-V standard. Vector processor 2500 can include one more cores 2510 (e.g., scalar units) with one or more Vector Processing Units (VPUs) 2542 (e.g., vector units) that can, e.g., perform some or all of the operations described above or elsewhere herein. Core 2510 may include Andes Custom Extension (ACE) 2516 that can be used for communication of customized instructions for processor 2500, for example, via ACP 2538. Core 2510 may include 1-cycle multiplier and 1-cycle instruction/data local memory (ILM/DLM) for increased parallelism by allowing simultaneous instruction fetches and data accesses. Memory management unit (MMU) 2524 may manage system memory and cache, and provide for branch execution, issuance of instruction pairs, L1 instruction/data caches and local memory storage. Core 2510 can include Physical memory protection and programmable physical memory attribute unit (PMP/PPMA) 2522. Core 2510 can include a digital signal processor (DSP) 2528, and a floating-point unit (FPU) 2526 as well as load-store unit (LSU) 2532 to interface with memory hierarchy (D$ 2534 and I$ 2530). Core 2510 can include branch prediction unit 2518 and multiplier unit 2520.

Vector processing unit (VPU) 2542 can include one or more vector functional units (FUs) 2546(A)-2546(N) that can be chained together for parallel processing, independent memory paths for RISC-V vector (RVV) load/store via ACE-RVV 2548 and Andes Streaming port (ASP) 2544 load/store, and a vector load/store unit (VLSU) 2550.

Vector processor 2500 can include bus interfaces, such as, but not limited to, L2 cache memory port 2556 for cacheable access, a MMIO port 2554 for non-cacheable access, an input-output coherence Port (IOCP) 2558 for cacheless bus master, local memory access ports for ILM/DLM 2512, which can be coupled to SRAM 2506, and high-bandwidth vector memory (HVM) 2536 access, a shared peripheral port (SPP) 2552 for external peripherals. Other memory ports include LM slave port AXI 2502, HVM subordinate port AXI 2504, MEM (AXI) 2562, and AXI 2560. Trace I/F 2514 can capture, encode, and transmit off-chip via Inst. Trace I/F 2508, e.g., a record of executed processor instructions, which software tools can use to reconstruct the exact execution sequence of a program.

With respect to any processors in processor 2500 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2500 (e.g., in cache and/or memory). A result of API(s) can then be stored in storage within or outside of processor 2500, including registers, DRAM, flash, SRAM, cache, or other memory equivalents.

In at least one embodiment, vector processor 2500 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

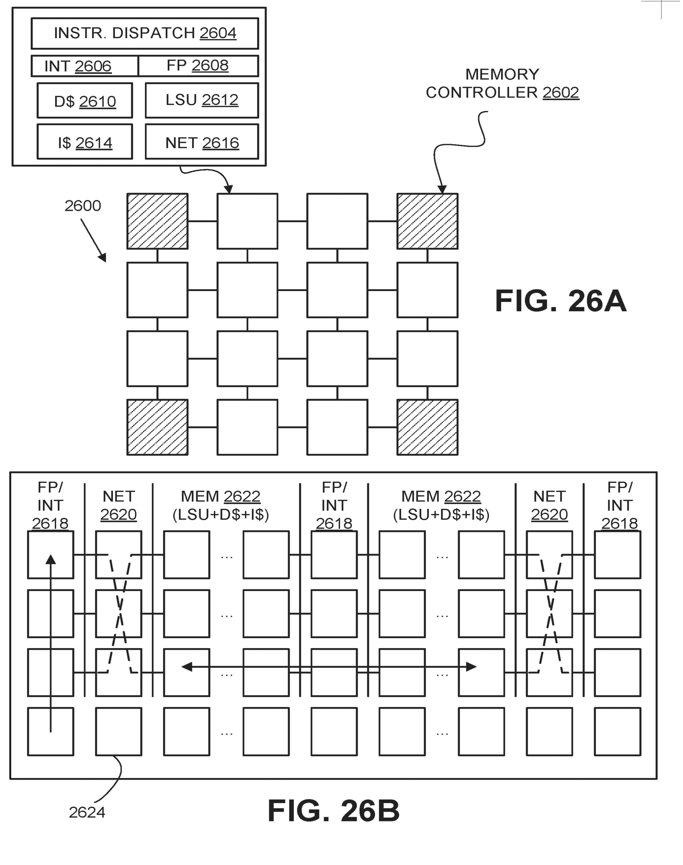

FIG. 26A illustrates a diagram of an example many-core tiled processor microarchitecture. Many-core tiled processor in FIG. 26A can include a language processing processor. As illustrated in FIG. 26A, each "tile" of a processor architecture is a processing element tied together using a network-on-chip (NoC) that can be used, e.g., to perform some or all of the operations described above or elsewhere herein. For example, each tile may have an instruction dispatch 2604 and an integer (INT) 2606 and floating-point (FP) unit 2608 as well as load-store unit (LSU) 2612 to interface with memory hierarchy (data cache (D$) 2610 and instruction cache (I$) 2614) and network (NET) 2616 interface for communication with other tiles. Some tiles in processor 2600 may include memory controller 2602 for managing and controlling memory, as described further herein. Processor 2600 can have a functional slice architecture. Processor 2600 may be located on an application specific integrated circuit (ASIC), and FIG. 26A may represent a layout of an ASIC. Processor 2600 can include a co-processor that is designed to execute instructions for a predictive model. A predictive model is any model that is configured to make a prediction from input data. A predictive model can use a classifier to make a classification prediction. A predictive model may be a machine learning model such as, but not limited to, a tensor flow model, and processor 2600 is a tensor streaming processor.

Processor 2600 can employ different microarchitectures, which disaggregates functional units shown in each tile in FIG. 26B. Instead, functional tiles 2624 of processor 2600 may be aggregated into a plurality of functional process units (hereafter referred to as "slices") 2604, each corresponding to a particular function type (e.g., FP/INT 2618, NET 2620, MEM 2622). For example, as illustrated in FIG. 26B, each slice may correspond to a column of functional tiles extending in a north-south direction. In addition, processor 2600 also may include communication lanes to carry data between tiles of different slices, each running horizontally in an east-west direction. Each communication lane may be connected to each of slices 2604 of processor 2600.

Slices 2604 of processor 2600 may each correspond to a different function, and may include arithmetic logic slices (e.g., FP/INT2618), lane switching slices (e.g., NET 2620), and memory slices (e.g., MEM 2622). Arithmetic logic units may execute one or more arithmetic and/or logic operations on data received via communication lanes to generate output data. Examples of arithmetic logic units may be matrix multiplication units and vector multiplication units. Memory slices include memory cells that store data. Memory slices can provide data to other slices through communication lanes. Memory slices can also receive data from other slices through communication lanes. Lane switching slices can configurably route data from one communication lane to any other communication lane. For example, data from a first lane can be provided to a second lane through a lane switching slice. In some embodiments, a lane switching slice can be implemented as a crossbar switch. Each slice 2604 also includes its own instruction queue (not shown) that stores instructions, and an instruction control unit (ICU) to control execution of instructions. Instructions in a given instruction queue may be executed only by tiles in its associated functional slice and may not be executed by other slice(s) of processor 2600.

By arranging tiles of processor 2600 into different functional slices 2604, on-chip instruction and control flow of processor 2600 can be decoupled from data flow. For example, one arrow in FIG. 26B illustrates flow of instructions within processor architecture, in accordance with some embodiments. Another arrow in FIG. 26B illustrates data flow within processor architecture, in accordance with at least one embodiment. As illustrated, instructions and control flow can flow in a first direction across tiles of processor 2600 (e.g., north-south, along a length of functional slices, as shown by the first arrow), while data flows flow in a second direction across tiles of processor 2600 (e.g., east-west, across functional slices, as shown by the second arrow) that is perpendicular to the first direction.

Different functional slices of processor 2600 may correspond to MEM 2622 (memory), VXM (vector execution module), MXM (matrix execution module), NIM (numerical interpretation module), and SXM (switching and permutation module). Each slice may include N tiles that may all be controlled by a same instruction control unit (ICU) (not shown). Each slice may operate completely independently and can only be coordinated using barrier-like synchronization primitives or through a compiler by exploiting "tractable determinism." Each tile of processor 2600 can correspond to an execution unit organized as an ×M SIMD tile. For example, each tile of on-chip memory of processor 2600 may be organized to store an L-element vector atomically. As such, a MEM slice having N tiles may work together to store or process a large vector (e.g., having a total of N×M elements).

Tiles in a slice may execute instructions in a "staggered" fashion where instructions may be issued tile-by-tile within a slice over a period of N cycles. Functional slices may be arranged physically on-chip to allow efficient data-flow for pipelined execution across hundreds of cycles for common patterns. Data flows can perform a single "u-turn" (change in direction) corresponding to a single matrix operation before being written back to memory, in some embodiments, a particular data flow may change direction multiple times (due to multiple matrix and vector operations) before resulting data is written back into memory.

When using processor 2600 (e.g., TSP) having a functional slice architecture, TSP compiler (not shown) generates an explicit plan for how processor 2600 can execute a program (e.g., a microprogram). Compiler can specify when each operation will be executed, which functional slices will perform work, and which STREAM registers hold operands. Compiler can maintain a high-fidelity (cycle accurate) model of processor 2600 (e.g., TSP) hardware state so a microprogram can orchestrate data flow.

Processor 2600 (e.g., TSP) can use a Web-hosted compiler that takes as its input a model (e.g., a ML model such as, but not limited to, a TensorFlow model) and emits a proprietary instruction stream targeting processor 2600 (e.g., TSP). Compiler is responsible for coordinating control and data flow of a program, and specifies any instruction-level parallelism by explicitly bundling instructions that can and should execute concurrently so that they may be dispatched together. Primary hardware structure includes an architecturally-visible streaming register file (STREAMs), described in greater detail below, which serves as a conduit through which operands flow from MEM slices (e.g., SRAM) to functional slices and vice versa.

MEM 2622 of processor 2600 can serve as: (1) storage for model parameters, microprograms and data on which they operate, and (2) network-on-chip (NoC) for communicating data operands from MEM to functional slices and computed results back to MEM. In some embodiments, on-chip memory can consumes ≈75% of chip area of processor 2600. In some embodiments, due to bandwidth requirements of processor 2600, on-chip memory of MEM tiles may include SRAM, and not DRAM. On-chip memory capacity of processor 2600 can determine (i) number of ML models that can simultaneously reside on-chip, (ii) size of any given model, and (iii) partitioning of large models to fit into multi-chip systems. In some embodiments, MEM system of processor 2600 can provide a plurality of memory slices organized into two different hemispheres (referred to as "MEM WEST" and "MEM EAST", respectively).

Memory slices of each hemisphere may be mirrored, such that slices may be physically numbered {0, ... L} in an East hemisphere, and {L, ... 0} in a West hemisphere, such that memory slice 0 for each hemisphere corresponds to a slice closest to VXM slices between hemispheres, where each hemisphere comprises L slices. Direction of data transfer towards the center of a chip may be referred to as inwards, while data transfer toward the outer (Eastern or Western most) edge of a chip may be referred to as outwards. Although hemispheres of memory of processor 2600 may be referred to as east and west, it is understood that in other embodiments, other names may be used to refer to different hemispheres of memory.

In some embodiments, a streaming register file, referred to as STREAMS, transfers operands and results between SRAM of MEM slices and functional slices of processor 2600. In some embodiments, a plurality of MEM slices (e.g., between 2 and 10 adjacent MEM slices) may be physically organized as a set. Each set of slices may be located between a pair of STREAM register files, such that each slice is able to read or write to STREAM registers in either direction. By placing STREAM register files between sets of MEM slices, a number of cycles needed for data operands to be transmitted across a hemisphere is decreased (e.g., by a factor corresponding to a number of slices per set). A number of slices per set may be configured based upon a distance over which data may be transmitted over a single clock cycle.

With respect to any processors in FIG. 26 and any components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2600 (e.g., in cache and/or memory). A result of API(s) can then be stored in storage within or outside of processor 2600, including registers, DRAM, flash, SRAM, cache, or other memory equivalents.

In at least one embodiment, processor 2600 can include one or more circuits to perform an application programming interface (API) to pause and/or cause one or more indicated instructions or otherwise perform any of the operations described above or elsewhere herein. One or more circuits can be configured by software to perform an application programming interface (API) to pause and/or cause one or more indicated instructions or otherwise perform any of the operations described above or elsewhere herein.

### Software Constructions

The following figures set forth, without limitation, examples of software constructs for implementing at least one embodiment.

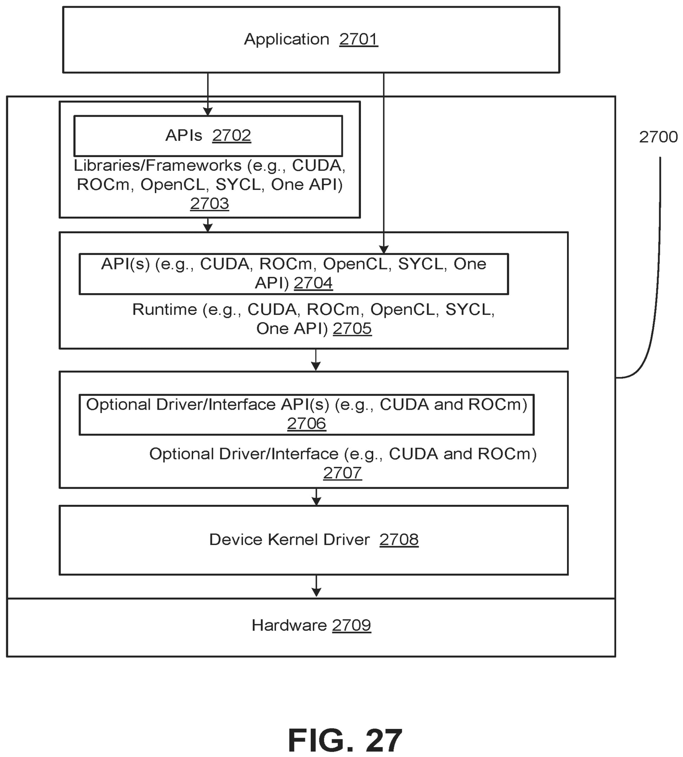

FIG. 27 illustrates a software stack of a programming platform, in accordance with at least one embodiment. A programming platform can include a platform for leveraging hardware on a computing system to accelerate computational instructions. A programming platform may be accessible to software developers through libraries, compiler directives, and/or extensions to programming languages, in at least one embodiment. A programming platform may be CUDA, Radeon Open Compute Platform ("ROCm"), OpenCL (OpenCL^{™} is developed by Khronos group), SYCL, or Intel oneAPI.

A software stack 2700 of a programming platform can provide an execution environment for an application 2701. Application 2701 may include any computer software capable of being launched on software stack 2700. Application 2701 may include an artificial intelligence ("AI")/machine learning ("ML") application, a high performance computing ("HPC") application, a virtual desktop infrastructure ("VDI"), or a data center workload.

Application 2701 and software stack 2700 run on hardware 2708. Hardware 2708 may include one or more GPUs, CPUs, FPGAs, AI engines, and/or other types of compute devices that support a programming platform. Software stack 2700 may be vendor specific and compatible with only devices from particular vendor(s), such as CUDA, ROCm, OneAPI, OpenCL, or other implementations. Hardware 2708 can include a host connected to one more devices that can be accessed to perform computational instructions via application programming interface ("API") calls. A device within hardware 2708 may include a GPU, FPGA, AI engine, or other compute device (but may also include a CPU) and its memory, as opposed to a host within hardware 2708 that may include a CPU (but may also include a compute device) and its memory, in at least one embodiment. With respect to any hardware 2708 described above or elsewhere herein, one or more of APIs described herein can, for example, get compiled into instructions, which may be fetched by instruction fetch logic, decoded by a processor decoder, scheduled (e.g., in order or out of order) for execution by a scheduler, executed by execution logic, reordered, and then retired by retirement logic. API(s) (and/or compiled instructions including API(s)) can be stored in any storage outside or inside of hardware 2708 (e.g., in cache and/or memory). A result of API(s) can then be stored in storage within or outside of hardware 2708, including registers, DRAM, flash, SRAM, cache, or other memory. One or more of APIs described herein can receive a call. One or more of APIs described herein can communicate with a library or a portion of a library to perform a function described by the call. One or more of APIs described herein can receive a call and communicate with a library or portion of a library to perform a function described by the call.

Software stack 2700 of a programming platform can include a number of libraries 2703, a runtime 2705, an optional driver/interface 2707, and a device kernel driver 2708. Each of libraries 2703 may include data and programming code that can be used by computer programs and leveraged during software development. Libraries 2703 may include pre-written code and subroutines, classes, values, type specifications, configuration data, documentation, help data, and/or message templates. Libraries 2703 can include functions that may be optimized for execution on one or more types of devices. Libraries 2703 may include functions for performing mathematical, deep learning, and/or other types of operations on devices. Libraries 2703 can be associated with corresponding APIs 2702, which may include one or more APIs, that expose functions implemented in libraries 2703. A processor (e.g. CPU, GPU) may perform, call, or otherwise use one or more APIs to prioritize kernels. For example, a first kernel (e.g., parent) can launch a second kernel (e.g., child kernel), and said second kernel can be used by a processor to launch additional kernels (e.g., grandchildren kernels) independent of said first kernel. A processor may perform an API or calls an API from memory to be performed to support dynamic stream priority (e.g., updating priority while a stream is being used to perform operations). For example, when a processor performs said API, it allows a programmer to copy stream priority from one stream to one or more other streams.

Software stack 2700 may include an API to support dynamic stream priority (e.g., updating priority while a stream is being used to perform operations), which can allow a programmer to set priority of a stream at any time after creation. Software stack 2700 can include an API to support dynamic stream priority (e.g., updating priority while the stream is being used to perform operations), which may allow a programmer to obtain current priority of a stream, where the priority is one of a plurality of attributes of a stream. Software stack 2700 can include an API to support dynamic stream priority (e.g., updating priority while the stream is being used to perform operations), which may allow a programmer to obtain current priority of a stream as a single attribute. Software stack 2700 can include an API to support dynamic stream priority (e.g., updating priority while the stream is being used to perform operations), which allows a programmer to launch a kernel to perform operations on a stream at a set priority, which may be different from the stream priority. Software stack 2700 may include an API to indicate whether an object (e.g., a thread synchronization object such as, but not limited to, a barrier) tracks whether all data movement operations for a set of threads operating on a GPU may be complete has a specified state after a specified period of time, where a specified state can be a state indicating that data has been moved and is ready for use, and is specified using an expected parity value as an input to the API.

Software stack 2700 can include one or more APIs to updated kernels. A processor can perform an API or call an API from memory to be performed to update to an existing API is to support context-free kernels, which may allow a programmer to add a kernel node to a graph without a graphics context, so that a graphics context can be dynamically associated with a kernel at runtime. Software stack 2700 may include one or more APIs to allow a programmer to obtain a kernel identifier and a graphics context as separate parameters from a kernel node, so that parameters to be obtained from kernels and from context-free kernels. Software stack 2700 can include one or more APIs to use parallel processor(s), such as, but not limited to, one or more graphics processing units, to launch instruction graphs (e.g., instruction graphs) and to execute one or more instruction graphs (e.g., including one or more programs).

Software stack 2700 may include one or more APIs to associate one or more instructions with one or more memory ordering operations, such as, but not limited to, a fence or membar operation. Instructions can be associated with one or more domains such that a memory ordering operation is executed in association to one or more particular domains without interfering with instructions of other domains. An API can indicate a thread has arrived (e.g., at a thread synchronization barrier), or finished a stage of work in relation to asynchronous data movement operations on a GPU. Software stack 2700 may include one or more to allow programmers to manually indicate an expected transaction count when a thread has finished a stage of work, which can be used to update an object that tracks whether all data movement operations for a set of threads may be complete.

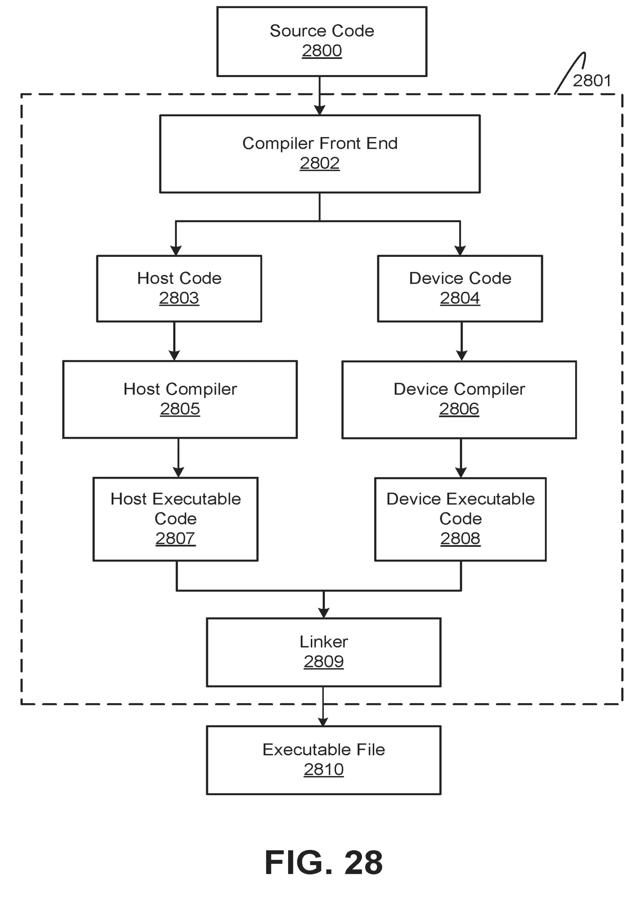

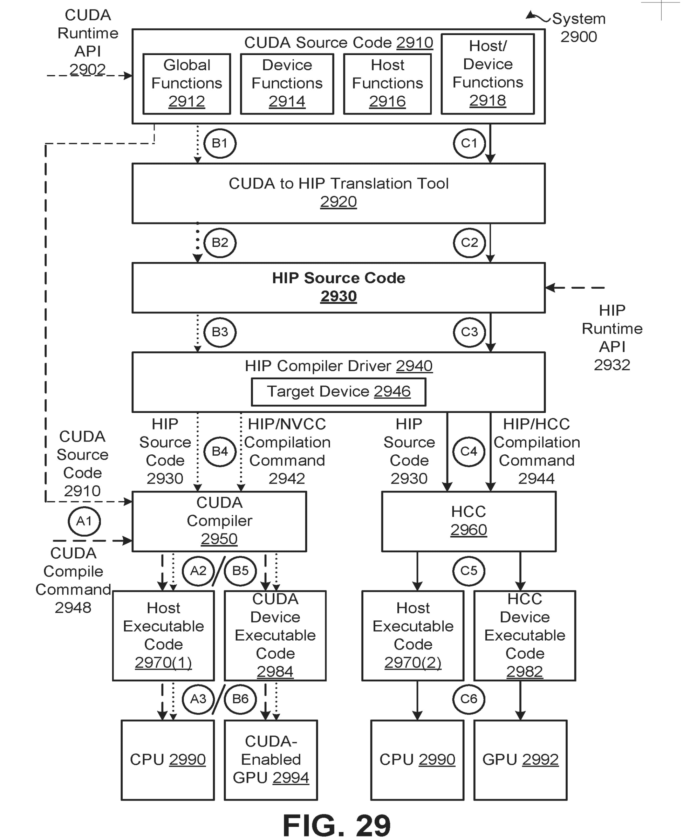

Application 2701 can be written as source code that is compiled into executable code, as discussed in greater detail below in conjunction with FIGS. 28 and 29. Executable code of application 2701 may run, at least in part, on an execution environment provided by software stack 2700. During execution of application 2701, code may be reached that needs to run on a device, as opposed to a host. In such a case, runtime 2705 may be called to load and launch requisite code on a device. Runtime 2705 may include any technically feasible runtime system that is able to support execution of application 2701.

Runtime 2705 can be implemented as one or more runtime libraries associated with corresponding APIs, which are shown as API(s) 2704. One or more of such runtime libraries may include functions for memory management, execution control, device management, error handling, and/or synchronization, among other things,. Memory management functions may include functions to allocate, deallocate, and copy device memory, as well as transfer data between host memory and device memory. Execution control functions may include functions to launch a function (sometimes referred to as a "kernel" when a function is a global function callable from a host) on a device and set attribute values in a buffer maintained by a runtime library for a given function to be executed on a device.

Runtime libraries and corresponding API(s) 2704 may be implemented in any technically feasible manner. One (or any number of) API may expose a low-level set of functions for fine-grained control of a device, while another (or any number of) API may expose a higher-level set of such functions. A high-level runtime API may be built on top of a low-level API. One or more of runtime APIs may be language-specific APIs that may be layered on top of a language-independent runtime API.

An optional driver or interface 2707 may be implemented, e.g., for CUDA and ROCm implementations, that are described further below. Optional driver/interface 2707 may be associated with optional driver or interface API(s), such as, but not limited to, CUDA and/or ROCm API(s).

One or more processors disclosed in "processing systems" can perform, access, or otherwise use software stack 2700. For example, system-on-a-chip 1400, parallel processor 1500, graphics multiprocessor 1534, processor 1600, processor 1700, accelerator 1800, neuromorphic processor 1905, supercomputer 2000, acceleration processing unit 2100, processor 2200, processor 2300, tensor processing unit 2400, processor 2500, and language processing unit 2600 can perform, use, call, or otherwise implement (e.g., through accessing a memory) one or more APIs included in software stack 2700.

Device kernel driver 2708 can be configured to facilitate communication with an underlying device. Device kernel driver 2708 may provide low-level functionalities upon which APIs, such as, but not limited to, API(s) 2704, and/or other software relies. Device kernel driver 2708 may be configured to compile intermediate representation ("IR") code into binary code at runtime. For CUDA or other implementations such as, but not limited to, ROCm, OneAPI, or OpenCL, device kernel driver 2708 may compile Parallel Thread Execution ("PTX") IR code that is not hardware specific into binary code for a specific target device at runtime (with caching of compiled binary code), which is also sometimes referred to as "finalizing" code. Doing so may permit finalized code to run on a target device, which may not have existed when source code was originally compiled into PTX code. Alternatively, device source code may be compiled into binary code offline, without requiring device kernel driver 2708 to compile IR code at runtime.

Processors described elsewhere herein, such as, but not limited to, processors in FIGS. 14-26 can include one or more circuits to perform an API to pause and/or resume one or more GPU instructions or otherwise perform any of the operations described above or elsewhere herein. One or more circuits can be configured by software, e.g., software stack 2700 to perform an API to pause and/or resume one or more GPU instructions or otherwise perform any of the operations described above or elsewhere herein.

In accordance with at least one embodiment, software stack 2700 of FIG. 27 can be performed in a CUDA implementation. A CUDA software stack 2700, on which an application 2701 may be launched, may include CUDA libraries 2703, a CUDA runtime 2705, a CUDA driver 2707, and a device kernel driver 2708. CUDA software stack 2700 can execute on hardware (e.g., graphics multiprocessor 1534 that may include a GPU that supports CUDA and is developed by NVIDIA Corporation of Santa Clara, CA.

Application 2701, CUDA runtime 2705, and device kernel driver 2708 can perform functionalities that are described above and elsewhere herein. CUDA driver 2707 can include a library (libcuda.so) that may implement a CUDA driver API 2706. Similar to a CUDA runtime API 2704 implemented by a CUDA runtime library (cudart), CUDA driver API 2706 may expose functions for memory management, execution control, device management, error handling, synchronization, and/or graphics interoperability, among other things. CUDA driver API 2706 can differ from CUDA runtime API 2704 in that CUDA runtime API 2704 simplifies device code management by providing implicit initialization, context (analogous to a process) management, and module (analogous to dynamically loaded libraries) management. In contrast to high-level CUDA runtime API 2704, CUDA driver API 2706 can be a low-level API providing more fine-grained control of a device, particularly with respect to contexts and module loading. CUDA driver API 2706 may expose functions for context management that may be not exposed by CUDA runtime API 2704. CUDA driver API 2706 may also be language-independent and support, e.g., OpenCL, in addition to CUDA runtime API 2704. Further, development libraries, including CUDA runtime 2705, may be considered as separate from driver components, including user-mode CUDA driver 2707 and kernel-mode device driver 2708 (also sometimes referred to as a "display" driver).

CUDA libraries 2703 may include mathematical libraries, deep learning libraries, parallel algorithm libraries, and/or signal/image/video processing libraries, which parallel computing applications such as, but not limited to, application 2701 may utilize. CUDA libraries 2703 may include mathematical libraries such as, but not limited to, a cuBLAS library that is an implementation of Basic Linear Algebra Subprograms ("BLAS") for performing linear algebra operations, a cuFFT library for computing fast Fourier transforms ("FFTs"), and a cuRAND library for generating random numbers, among others. CUDA libraries 2703 may include deep learning libraries such as, but not limited to, a cuDNN library of primitives for deep neural networks and a TensorRT platform for high-performance deep learning inference, among others.

In at least one embodiment, processors described elsewhere herein, such as, but not limited to, processors in FIGS. 14-26 can include one or more circuits to perform an API to pause and/or resume one or more GPU instructions or otherwise perform any of the operations described above or elsewhere herein. One or more circuits can be configured by software, e.g., software stack 2700 to perform an API to pause and/or resume one or more GPU instructions or otherwise perform any of the operations described above or elsewhere herein.

In accordance with at least one embodiment, software stack 2700 of FIG. 27 can be performed in a ROCm implementation. A ROCm software stack 2700, on which an application 2701 may be launched, includes a language runtime 2703, a system runtime 2705, a thunk 2707, and a ROCm kernel driver 2708. ROCm software stack 2700 executes on hardware 2709, which may include a GPU that supports ROCm and is developed by AMD Corporation of Santa Clara, CA.

Application 2701 may perform similar functionalities as discussed above in conjunction with FIG. 27. In addition, language runtime 2703 and system runtime 2705 may perform similar functionalities as runtime 2705 discussed above in conjunction with FIG. 27. Language runtime 2703 and system runtime 2705 may differ in that system runtime 2705 is a language-independent runtime that implements a ROCr system runtime API 2704 and makes use of a Heterogeneous System Architecture ("HSA") Runtime API. HSA runtime API can include a thin, user-mode API that exposes interfaces to access and interact with an AMD GPU, including functions for memory management, execution control via architected dispatch of kernels, error handling, system and agent information, and runtime initialization and shutdown, among other things. In contrast to system runtime 2705, language runtime 2703 can be an implementation of a language-specific runtime API 2702 layered on top of ROCr system runtime API 2704. Language runtime API may include a Heterogeneous compute Interface for Portability ("HIP") language runtime API, a Heterogeneous Compute Compiler ("HCC") language runtime API, or an OpenCL API, among others. HIP language in particular is an extension of C++ programming language with functionally similar versions of CUDA mechanisms, and a HIP language runtime API may include functions that may be similar to those of CUDA runtime API discussed above in conjunction with FIG. 27, such as, but not limited to, functions for memory management, execution control, device management, error handling, and synchronization, among other things.

Thunk (ROCt) 2707 can be an interface 2706 that can be used to interact with underlying ROCm driver 2708. ROCm driver 2708 can be a ROCk driver, which is a combination of an AMDGPU driver and a HSA kernel driver (amdkfd). AMDGPU driver can be a device kernel driver for GPUs developed by AMD that performs similar functionalities as device kernel driver 2709 discussed above in conjunction with FIG. 27. HSA kernel driver can be a driver permitting different types of processors to share system resources more effectively via hardware features.

Various libraries (not shown) may be included in ROCm software stack 2700 above language runtime 2703 and provide functionality similar to CUDA libraries 2703, discussed above in conjunction with FIG. 27. Various libraries may include mathematical, deep learning, and/or other libraries such as, but not limited to, a hipBLAS library that implements functions similar to those of CUDA cuBLAS, a rocFFT library for computing FFTs that is similar to CUDA cuFFT, among others.

Processors described elsewhere herein, such as, but not limited to, processors in FIGS. 14-26 can include one or more circuits to perform an API to pause and/or resume one or more GPU instructions or otherwise perform any of the operations described above or elsewhere herein. One or more circuits can be configured by software, e.g., software stack 2700 to perform an API to pause and/or resume one or more GPU instructions or otherwise perform any of the operations described above or elsewhere herein.

In accordance with at least one embodiment, software stack 2700 of FIG. 27 can be performed in a OpenCL implementation. An OpenCL software stack 2700, on which an application 2701 may be launched, can include an OpenCL framework 2703, an OpenCL runtime 2705, and a driver 2708. OpenCL software stack 2700 may execute on hardware 2709 that is not vendor-specific. As OpenCL is supported by devices developed by different vendors, specific OpenCL drivers may be required to interoperate with hardware from such vendors.

Application 2701, OpenCL runtime 2705, device kernel driver 2708, and hardware 2709 may perform similar functionalities as other implementations of application 2701, runtime 2705, device kernel driver 2708, and hardware 2709, respectively, that are discussed above in conjunction with FIG. 27. Application 2701 can further include an OpenCL kernel (not shown) with code that is to be executed on a device.

OpenCL may define a "platform" that allows a host to control devices connected to a host. An OpenCL framework can provide a platform layer API and a runtime API, shown as platform API 2702 and runtime API 2704. Runtime API 2704 can use contexts to manage execution of kernels on devices. Each identified device may be associated with a respective context, which runtime API 2704 may use to manage command queues, program objects, and kernel objects, share memory objects, among other things, for that device. Platform API 2702 can expose functions that permit device contexts to be used to select and initialize devices, submit work to devices via command queues, and enable data transfer to and from devices, among other things. In addition, OpenCL framework can provide various built-in functions (not shown), including math functions, relational functions, and image processing functions, among others.

A compiler (not shown) can also be included in OpenCL framework 2703. Source code may be compiled offline prior to executing an application or online during execution of an application. In contrast to CUDA and ROCm, OpenCL applications may be compiled online by a compiler that is representative of any number of compilers that may be used to compile source code and/or IR code, such as, but not limited to, Standard Portable Intermediate Representation ("SPIR-V") code, into binary code. Alternatively, OpenCL applications may be compiled offline, prior to execution of such applications.

In at least one embodiment, processors described elsewhere herein, such as, but not limited to, processors in FIGS. 14-26 can include one or more circuits to perform an API to pause and/or resume one or more GPU instructions or otherwise perform any of the operations described above or elsewhere herein. One or more circuits can be configured by software, e.g., software stack 2700 to perform an API to pause and/or resume one or more GPU instructions or otherwise perform any of the operations described above or elsewhere herein.

In accordance with at least one embodiment, software can be supported by a programming platform that is configured to support various programming models, middlewares and/or libraries, and frameworks that an application may rely upon. Application may be an AI/ML application implemented using, for example, a deep learning framework such as, but not limited to, MXNet, PyTorch, or TensorFlow, which may rely on libraries such as, but not limited to, cuDNN, NVIDIA Collective Communications Library ("NCCL"), and/or NVIDA Developer Data Loading Library ("DALI") CUDA libraries to provide accelerated computing on underlying hardware.

Programming platform may be one of a CUDA, ROCm, or OpenCL platform described above in conjunction with FIG. 27. Programming platform can support multiple programming models, which may be abstractions of an underlying computing system permitting expressions of algorithms and data structures. Programming models may expose features of underlying hardware in order to improve performance. Programming models may include CUDA, HIP, OpenCL, C++ Accelerated Massive Parallelism ("C++AMP"), Open Multi-Processing ("OpenMP"), Open Accelerators ("OpenACC"), and/or Vulkan Compute.

Libraries and/or middlewares may provide implementations of abstractions of programming models. Such libraries can include data and programming code that may be used by computer programs and leveraged during software development. Such middlewares can include software that provides services to applications beyond those available from programming platform. Libraries and/or middlewares may include cuBLAS, cuFFT, cuRAND, and other CUDA libraries, or rocBLAS, rocFFT, rocRAND, and other ROCm libraries. In addition, libraries and/or middlewares may include NCCL and ROCm Communication Collectives Library ("RCCL") libraries providing communication routines for GPUs, a MIOpen library for deep learning acceleration, and/or an Eigen library for linear algebra, matrix and vector operations, geometrical transformations, numerical solvers, and related algorithms.

Application frameworks may depend on libraries and/or middlewares. Each of application frameworks can be a software framework used to implement a standard structure of application software. Returning to the AI/ML example discussed above, an AI/ML application may be implemented using a framework such as, but not limited to, Caffe, Caffe2, TensorFlow, Keras, PyTorch, or MxNet deep learning frameworks, for example.

In at least one embodiment, processors described elsewhere herein, such as, but not limited to, processors in FIGS. 14-26 can include one or more circuits to perform an API to pause and/or resume one or more GPU instructions or otherwise perform any of the operations described above or elsewhere herein. One or more circuits can be configured by software, e.g., programming platforms described herein, to perform an API to pause and/or resume one or more GPU instructions or otherwise perform any of the operations described above or elsewhere herein.

FIG. 28 illustrates compiling code to execute on one of programming platforms of FIG. 27 described above, in accordance with at least one embodiment. A compiler 2801 is configured to receive source code 2800, compile source code 2800, and output an executable file 2810. Complier 2801 can be configured to convert source code 2800 into host executable code 2807 for execution on a host and device executable code 2808 for execution on a device. Source code 2800 may either be compiled offline prior to execution of an application, or online during execution of an application. Source code 2800 may include code in any programming language supported by compiler 2801, such as, but not limited to, C++, C, Fortran, etc. Source code 2800 may be included in a single-source file having a mixture of host code and device code, with locations of device code being indicated therein. A single-source file may be a .cu file that includes CUDA code or a .hip.cpp file that includes HIP code or a file in another format that includes both host code and device code. Alternatively, source code 2800 may include multiple source code files, rather than a single-source file, into which host code and device code may be separated. Compiler 2801 includes or has access to one or more libraries to recognize a sequence of API calls to perform a single fused API, where a single fused API is a combined API for two or more APIs. In at least one embodiment, compiler 2801 may be an NVIDIA CUDA compiler ("NVCC") for compiling CUDA code in .cu files, or a HCC compiler for compiling HIP code in .hip.cpp files, or other compilers.

Compiler 2801 can be configured to compile source code 2800 into host executable code 2807 for execution on a host and device executable code 2808 for execution on a device. Compiler 2801 performs operations including parsing source code 2800 into an abstract system tree (AST), performing optimizations, and generating executable code. When source code 2800 includes a single-source file, compiler 2801 may separate device code from host code in such a single-source file, compile device code and host code into device executable code 2808 and host executable code 2807, respectively, and link device executable code 2808 and host executable code 2807 together in a single file.

Compiler 2801 can include a compiler front end 2802, a host compiler 2805, a device compiler 2806, and a linker 2809. Compiler front end 2802 can be configured to separate device code 2804 from host code 2803 in source code 2800. Device code 2804 may be compiled by device compiler 2806 into device executable code 2808, which as described may include binary code or IR code, in at least one embodiment. Separately, host code 2803 may be compiled by host compiler 2805 into host executable code 2807. For NVCC other compilers, such as, but not limited to, those for oneAPI, ROCm, and OpenCL, host compiler 2805 may be a general purpose C/C++ compiler that outputs native object code, while device compiler 2806 may be a Low Level Virtual Machine ("LLVM")-based compiler that forks a LLVM compiler infrastructure and outputs PTX code or binary code. For HCC, both host compiler 2805 and device compiler 2806 may be LLVM-based compilers that output target binary code.

Subsequent to compiling source code 2800 into host executable code 2807 and device executable code 2808, linker 2809 can link host and device executable code 2807 and 2808 together in executable file 2810. Native object code for a host and PTX or binary code for a device may be linked together in an Executable and Linkable Format ("ELF") file, which is a container format used to store object code. Host executable code 2807 and device executable code 2808 may be in any suitable format, such as, but not limited to, binary code and/or IR code. In the case of CUDA, host executable code 2807 may include native object code and device executable code 2808 may include code in PTX intermediate representation, in at least one embodiment. In the case of ROCm, both host executable code 2807 and device executable code 2808 may include target binary code, in at least one embodiment. Other implementations, such as, but not limited to, oneAPI, OpenCL are contemplated and can be performed similarly to the CUDA and ROCm implementations above.

Source code 2800 may be translated prior to compiling source code. Source code is passed through a translation tool (not shown), which translates source code 2800 into translated source code. A compiler 2801 can be used to compile translated source code into host executable code 2807 and device executable code 2808 in a process that is similar to compilation of source code 2800 by compiler 2801 into host executable code 2807 and device executable code 2808, as discussed above in conjunction with FIG. 28.

A translation performed by translation tool can be used to port source code 2800 for execution in a different environment than that in which it was originally intended to run. Translation tool may include a HIP translator that is used to "hipify" CUDA code intended for a CUDA platform into HIP code that can be compiled and executed on a ROCm platform. Translation of source code 2800 may include parsing source code 2800 and converting calls to API(s) provided by one programming model (e.g., CUDA) into corresponding calls to API(s) provided by another programming model (e.g., HIP), as discussed in greater detail below in conjunction with FIG. 29. Returning to the example of hipifying CUDA code, calls to CUDA runtime API, CUDA driver API, and/or CUDA libraries may be converted to corresponding HIP API calls. Automated translations performed by translation tool 2801 may sometimes be incomplete, requiring additional, manual effort to fully port source code 2800.

One or more techniques described herein may utilize a variety of methods for converting one type of code to another type of code. For example, compiler 2801 or other compilers described herein can convert a high-level language (e.g., source code that is abstract to hardware) to a lower-level language (e.g., machine code or an intermediate representation). Source code can be scanned, parsed, transformed into an abstract syntax tree semantically analyzed, then converted into an intermediate code, and then converted into machine code or assembly language. Compiler 2801 or other compilers described herein can include a transpiler, which can convert, for example, one type of source code to another type of source code or one type of machine code to another type of machine code. Source code can be parsed, and transformed into an abstract syntax tree, which can then be converted to an intermediate model that can be transformed into an abstract syntax tree of target language and code can be generated. Compiler 2801 or other compilers described herein can be used to enable interchangeability between different device architectures. For example, an application for one platform (e.g., a CUDA application) can be compiled into code for implementation on another platform (e.g., an AMD processor, Intel processor, or other processor). Source code 2800 can include source code for one platform (e.g., CUDA). Compiler 2801 can compile the source 2800 into an executable file 2810 that can be used by another platform (e.g., AMD or Intel). Programming toolkits can allow applications for one platform (e.g., CUDA) to be compiled (e.g., natively) for another platform (e.g., AMD or Intel). For example, a GPGPU programming toolkit can allow for CUDA applications to be natively compiled for AMD GPUs. Programs (e.g., CUDA programs) or its build system do not have to be modified or translated to another language before compiling to code for another platform. A compiler may accept the same command-line options and programming dialect (e.g., CUDA dialect) as another compiler (e.g., nvcc for CUDA), serving as a drop-in replacement to impersonate an installation of a toolkit (e.g., NVIDIA CUDA Toolkit), so existing build tools and scripts (e.g., like cmake) work without further modification. In at least one embodiment, an nvcc-compatible compiler can be used to compile nvcc-dialect CUDA for AMD GPUs, including PTX asm. Implementations of CUDA runtime and driver APIs for AMD GPUs can be used. Libraries (e.g., open source wrapper libraries) can provide APIs, such as "CUDA-X" APIs by delegating to the corresponding ROCm libraries. An example implementation includes SCALE from Spectral Compute in London, England. SCALE can allow programs written using CUDA language to be directly compiled to lower-level language (e.g., machine code) for AMD GPUs. SCALE can create one or more directories that can be used to impersonate NVIDIA CUDA Toolkit (from the point of view of a build system) by instructing a build system that a CUDA installation path is one provided by SCALE, rather than the one provided by NVIDIA. Additional implementations can include a Clang compiler that can provide a language front-end and tooling infrastructure for languages in the C language family (C, C++, Objective C/C++, OpenCL, CUDA, and RenderScript). In at least one embodiment, compilers and/or transpilers described herein, such as, but not limited to compiler 2801, compiler 2805, and/or compiler 2806 can include one or more circuits to compile code (e.g., CUDA, HIP, OpenCL, OneAPI, or others) to perform an API to pause and/or resume one or more GPU instructions and/or perform any of the operations described above or elsewhere herein. In at least one embodiment, compilers and/or transpilers described herein, such as, but not limited to compiler 2801, compiler 2805, and/or compiler 2806 can include one or more circuits to convert code (e.g., source code for CUDA) to one or more other types of code (e.g., machine code for CUDA and/or another platform, such as AMD or Intel processors) to perform an API to pause and/or resume one or more GPU instructions and/or perform any of the operations described above or elsewhere herein.

FIG. 29 illustrates a system 2900 configured to compile and execute CUDA source code 2910 using different types of processing units, in accordance with at least one embodiment. System 2900 includes CUDA source code 2910, a CUDA compiler 2950, host executable code 2970(1), host executable code 2970(2), CUDA device executable code 2984, a CPU 2990, a CUDA-enabled GPU 2994, a GPU 2992, a CUDA to HIP translation tool 2920, HIP source code 2930, a HIP compiler driver 2940, an HCC 2960, and HCC device executable code 2982.

CUDA source code 2910 may be a collection of human-readable code in a CUDA programming language. A CUDA programming language can be an extension of the C++ programming language that includes mechanisms to define device code and distinguish between device code and host code. Device code can include source code that, after compilation, is executable in parallel on a device. A device may be a processor that is optimized for parallel instruction processing, such as, but not limited to, CUDA-enabled GPU 2990, GPU 2992, or another GPGPU, etc. Host code is source code that, after compilation, is executable on a host. A host is a processor that is optimized for sequential instruction processing, such as, but not limited to, CPU 2990.

CUDA source code 2910 can include any number (including zero) of global functions 2912, any number (including zero) of device functions 2914, any number (including zero) of host functions 2916, and any number (including zero) of host/device functions 2918. Global functions 2912, device functions 2914, host functions 2916, and host/device functions 2918 may be mixed in CUDA source code 2910. Each of global functions 2912 may be executable on a device and callable from a host. One or more of global functions 2912 may therefore act as entry points to a device. Each of global functions 2912 can be a kernel. In a technique known as dynamic parallelism, one or more of global functions 2912 can define a kernel that is executable on a device and callable from such a device. A kernel can be executed N (where N is any positive integer) times in parallel by N different threads on a device during execution.

Each of device functions 2914 can be executed on a device and callable from such a device only. Each of host functions 2916 can be executed on a host and callable from such a host only. Each of host/device functions 2916 may define both a host version of a function that is executable on a host and callable from such a host only and a device version of the function that is executable on a device and callable from such a device only.

CUDA source code 2910 may also include any number of calls to any number of functions that may be defined via a CUDA runtime API 2902. CUDA runtime API 2902 may include any number of functions that execute on a host to allocate and deallocate device memory, transfer data between host memory and device memory, manage systems with multiple devices, etc. CUDA source code 2910 may also include any number of calls to any number of functions that may be specified in any number of other CUDA APIs. A CUDA API may be any API that is designed for use by CUDA code. CUDA APIs can include CUDA runtime API 2902, a CUDA driver API, APIs for any number of CUDA libraries, etc, including any API(s) described elsewhere herein. Relative to CUDA runtime API 2902, a CUDA driver API can be a lower-level API but can provide finer-grained control of a device. Examples of CUDA libraries include cuBLAS, cuFFT, cuRAND, cuDNN, etc.

CUDA compiler 2950 may compile input CUDA code (e.g., CUDA source code 2910) to generate host executable code 2970(1) and CUDA device executable code 2984. CUDA compiler 2950 may be, but is not limited to, NVCC. Host executable code 2970(1) can be a compiled version of host code included in input source code that is executable on CPU 2990. CPU 2990 may be any processor that is optimized for sequential instruction processing.

CUDA device executable code 2984 may be a compiled version of device code included in input source code that is executable on CUDA-enabled GPU 2994. CUDA device executable code 2984 may include binary code. CUDA device executable code 2984 can include IR code, such as, but not limited to, PTX code, that is further compiled at runtime into binary code for a specific target device (e.g., CUDA-enabled GPU 2994) by a device driver. CUDA-enabled GPU 2994 may include any processor that is optimized for parallel instruction processing and that supports CUDA. CUDA-enabled GPU 2994 may be developed by NVIDIA Corporation of Santa Clara, CA.

CUDA to HIP translation tool 2920 can be configured to translate CUDA source code 2910 to functionally similar HIP source code 2930. HIP source code 2930 may include a collection of human-readable code in a HIP programming language. HIP code can include human-readable code in a HIP programming language. A HIP programming language can include an extension of the C++ programming language that includes functionally similar versions of CUDA mechanisms to define device code and distinguish between device code and host code. A HIP programming language may include a subset of functionality of a CUDA programming language. For example, a HIP programming language includes mechanism(s) to define global functions 2912, but such a HIP programming language may lack support for dynamic parallelism and therefore global functions 2912 defined in HIP code may be callable from a host only.

HIP source code 2930 may include any number (including zero) of global functions 2912, any number (including zero) of device functions 2914, any number (including zero) of host functions 2916, and any number (including zero) of host/device functions 2918. HIP source code 2930 may also include any number of calls to any number of functions that may be specified in a HIP runtime API 2932. HIP runtime API 2932 may include functionally similar versions of a subset of functions included in CUDA runtime API 2902. HIP source code 2930 may also include any number of calls to any number of functions that may be specified in any number of other HIP APIs. A HIP API may be any API that is designed for use by HIP code and/or ROCm. HIP APIs may include HIP runtime API 2932, a HIP driver API, APIs for any number of HIP libraries, APIs for any number of ROCm libraries, etc.

CUDA to HIP translation tool 2920 can convert each kernel call in CUDA code from a CUDA syntax to a HIP syntax and can convert any number of other CUDA calls in CUDA code to any number of other functionally similar HIP calls. A CUDA call can include a call to a function specified in a CUDA API, and a HIP call can include a call to a function specified in a HIP API. CUDA to HIP translation tool 2920 may convert any number of calls to functions specified in CUDA runtime API 2902 to any number of calls to functions specified in HIP runtime API 2932.

CUDA to HIP translation tool 2920 can include a tool known as hipify-perl that executes a text-based translation process. CUDA to HIP translation tool 2920 can include a tool known as hipify-clang that, relative to hipify-perl, executes a more complex and more robust translation process that involves parsing CUDA code using clang (a compiler front-end) and then translating resulting symbols. Converting CUDA code to HIP code may include modifications (e.g., manual edits) in addition to those performed by CUDA to HIP translation tool 2920.

HIP compiler driver 2940 can include a front end that determines a target device 2946 and then configures a compiler that is compatible with target device 2946 to compile HIP source code 2930. Target device 2946 can include a processor that is optimized for parallel instruction processing. HIP compiler driver 2940 may determine target device 2946 in any technically feasible fashion.

If target device 2946 is compatible with CUDA (e.g., CUDA-enabled GPU 2994), then HIP compiler driver 2940 can generate a HIP/NVCC compilation command 2942. HIP/NVCC compilation command 2942 can configure CUDA compiler 2950 to compile HIP source code 2930 using a HIP to CUDA translation header and a CUDA runtime library. In response to HIP/NVCC compilation command 2942, CUDA compiler 2950 may generate host executable code 2970(1) and CUDA device executable code 2984.

If target device 2946 is not compatible with CUDA, then HIP compiler driver 2940 may generate a HIP/HCC compilation command 2944. HIP/HCC compilation command 2944 can configure HCC 2960 to compile HIP source code 2930 using an HCC header and a HIP/HCC runtime library. In response to HIP/HCC compilation command 2944, HCC 2960 may generate host executable code 2970(2) and HCC device executable code 2982. HCC device executable code 2982 may be a compiled version of device code included in HIP source code 2930 that is executable on GPU 2992. GPU 2992 may be any processor that is optimized for parallel instruction processing, is not compatible with CUDA, and is compatible with HCC. GPU 2992 can be developed by AMD Corporation of Santa Clara, CA. GPU 2992 can include a non-CUDA-enabled GPU 2992.

For explanatory purposes only, three different flows that may be implemented in at least one embodiment to compile CUDA source code 2910 for execution on CPU 2990 and different devices are depicted in FIG. 29. A direct CUDA flow can compile CUDA source code 2910 for execution on CPU 2990 and CUDA-enabled GPU 2994 without translating CUDA source code 2910 to HIP source code 2930. An indirect CUDA flow can translate CUDA source code 2910 to HIP source code 2930 and then compiles HIP source code 2930 for execution on CPU 2990 and CUDA-enabled GPU 2994. A CUDA/HCC flow can translate CUDA source code 2910 to HIP source code 2930 and then can compile HIP source code 2930 for execution on CPU 2990 and GPU 2992.

A direct CUDA flow that may be implemented is depicted via dashed lines and a series of bubbles annotated A1-A3. As depicted with bubble annotated A1, CUDA compiler 2950 can receive CUDA source code 2910 and a CUDA compile command 2948 that can configure CUDA compiler 2950 to compile CUDA source code 2910. CUDA source code 2910 that can be used in a direct CUDA flow can be written in a CUDA programming language that is based on a programming language other than C++ (e.g., C, Fortran, Python, Java, etc.). In response to CUDA compile command 2948, CUDA compiler 2950 can generate host executable code 2970(1) and CUDA device executable code 2984 (depicted with bubble annotated A2). As depicted with bubble annotated A3, host executable code 2970(1) and CUDA device executable code 2984 may be executed on, respectively, CPU 2990 and CUDA-enabled GPU 2994. CUDA device executable code 2984 can include binary code. CUDA device executable code 2984 can include PTX code and can be further compiled into binary code for a specific target device at runtime.

An indirect CUDA flow that may be implemented is depicted via dotted lines and a series of bubbles annotated B1-B6. As depicted with bubble annotated B1, CUDA to HIP translation tool 2920 can receive CUDA source code 2910. As depicted with bubble annotated B2, CUDA to HIP translation tool 2920 can translate CUDA source code 2910 to HIP source code 2930. As depicted with bubble annotated B3, HIP compiler driver 2940 can receive HIP source code 2930 and can determine that target device 2946 is CUDA-enabled.

As depicted with bubble annotated B4, HIP compiler driver 2940 can generate HIP/NVCC compilation command 2942 and can transmit both HIP/NVCC compilation command 2942 and HIP source code 2930 to CUDA compiler 2950. HIP/NVCC compilation command 2942 can configure CUDA compiler 2950 to compile HIP source code 2930 using a HIP to CUDA translation header and a CUDA runtime library. HIP to CUDA translation header can translate any number of mechanisms (e.g., functions) specified in any number of HIP APIs to any number of mechanisms specified in any number of CUDA APIs. CUDA compiler 2950 may use HIP to CUDA translation header in conjunction with a CUDA runtime library corresponding to CUDA runtime API 2902 to generate host executable code 2970(1) and CUDA device executable code 2984. In response to HIP/NVCC compilation command 2942, CUDA compiler 2950 can generate host executable code 2970(1) and CUDA device executable code 2984 (depicted with bubble annotated B5). As depicted with bubble annotated B6, host executable code 2970(1) and CUDA device executable code 2984 may be executed on, respectively, CPU 2990 and CUDA-enabled GPU 2994. CUDA device executable code 2984 can include binary code. CUDA device executable code 2984 can include PTX code and can be further compiled into binary code for a specific target device at runtime.

A CUDA/HCC flow that may be implemented is depicted via solid lines and a series of bubbles annotated C1-C6. As depicted with bubble annotated C1, CUDA to HIP translation tool 2920 can receive CUDA source code 2910. As depicted with bubble annotated C2, CUDA to HIP translation tool 2920 can translate CUDA source code 2910 to HIP source code 2930. As depicted with bubble annotated C3, HIP compiler driver 2940 can receive HIP source code 2930 and can determine that target device 2946 is not CUDA-enabled.

HIP compiler driver 2940 may generate HIP/HCC compilation command 2944 and may transmit both HIP/HCC compilation command 2944 and HIP source code 2930 to HCC 2960 (depicted with bubble annotated C4). HIP/HCC compilation command 2944 can configure HCC 2960 to compile HIP source code 2930 using an HCC header and a HIP/HCC runtime library. HIP/HCC runtime library can correspond to HIP runtime API 2932. HCC header may include any number and type of interoperability mechanisms for HIP and HCC. In response to HIP/HCC compilation command 2944, HCC 2960 can generate host executable code 2970(2) and HCC device executable code 2982 (depicted with bubble annotated C5). As depicted with bubble annotated C6, host executable code 2970(2) and HCC device executable code 2982 may be executed on, respectively, CPU 2990 and GPU 2992.

After CUDA source code 2910 is translated to HIP source code 2930, HIP compiler driver 2940 may subsequently be used to generate executable code for either CUDA-enabled GPU 2994 or GPU 2992 without re-executing CUDA to HIP translation tool 2920. CUDA to HIP translation tool 2920 can translate CUDA source code 2910 to HIP source code 2930 that is then stored in memory. HIP compiler driver 2940 can then configure HCC 2960 to generate host executable code 2970(2) and HCC device executable code 2982 based on HIP source code 2930. In at least one embodiment, HIP compiler driver 2940 subsequently configures CUDA compiler 2950 to generate host executable code 2970(1) and CUDA device executable code 2984 based on stored HIP source code 2930.

An example kernel may be translated by CUDA-to-HIP translation tool 2920 of FIG. 29, in accordance with at least one embodiment. CUDA source code 2910 partitions an overall problem that a given kernel is designed to solve into relatively coarse sub-problems that can independently be solved using thread blocks. Each thread block includes any number of threads. Each sub-problem can be partitioned into relatively fine pieces that can be solved cooperatively in parallel by threads within a thread block. Threads within a thread block can cooperate by sharing data through shared memory and by synchronizing execution to coordinate memory accesses.

CUDA source code 2910 can organize thread blocks associated with a given kernel into a one-dimensional, a two-dimensional, or a three-dimensional grid of thread blocks. Each thread block includes any number of threads, and a grid includes any number of thread blocks.

A kernel can be a function in device code that is defined using a "_global_" declaration specifier. The dimension of a grid that executes a kernel for a given kernel call and associated streams may be specified using a CUDA kernel launch syntax. CUDA kernel launch syntax is specified as "KernelName<<<GridSize, BlockSize, SharedMemorySize, Stream>>>(KernelArguments);". An execution configuration syntax can include a "<<< ... >>>" construct that is inserted between a kernel name ("KernelName") and a parenthesized list of kernel arguments ("KernelArguments"). CUDA kernel launch syntax can include a CUDA launch function syntax instead of an execution configuration syntax.

"GridSize" can be of a type dim3 and specify the dimension and size of a grid. Type dim3 may be a CUDA-defined structure that includes unsigned integers x, y, and z. If z is not specified, then z may default to one. If y is not specified, then y may default to one. The number of thread blocks in a grid can be equal to the product of GridSize.x, GridSize.y, and GridSize.z. "BlockSize" can be of type dim3 and specify the dimension and size of each thread block. The number of threads per thread block may be equal to the product of BlockSize.x, BlockSize.y, and BlockSize.z. Each thread that executes a kernel may be given a unique thread ID that is accessible within the kernel through a built-in variable (e.g., "threadIdx").

With respect to CUDA kernel launch syntax, "SharedMemorySize" may be an optional argument that may specify a number of bytes in a shared memory that is dynamically allocated per thread block for a given kernel call in addition to statically allocated memory. With respect to CUDA kernel launch syntax, SharedMemorySize may default to zero. With respect to CUDA kernel launch syntax, "Stream" may be an optional argument that specifies an associated stream and defaults to zero to specify a default stream. A stream may be a sequence of commands (possibly issued by different host threads) that execute in order. Different streams may execute commands out of order with respect to one another or concurrently.

CUDA source code 2910 may include a kernel definition for an example kernel "MatAdd" and a main function. Main function may be host code that executes on a host and includes a kernel call that causes kernel MatAdd to execute on a device. Kernel MatAdd can add two matrices A and B of size NxN, where N is a positive integer, and store the result in a matrix C. Main function can define a threadsPerBlock variable as 16 by 16 and a numBlocks variable as N/16 by N/16. Main function can then specify kernel call "MatAdd<<<numBlocks, threadsPerBlock>>>(A, B, C);". As per CUDA kernel launch syntax, kernel MatAdd can be executed using a grid of thread blocks having a dimension N/16 by N/16, where each thread block has a dimension of 16 by 16. Each thread block can include 256 threads, a grid can be created with enough blocks to have one thread per matrix element, and each thread in such a grid may execute kernel MatAdd to perform one pair-wise addition.

While translating CUDA source code 2910 to HIP source code 2930, CUDA to HIP translation tool 2920 may translate each kernel call in CUDA source code 2910 from CUDA kernel launch syntax to a HIP kernel launch syntax and may convert any number of other CUDA calls in source code 2910 to any number of other functionally similar HIP calls. HIP kernel launch syntax can be specified as "hipLaunchKernelGGL(KernelName,GridSize, BlockSize, SharedMemorySize, Stream, KernelArguments);". Each of KernelName, GridSize, BlockSize, ShareMemorySize, Stream, and KernelArguments can have the same meaning in HIP kernel launch syntax as in CUDA kernel launch syntax (described previously herein). Arguments SharedMemorySize and Stream can be required in HIP kernel launch syntax and can be optional in CUDA kernel launch syntax.

A portion of HIP source code 2930 can be identical to a portion of CUDA source code 2910 depicted except for a kernel call that causes kernel MatAdd to execute on a device. Kernel MatAdd may be defined in HIP source code 2930 with the same "_global_" declaration specifier with which kernel MatAdd is defined in CUDA source code 2910. A kernel call in HIP source code 2930 may be "hipLaunchKernelGGL(MatAdd, numBlocks, threadsPerBlock, 0, 0, A, B, C);", while a corresponding kernel call in CUDA source code 2910 is "MatAdd<<<numBlocks, threadsPerBlock>>>(A, B, C);".

Other implementations are contemplated and can be performed similarly to the CUDA and HIP implementations above, such as oneAPI, OpenCL, and other programming platforms. Code can be translated in any direction. For example, CUDA can be translated to HIP, and CUDA can be translated to OpenCL. SnuCL-Tr and CUCL can be used to translate OpenCL to CUDA or CUDA to OpenCL, respectively. Compiled code or intermediate representations (e.g., CUDA PTX code) can also be translated to run on other processor platforms (e.g., AMD or Intel). For example, PTX code can be translated to run on Intel or AMD processors using a translation tool, such as ZLUDA.

One or more techniques described herein can utilize a oneAPI programming model. A oneAPI programming model can refer to a programming model for interacting with various compute accelerator architectures. OneAPI may refer to an application programming interface (API) designed to interact with various compute accelerator architectures. A oneAPI programming model may utilize a DPC++ programming language. A DPC++ programming language may refer to a high-level language for data parallel programming productivity. A DPC++ programming language can be based at least in part on C and/or C++ programming languages. A oneAPI programming model can be a programming model such as, but not limited to, those developed by Intel Corporation of Santa Clara, CA.

OneAPI and/or oneAPI programming model can be utilized to interact with various accelerator, GPU, processor, and/or variations thereof, architectures. OneAPI may include a set of libraries that implement various functionalities. OneAPI may include at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

A oneAPI DPC++ library, also referred to as oneDPL, can be a library that implements algorithms and functions to accelerate DPC++ kernel programming. OneDPL may implement one or more standard template library (STL) functions. OneDPL can implement one or more parallel STL functions. OneDPL can provide a set of library classes and functions such as, but not limited to, parallel algorithms, iterators, function object classes, range-based API, and/or variations thereof. OneDPL can implement one or more classes and/or functions of a C++ standard library. OneDPL can implement one or more random number generator functions.

A oneAPI math kernel library, also referred to as oneMKL, can be a library that implements various optimized and parallelized routines for various mathematical functions and/or operations. OneMKL can implement one or more basic linear algebra subprograms (BLAS) and/or linear algebra package (LAPACK) dense linear algebra routines. OneMKL may implement one or more sparse BLAS linear algebra routines. OneMKL can implement one or more random number generators (RNGs). OneMKL may implement one or more vector mathematics (VM) routines for mathematical operations on vectors. OneMKL may implement one or more Fast Fourier Transform (FFT) functions.

A oneAPI data analytics library, also referred to as oneDAL, can include a library that implements various data analysis applications and distributed computations. OneDAL can implement various algorithms for preprocessing, transformation, analysis, modeling, validation, and decision making for data analytics, in batch, online, and distributed processing modes of computation. OneDAL can implement various C++ and/or Java APIs and various connectors to one or more data sources. OneDAL may implement DPC++ API extensions to a traditional C++ interface and enables GPU usage for various algorithms.

A oneAPI deep neural network library, also referred to as oneDNN, can include a library that implements various deep learning functions. OneDNN may implement various neural network, machine learning, and deep learning functions, algorithms, and/or variations thereof.

A oneAPI collective communications library, also referred to as oneCCL, can include a library that implements various applications for deep learning and machine learning workloads. OneCCL can be built upon lower-level communication middleware, such as, but not limited to, message passing interface (MPI) and libfabrics. OneCCL can enable a set of deep learning specific optimizations, such as, but not limited to, prioritization, persistent operations, out of order executions, and/or variations thereof. OneCCL can implement various CPU and GPU functions.

A oneAPI threading building blocks library, also referred to as oneTBB, can include a library that implements various parallelized processes for various applications. OneTBB can be utilized for instruction-based, shared parallel programming on a host. OneTBB may implement generic parallel algorithms. OneTBB may implement concurrent containers. OneTBB may implement a scalable memory allocator. OneTBB may implement a work-stealing instruction scheduler. OneTBB may implement low-level synchronization primitives. OneTBB may be compiler-independent and usable on various processors, such as, but not limited to, GPUs, PPUs, CPUs, and/or variations thereof.

A oneAPI video processing library, also referred to as oneVPL, can include a library that is utilized for accelerating video processing in one or more applications. OneVPL can implement various video decoding, encoding, and processing functions. OneVPL can implement various functions for media pipelines on CPUs, GPUs, and other accelerators. OneVPL can implement device discovery and selection in media centric and video analytics workloads. OneVPL can implement API primitives for zero-copy buffer sharing.

A oneAPI programming model may utilize a DPC++ programming language. A DPC++ programming language can include a programming language that can include functionally similar versions of CUDA mechanisms to define device code and distinguish between device code and host code. A DPC++ programming language may include a subset of functionality of a CUDA programming language. One or more CUDA programming model operations may be performed using a oneAPI programming model using a DPC++ programming language.

Any application programming interface (API) described herein can be compiled into one or more instructions, operations, or any other signal by a compiler, interpreter, or other software tool. Compilation can include generating one or more machine-executable instructions, operations, or other signals from source code. An API compiled into one or more instructions, operations, or other signals, when performed, can cause one or more processors such as, but not limited to, processors described, e.g., in FIGS. 14-26, or any other logic circuit further described herein to perform one or more computing operations.

In at least one embodiment, translation tools described elsewhere herein, such as, but not limited to, can include one or more circuits to translate CUDA code to perform an API to pause and/or resume one or more GPU instructions to HIP, oneAPI, OpenCL, or any other language used to perform any of the operations described above or elsewhere herein. One or more circuits can be configured by software to translate CUDA code to perform an API to pause and/or resume one or more GPU instructions to HIP, oneAPI, OpenCL, or any other language used to perform any of the operations described above or elsewhere herein.

### AUTONOMOUS VEHICLE

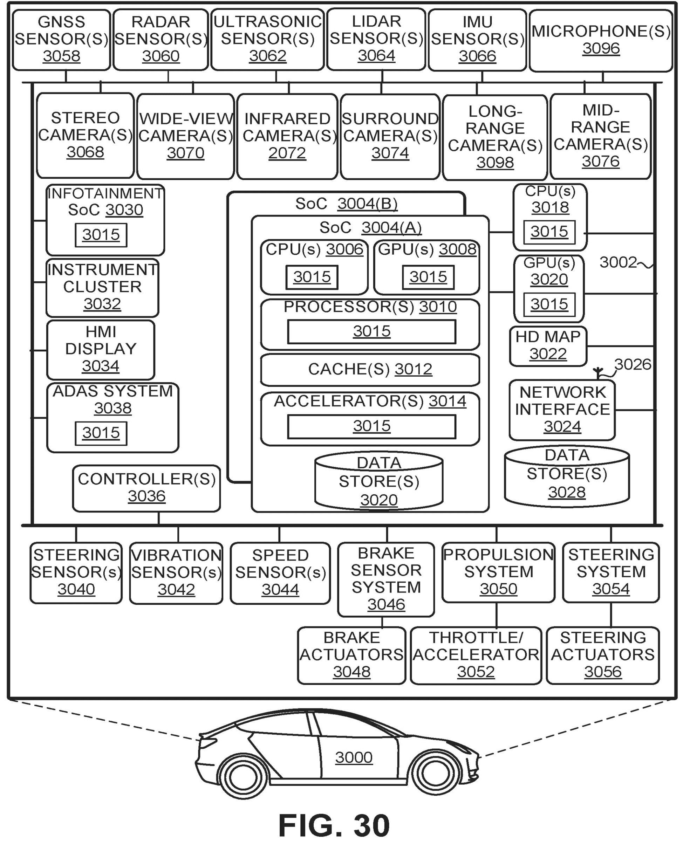

FIG. 30 illustrates an example of an autonomous vehicle 3000, in accordance with at least one embodiment. Autonomous vehicle 3000 (alternatively referred to herein as "vehicle 3000") may be a passenger vehicle, such as, but not limited to, a car, a truck, a bus, and/or another type of vehicle that accommodates one or more passengers. In at least one embodiment, vehicle 3000 may be a semi-tractor-trailer truck used for hauling cargo. Vehicle 3000 may be an airplane, robotic vehicle, or other kind of vehicle.

Autonomous vehicles may be described in terms of automation levels, defined by National Highway Traffic Safety Administration ("NHTSA"), a division of US Department of Transportation, and Society of Automotive Engineers ("SAE") "Taxonomy and Definitions for Terms Related to Driving Automation Systems for On-Road Motor Vehicles" (e.g., Standard No. J3016-201806, published on June 15, 2018, Standard No. J3016-201609, published on September 30, 2016, and previous and future versions of this standard). In at least one embodiment, vehicle 3000 may be capable of functionality in accordance with one or more of Level 1 through Level 5 of autonomous driving levels. For example, in at least one embodiment, vehicle 3000 may be capable of conditional automation (Level 3), high automation (Level 4), and/or full automation (Level 5), depending on embodiment.

Vehicle 3000 may include components such as, but not limited to, a chassis, a vehicle body, wheels (e.g., 2, 4, 6, 8, 18, etc.), tires, axles, and other components of a vehicle. Vehicle 3000 may include a propulsion system 3050, such as, but not limited to, an internal combustion engine, hybrid electric power plant, an all-electric engine, and/or another propulsion system type. Propulsion system 3050 may be connected to a drive train of vehicle 3000, which may include a transmission, to enable propulsion of vehicle 3000. Propulsion system 3050 may be controlled in response to receiving signals from a throttle/accelerator(s) 3052.

A steering system 3054, which may include a steering wheel, is used to steer vehicle 3000 (e.g., along a desired path or route) when propulsion system 3050 is operating (e.g., when vehicle 3000 is in motion). Steering system 3054 may receive signals from steering actuator(s) 3056. A steering wheel may be optional for full automation (Level 5) functionality. A brake sensor system 3046 may be used to operate vehicle brakes in response to receiving signals from brake actuator(s) 3048 and/or brake sensors.

Controller(s) 3036, which may include one or more system on chips ("SoCs") and/or graphics processing unit(s) ("GPU(s)"), can provide signals (e.g., representative of commands) to one or more components and/or systems of vehicle 3000. For instance, controller(s) 3036 may send signals to operate vehicle brakes via brake actuator(s) 3048, to operate steering system 3054 via steering actuator(s) 3056, to operate propulsion system 3050 via throttle/accelerator(s) 3052. Controller(s) 3036 may include one or more onboard (e.g., integrated) computing devices that process sensor signals, and output operation commands (e.g., signals representing commands) to enable autonomous driving and/or to assist a human driver in driving vehicle 3000. Controller(s) 3036 may include a first controller for autonomous driving functions, a second controller for functional safety functions, a third controller for artificial intelligence functionality (e.g., computer vision), a fourth controller for infotainment functionality, a fifth controller for redundancy in emergency conditions, and/or other controllers. A single controller may handle two or more of above functionalities, two or more controllers may handle a single functionality, and/or any combination thereof.

Controller(s) 3036 may provide signals for controlling one or more components and/or systems of vehicle 3000 in response to sensor data received from one or more sensors (e.g., sensor inputs). Sensor data may be received from, for example, global navigation satellite systems ("GNSS") sensor(s) 3058 (e.g., Global Positioning System sensor(s)), RADAR sensor(s) 3060, ultrasonic sensor(s) 3062, LIDAR sensor(s) 3064, inertial measurement unit ("IMU") sensor(s) 3066 (e.g., accelerometer(s), gyroscope(s), a magnetic compass or magnetic compasses, magnetometer(s), etc.), microphone(s) 3096, stereo camera(s) 3068, wide-view camera(s) 3070 (e.g., fisheye cameras), infrared camera(s) 3072, surround camera(s) 3074 (e.g., 360 degree cameras), long-range cameras 3098, mid-range camera(s) 3076, speed sensor(s) 3044 (e.g., for measuring speed of vehicle 3000), vibration sensor(s) 3042, steering sensor(s) 3040, brake sensor(s) (e.g., as part of brake sensor system 3046), and/or other sensor types.

One or more of controller(s) 3036 may receive inputs (e.g., represented by input data) from an instrument cluster 3032 of vehicle 3000 and provide outputs (e.g., represented by output data, display data, etc.) via a human-machine interface ("HMI") display 3034, an audible annunciator, a loudspeaker, and/or via other components of vehicle 3000. Outputs may include information such as, but not limited to, vehicle velocity, speed, time, map data (e.g., a High Definition map (not shown), location data (e.g., vehicle's 3000 location, such as, but not limited to, on a map), direction, location of other vehicles (e.g., an occupancy grid), information about objects and status of objects as perceived by controller(s) 3036, etc. For example, HMI display 3034 may display information about presence of one or more objects (e.g., a street sign, caution sign, traffic light changing, etc.), and/or information about driving maneuvers vehicle has made, is making, or will make (e.g., changing lanes now, taking exit 34B in two miles, etc.).

Each of components, features, and systems of vehicle 3000 in FIG. 30 may be connected via a bus 3002. Bus 3002 may include a CAN data interface (alternatively referred to herein as a "CAN bus"). A CAN may be a network inside vehicle 3000 used to aid in control of various features and functionality of vehicle 3000, such as, but not limited to, actuation of brakes, acceleration, braking, steering, windshield wipers, etc. Bus 3002 may be configured to have dozens or even hundreds of nodes, each with its own unique identifier (e.g., a CAN ID). Bus 3002 may be read to find steering wheel angle, ground speed, engine revolutions per minute ("RPMs"), button positions, and/or other vehicle status indicators. Bus 3002 may be a CAN bus that is ASIL B compliant.

In addition to, or alternatively from CAN, FlexRay and/or Ethernet protocols may be used. There may be any number of busses forming bus 3002, which may include zero or more CAN busses, zero or more FlexRay busses, zero or more Ethernet busses, and/or zero or more other types of busses using different protocols. Two or more busses may be used to perform different functions, and/or may be used for redundancy. For example, a first bus may be used for collision avoidance functionality and a second bus may be used for actuation control. Each bus of bus 3002 may communicate with any of components of vehicle 3000, and two or more busses of bus 3002 may communicate with corresponding components. Each of any number of system(s) on chip(s) ("SoC(s)") 3004 (such as, but not limited to, SoC 3004(A) and SoC 3004(B)), each of controller(s) 3036, and/or each computer within vehicle may have access to same input data (e.g., inputs from sensors of vehicle 3000), and may be connected to a common bus, such CAN bus.

Any number of cameras can be positioned at any choice of camera locations and fields of view for autonomous vehicle 3000 of FIG. 30A, in accordance with at least one embodiment. Cameras and respective fields of view may be one example embodiment and are not intended to be limiting. For instance, additional and/or alternative cameras may be included and/or cameras may be located at different locations on vehicle 3000.

Camera types for cameras may include digital cameras that may be adapted for use with components and/or systems of vehicle 3000. Camera(s) may operate at automotive safety integrity level ("ASIL") B and/or at another ASIL. Camera types may be capable of any image capture rate, such as, but not limited to, 60 frames per second (fps), 1220 fps, 240 fps, etc., depending on embodiment. Cameras may be capable of using rolling shutters, global shutters, another type of shutter, or a combination thereof. In at least one embodiment, color filter array may include a red clear clear clear ("RCCC") color filter array, a red clear clear blue ("RCCB") color filter array, a red blue green clear ("RBGC") color filter array, a Foveon X3 color filter array, a Bayer sensors ("RGGB") color filter array, a monochrome sensor color filter array, and/or another type of color filter array. Clear pixel cameras, such as, but not limited to, cameras with an RCCC, an RCCB, and/or an RBGC color filter array, may be used in an effort to increase light sensitivity.

One or more of camera(s) may be used to perform advanced driver assistance systems ("ADAS") functions (e.g., as part of a redundant or fail-safe design). For example, a MultiFunction Mono Camera may be installed to provide functions including lane departure warning, traffic sign assist and intelligent headlamp control. One or more of camera(s) (e.g., all cameras) may record and provide image data (e.g., video) simultaneously.

One or more cameras may be mounted in a mounting assembly, such as, but not limited to, a custom designed (three-dimensional ("3D") printed) assembly, in order to cut out stray light and reflections from within vehicle 3000 (e.g., reflections from dashboard reflected in windshield mirrors) which may interfere with camera image data capture abilities. With reference to wing-mirror mounting assemblies, wing-mirror assemblies may be custom 3D printed so that a camera mounting plate matches a shape of a wing-mirror. Camera(s) may be integrated into wing-mirrors. For side-view cameras, camera(s) may also be integrated within four pillars at each corner of a cabin.

Cameras with a field of view that include portions of an environment in front of vehicle 3000 (e.g., front-facing cameras) may be used for surround view, to help identify forward facing paths and obstacles, as well as aid in, with help of one or more of controller(s) 3036 and/or control SoCs, providing information critical to generating an occupancy grid and/or determining preferred vehicle paths. Front-facing cameras may be used to perform many similar ADAS functions as LIDAR, including emergency braking, pedestrian detection, and collision avoidance. Front-facing cameras may also be used for ADAS functions and systems including Lane Departure Warnings ("LDW"), Autonomous Cruise Control ("ACC"), and/or other functions such as, but not limited to, traffic sign recognition.

A variety of cameras may be used in a front-facing configuration, including, for example, a monocular camera platform that includes a CMOS ("complementary metal oxide semiconductor") color imager. A wide-view camera 3070 may be used to perceive objects coming into view from a periphery (e.g., pedestrians, crossing traffic or bicycles). There may be any number (including zero) wide-view cameras 3070 on vehicle 3000. Any number of long-range camera(s) 3098 (e.g., a long-view stereo camera pair) may be used for depth-based object detection, especially for objects for which a neural network has not yet been trained. Long-range camera(s) 3098 may also be used for object detection and classification, as well as basic object tracking.

Any number of stereo camera(s) 3068 may also be included in a front-facing configuration. One or more of stereo camera(s) 3068 may include an integrated control unit comprising a scalable processing unit, which may provide a programmable logic ("FPGA") and a multi-core micro-processor with an integrated Controller Area Network ("CAN") or Ethernet interface on a single chip. Such a unit may be used to generate a 3D map of an environment of vehicle 3000, including a distance estimate for all points in an image. One or more of stereo camera(s) 3068 may include compact stereo vision sensor(s) that may include two camera lenses (one each on left and right) and an image processing chip that may measure distance from vehicle 3000 to target object and use generated information (e.g., metadata) to activate autonomous emergency braking and lane departure warning functions. Other types of stereo camera(s) 3068 may be used in addition to, or alternatively from, those described herein.

Cameras with a field of view that include portions of environment to sides of vehicle 3000 (e.g., side-view cameras) may be used for surround view, providing information used to create and update an occupancy grid, as well as to generate side impact collision warnings. For example, surround camera(s) 3074 (e.g., four surround cameras) could be positioned on vehicle 3000. Surround camera(s) 3074 may include any number and combination of wide-view cameras, fisheye camera(s), 360 degree camera(s), and/or similar cameras. For instance, four fisheye cameras may be positioned on a front, a rear, and sides of vehicle 3000. Vehicle 3000 may use three surround camera(s) 3074 (e.g., left, right, and rear), and may leverage one or more other camera(s) (e.g., a forward-facing camera) as a fourth surround-view camera.

Cameras with a field of view that include portions of an environment behind vehicle 3000 (e.g., rear-view cameras) may be used for parking assistance, surround view, rear collision warnings, and creating and updating an occupancy grid. A wide variety of cameras may be used including, but not limited to, cameras that may be also suitable as a front-facing camera(s) (e.g., long-range cameras 3098 and/or mid-range camera(s) 3076, stereo camera(s) 3068, infrared camera(s) 3072, etc.,) as described herein.

Vehicle 3000 may include any number of SoCs 3004 or other processors described elsewhere herein, such as, but not limited to, processors and/or components illustrated and described for FIGS. 14-26. Each of SoCs 3004 may include central processing units ("CPU(s)") 3006, graphics processing units ("GPU(s)") 3008, processor(s) 3010, cache(s) 3012, accelerator(s) 3014, data store(s) 3016, and/or other components and features not illustrated. SoC(s) 3004 may be used to control vehicle 3000 in a variety of platforms and systems. For example, SoC(s) 3004 may be combined in a system (e.g., system of vehicle 3000) with a High Definition ("HD") map 3022 which may obtain map refreshes and/or updates via network interface 3024 from one or more servers (not shown). SoCs 3004 may include logic 3015 that can include any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

CPU(s) 3006 may include a CPU cluster or CPU complex (alternatively referred to herein as a "CCPLEX"). CPU(s) 3006 may include multiple cores and/or level two ("L2") caches. For instance, CPU(s) 3006 may include eight cores in a coherent multi-processor configuration. CPU(s) 3006 may include four dual-core clusters where each cluster has a dedicated L2 cache (e.g., a 2 megabyte (MB) L2 cache). CPU(s) 3006 (e.g., CCPLEX) may be configured to support simultaneous cluster operations enabling any combination of clusters of CPU(s) 3006 to be active at any given time.

One or more of CPU(s) 3006 may implement power management capabilities that include one or more of following features: individual hardware blocks may be clock-gated automatically when idle to save dynamic power; each core clock may be gated when such core is not actively executing instructions due to execution of Wait for Interrupt ("WFI")/Wait for Event ("WFE") instructions; each core may be independently power-gated; each core cluster may be independently clock-gated when all cores may be clock-gated or power-gated; and/or each core cluster may be independently power-gated when all cores may be power-gated. CPU(s) 3006 may further implement an enhanced algorithm for managing power states, where allowed power states and expected wakeup times may be specified, and hardware/microcode determines which best power state to enter for core, cluster, and CCPLEX. Processing cores may support simplified power state entry sequences in software with work offloaded to microcode.

GPU(s) 3008 may include an integrated GPU (alternatively referred to herein as an "iGPU"). GPU(s) 3008 may be programmable and may be efficient for parallel workloads. GPU(s) 3008 may use an enhanced tensor instruction set. GPU(s) 3008 may include one or more streaming microprocessors, where each streaming microprocessor may include a level one ("L1") cache (e.g., an L1 cache with at least 96 KB storage capacity), and two or more streaming microprocessors may share an L2 cache (e.g., an L2 cache with a 512 KB storage capacity). GPU(s) 3008 may include at least eight streaming microprocessors. GPU(s) 3008 may use compute application programming interface(s) (API(s)). GPU(s) 3008 may use one or more parallel computing platforms and/or programming models (e.g., NVIDIA's CUDA model). Streaming microprocessors may be referred to as streaming multiprocessors ("SMs"), stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

One or more of GPU(s) 3008 may be power-optimized for best performance in automotive and embedded use cases. For example, GPU(s) 3008 could be fabricated on Fin field-effect transistor ("FinFET") circuitry. Each streaming microprocessor may incorporate a number of mixed-precision processing cores partitioned into multiple blocks. For example, 64 PF32 cores and 32 FP64 cores could be partitioned into four processing blocks. Each processing block could be allocated 16 FP32 cores, 8 FP64 cores, 16 INT32 cores, two mixed-precision NVIDIA Tensor cores for deep learning matrix arithmetic, a level zero ("L0") instruction cache, a scheduler (e.g., warp scheduler) or sequencer, a dispatch unit, and/or a 64 KB register file. Streaming microprocessors may include independent parallel integer and floating-point data paths to provide for efficient execution of workloads with a mix of computation and addressing calculations. Streaming microprocessors may include independent thread scheduling capability to enable finer-grain synchronization and cooperation between parallel threads. Streaming microprocessors may include a combined L1 data cache and shared memory unit in order to improve performance while simplifying programming.

One or more of GPU(s) 3008 may include a high bandwidth memory ("HBM") and/or a 16 GB HBM2 memory subsystem to provide, in some examples, about 900 GB/second peak memory bandwidth. In addition to, or alternatively from, HBM memory, a synchronous graphics random-access memory ("SGRAM") may be used, such as, but not limited to, a graphics double data rate type five synchronous random-access memory ("GDDR5").

GPU(s) 3008 may include unified memory technology. Address translation services ("ATS") support may be used to allow GPU(s) 3008 to access CPU(s) 3006 page tables directly. When a GPU of GPU(s) 3008 memory management unit ("MMU") experiences a miss, an address translation request may be transmitted to CPU(s) 3006. In response, 2 CPU of CPU(s) 3006 may look in its page tables for a virtual-to-physical mapping for an address and transmit translation back to GPU(s) 3008. Unified memory technology may allow a single unified virtual address space for memory of both CPU(s) 3006 and GPU(s) 3008, thereby simplifying GPU(s) 3008 programming and porting of applications to GPU(s) 3008.

GPU(s) 3008 may include any number of access counters that may keep track of frequency of access of GPU(s) 3008 to memory of other processors. Access counter(s) may help ensure that memory pages may be moved to physical memory of a processor that is accessing pages most frequently, thereby improving efficiency for memory ranges shared between processors.

One or more of SoC(s) 3004 may include any number of cache(s) 3012, including those described herein. For example, cache(s) 3012 could include a level three ("L3") cache that is available to both CPU(s) 3006 and GPU(s) 3008 (e.g., that is connected to CPU(s) 3006 and GPU(s) 3008). Cache(s) 3012 may include a write-back cache that may keep track of states of lines, such as, but not limited to, by using a cache coherence protocol (e.g., MEI, MESI, MSI, etc.). A L3 cache may include 4 MB of memory or more, depending on embodiment, although smaller cache sizes may be used.

One or more of SoC(s) 3004 may include one or more accelerator(s) 3014 (e.g., hardware accelerators, software accelerators, or a combination thereof). SoC(s) 3004 may include a hardware acceleration cluster that may include optimized hardware accelerators and/or large on-chip memory. Large on-chip memory (e.g., 4 MB of SRAM), may enable a hardware acceleration cluster to accelerate neural networks and other calculations. A hardware acceleration cluster may be used to complement GPU(s) 3008 and to off-load some of instructions of GPU(s) 3008 (e.g., to free up more cycles of GPU(s) 3008 for performing other instructions). Accelerator(s) 3014 could be used for targeted workloads (e.g., perception, convolutional neural networks ("CNNs"), recurrent neural networks ("RNNs"), etc.) that may be stable enough to be amenable to acceleration. A CNN may include a region-based or regional convolutional neural networks ("RCNNs") and Fast RCNNs (e.g., as used for object detection) or other type of CNN.

Accelerator(s) 3014 (e.g., hardware acceleration cluster) may include one or more deep learning accelerator ("DLA"). DLA(s) may include one or more Tensor processing units ("TPUs") that may be configured to provide an additional ten trillion operations per second for deep learning applications and inferencing, such as TPU(s) described herein, e.g., in FIG. 24. TPUs may be accelerators configured to, and optimized for, performing image processing functions (e.g., for CNNs, RCNNs, etc.). DLA(s) may further be optimized for a specific set of neural network types and floating point operations, as well as inferencing. Design of DLA(s) may provide more performance per millimeter than a typical general-purpose GPU, and typically vastly exceeds performance of a CPU. TPU(s) may perform several functions, including a single-instance convolution function, supporting, for example, INT8, INT16, and FP16 data types for both features and weights, as well as post-processor functions. DLA(s) may quickly and efficiently execute neural networks, especially CNNs, on processed or unprocessed data for any of a variety of functions, including, for example: a CNN for object identification and detection using data from camera sensors; a CNN for distance estimation using data from camera sensors; a CNN for emergency vehicle detection and identification and detection using data from microphones; a CNN for facial recognition and vehicle owner identification using data from camera sensors; and/or a CNN for security and/or safety related events.

DLA(s) may perform any function of GPU(s) 3008, and by using an inference accelerator, for example, a designer may target either DLA(s) or GPU(s) 3008 for any function. For example, a designer may focus processing of CNNs and floating point operations on DLA(s) and leave other functions to GPU(s) 3008 and/or accelerator(s) 3014.

Accelerator(s) 3014 may include programmable vision accelerator ("PVA"), which may alternatively be referred to herein as a computer vision accelerator. PVA may be designed and configured to accelerate computer vision algorithms for advanced driver assistance system ("ADAS") 3038, autonomous driving, augmented reality ("AR") applications, and/or virtual reality ("VR") applications. PVA may provide a balance between performance and flexibility. For example, each PVA may include, for example, any number of reduced instruction set computer ("RISC") cores, direct memory access ("DMA"), and/or any number of vector processors.

RISC cores may interact with image sensors (e.g., image sensors of any cameras described herein), image signal processor(s), etc. Each RISC core may include any amount of memory. RISC cores may use any of a number of protocols, depending on embodiment. RISC cores may execute a real-time operating system ("RTOS"). RISC cores may be implemented using one or more integrated circuit devices, application specific integrated circuits ("ASICs"), and/or memory devices. For example, RISC cores could include an instruction cache and/or a tightly coupled RAM.

DMA may enable components of PVA to access system memory independently of CPU(s) 3006. DMA may support any number of features used to provide optimization to a PVA including supporting multi-dimensional addressing and/or circular addressing. DMA may support up to six or more dimensions of addressing, which may include block width, block height, block depth, horizontal block stepping, vertical block stepping, and/or depth stepping.

Vector processors may be programmable processors that may be designed to efficiently and flexibly execute programming for computer vision algorithms and provide signal processing capabilities. A PVA may include a PVA core and two vector processing subsystem partitions. A PVA core may include a processor subsystem, DMA engine(s) (e.g., two DMA engines), and/or other peripherals. A vector processing subsystem may operate as a primary processing engine of a PVA, and may include a vector processing unit ("VPU"), an instruction cache, and/or vector memory (e.g., "VMEM"). VPU core may include a digital signal processor such as, but not limited to, a single instruction, multiple data ("SIMD"), very long instruction word ("VLIW") digital signal processor. A combination of SIMD and VLIW may enhance throughput and speed.

Each of vector processors may include an instruction cache and may be coupled to dedicated memory. As a result, each of vector processors may be configured to execute independently of other vector processors. Vector processors that may be included in a particular PVA may be configured to employ data parallelism. For instance, plurality of vector processors included in a single PVA may execute a common computer vision algorithm, but on different regions of an image. Vector processors included in a particular PVA may simultaneously execute different computer vision algorithms, on one image, or even execute different algorithms on sequential images or portions of an image. Among other things, any number of PVAs may be included in hardware acceleration cluster and any number of vector processors may be included in each PVA. PVA may include additional error correcting code ("ECC") memory, to enhance overall system safety.

Accelerator(s) 3014 may include a computer vision network on-chip and static random-access memory ("SRAM"), for providing a high-bandwidth, low latency SRAM for accelerator(s) 3014. On-chip memory may include at least 4 MB SRAM, including, for example, eight field-configurable memory blocks, that may be accessible by both a PVA and a DLA. Each pair of memory blocks may include an advanced peripheral bus ("APB") interface, configuration circuitry, a controller, and a multiplexer. Any type of memory may be used. A PVA and a DLA may access memory via a backbone that provides a PVA and a DLA with high-speed access to memory. A backbone may include a computer vision network on-chip that interconnects a PVA and a DLA to memory (e.g., using APB).

A computer vision network on-chip may include an interface that determines, before transmission of any control signal/address/data, that both a PVA and a DLA provide ready and valid signals. An interface may provide for separate phases and separate channels for transmitting control signals/addresses/data, as well as burst-type communications for continuous data transfer. An interface may comply with International Organization for Standardization ("ISO") 26262 or International Electrotechnical Commission ("IEC") 61508 standards, although other standards and protocols may be used.

One or more of SoC(s) 3004 may include a real-time ray-tracing hardware accelerator. Real-time ray-tracing hardware accelerator may be used to quickly and efficiently determine positions and extents of objects (e.g., within a world model), to generate real-time visualization simulations, for RADAR signal interpretation, for sound propagation synthesis and/or analysis, for simulation of SONAR systems, for general wave propagation simulation, for comparison to LIDAR data for purposes of localization and/or other functions, and/or for other uses.

Accelerator(s) 3014 can have a wide array of uses for autonomous driving. A PVA may be used for key processing stages in ADAS and autonomous vehicles. A PVA's capabilities may be a good match for algorithmic domains needing predictable processing, at low power and low latency. In other words, a PVA can perform well on semi-dense or dense regular computation, even on small data sets, which might require predictable run-times with low latency and low power. In vehicle 3000, PVAs might be designed to run classic computer vision algorithms, as they can be efficient at object detection and operating on integer math. For example, a PVA is used to perform computer stereo vision. A semi-global matching-based algorithm may be used in some examples, although this is not intended to be limiting. Applications for Level 3-5 autonomous driving use motion estimation/stereo matching on-the-fly (e.g., structure from motion, pedestrian recognition, lane detection, etc.). A PVA may perform computer stereo vision functions on inputs from two monocular cameras. A PVA may be used to perform dense optical flow. For example, a PVA could process raw RADAR data (e.g., using a 4D Fast Fourier Transform) to provide processed RADAR data. A PVA is used for time of flight depth processing, by processing raw time of flight data to provide processed time of flight data, for example.

A DLA may be used to run any type of network to enhance control and driving safety, including, for example, a neural network that outputs a measure of confidence for each object detection. Confidence may be represented or interpreted as a probability, or as providing a relative "weight" of each detection compared to other detections. A confidence measure enables a system to make further decisions regarding which detections should be considered as true positive detections rather than false positive detections. A system may set a threshold value for confidence and consider only detections exceeding threshold value as true positive detections. When an automatic emergency braking ("AEB") system is used, false positive detections can cause vehicle to automatically perform emergency braking, which is obviously undesirable. Highly confident detections may be considered as triggers for AEB. a DLA may run a neural network for regressing confidence value. A neural network may take as its input at least some subset of parameters, such as, but not limited to, bounding box dimensions, ground plane estimate obtained (e.g., from another subsystem), output from IMU sensor(s) 3066 that correlates with vehicle 3000 orientation, distance, 3D location estimates of object obtained from neural network and/or other sensors (e.g., LIDAR sensor(s) 3064 or RADAR sensor(s) 3060), among others.

One or more of SoC(s) 3004 may include data store(s) 3016 (e.g., memory). Data store(s) 3016 may be on-chip memory of SoC(s) 3004, which may store neural networks to be executed on GPU(s) 3008 and/or a DLA. Data store(s) 3016 may be large enough in capacity to store multiple instances of neural networks for redundancy and safety. Data store(s) 3016 may comprise L2 or L3 cache(s).

One or more of SoC(s) 3004 may include any number of processor(s) 3010 (e.g., embedded processors). Processor(s) 3010 may include a boot and power management processor that may be a dedicated processor and subsystem to handle boot power and management functions and related security enforcement. A boot and power management processor may be a part of a boot sequence of SoC(s) 3004 and may provide runtime power management services. A boot power and management processor may provide clock and voltage programming, assistance in system low power state transitions, management of SoC(s) 3004 thermals and temperature sensors, and/or management of SoC(s) 3004 power states. Each temperature sensor may be implemented as a ring-oscillator whose output frequency is proportional to temperature, and SoC(s) 3004 may use ring-oscillators to detect temperatures of CPU(s) 3006, GPU(s) 3008, and/or accelerator(s) 3014. If temperatures may be determined to exceed a threshold, then a boot and power management processor may enter a temperature fault routine and put SoC(s) 3004 into a lower power state and/or put vehicle 3000 into a chauffeur to safe stop mode (e.g., bring vehicle 3000 to a safe stop).

Processor(s) 3010 may further include a set of embedded processors that may serve as an audio processing engine which may be an audio subsystem that enables full hardware support for multi-channel audio over multiple interfaces, and a broad and flexible range of audio I/O interfaces. An audio processing engine is a dedicated processor core with a digital signal processor with dedicated RAM.

Processor(s) 3010 may further include an always-on processor engine that may provide necessary hardware features to support low power sensor management and wake use cases. An always-on processor engine may include a processor core, a tightly coupled RAM, supporting peripherals (e.g., timers and interrupt controllers), various I/O controller peripherals, and routing logic.

Processor(s) 3010 may further include a safety cluster engine that may include a dedicated processor subsystem to handle safety management for automotive applications. A safety cluster engine may include two or more processor cores, a tightly coupled RAM, support peripherals (e.g., timers, an interrupt controller, etc.), and/or routing logic. In a safety mode, two or more cores may operate, in a lockstep mode and function as a single core with comparison logic to detect any differences between their operations. Processor(s) 3010 may further include a real-time camera engine that may include a dedicated processor subsystem for handling real-time camera management. Processor(s) 3010 may further include a high-dynamic range signal processor that may include an image signal processor that is a hardware engine that is part of a camera processing pipeline.

Processor(s) 3010 may include a video image compositor that may be a processing block (e.g., implemented on a microprocessor) that implements video post-processing functions needed by a video playback application to produce a final image for a player window. A video image compositor may perform lens distortion correction on wide-view camera(s) 3070, surround camera(s) 3074, and/or on in-cabin monitoring camera sensor(s). In-cabin monitoring camera sensor(s) may be preferably monitored by a neural network running on another instance of SoC 3004, configured to identify in cabin events and respond accordingly. An in-cabin system may perform lip reading to activate cellular service and place a phone call, dictate emails, change a vehicle's destination, activate or change a vehicle's infotainment system and settings, or provide voice-activated web surfing. Certain functions may be available to a driver when a vehicle is operating in an autonomous mode and may be disabled otherwise.

A video image compositor may include enhanced temporal noise reduction for both spatial and temporal noise reduction. For example, where motion occurs in a video, noise reduction weights spatial information appropriately, decreasing weights of information provided by adjacent frames. Where an image or portion of an image does not include motion, temporal noise reduction performed by video image compositor may use information from a previous image to reduce noise in a current image.

A video image compositor may also be configured to perform stereo rectification on input stereo lens frames. A video image compositor may further be used for user interface composition when an operating system desktop is in use, and GPU(s) 3008 may not be required to continuously render new surfaces. When GPU(s) 3008 are powered on and active doing 3D rendering, a video image compositor may be used to offload GPU(s) 3008 to improve performance and responsiveness.

One or more SoC of SoC(s) 3004 may further include a mobile industry processor interface ("MIPI") camera serial interface for receiving video and input from cameras, a high-speed interface, and/or a video input block that may be used for a camera and related pixel input functions. One or more of SoC(s) 3004 may further include an input/output controller(s) that may be controlled by software and may be used for receiving I/O signals that may be uncommitted to a specific role.

One or more SoC of SoC(s) 3004 may further include a broad range of peripheral interfaces to enable communication with peripherals, audio encoders/decoders ("codecs"), power management, and/or other devices. SoC(s) 3004 may be used to process data from cameras (e.g., connected over Gigabit Multimedia Serial Link and Ethernet channels), sensors (e.g., LIDAR sensor(s) 3064, RADAR sensor(s) 3060, etc. that may be connected over Ethernet channels), data from bus 3002 (e.g., speed of vehicle 3000, steering wheel position, etc.), data from GNSS sensor(s) 3058 (e.g., connected over a Ethernet bus or a CAN bus), etc. One or more SoC of SoC(s) 3004 may further include dedicated high-performance mass storage controllers that may include their own DMA engines, and that may be used to free CPU(s) 3006 from routine data management instructions.

SoC(s) 3004 may be an end-to-end platform with a flexible architecture that spans automation Levels 3-5, thereby providing a comprehensive functional safety architecture that leverages and makes efficient use of computer vision and ADAS techniques for diversity and redundancy, and provides a platform for a flexible, reliable driving software stack, along with deep learning tools. SoC(s) 3004 may be faster, more reliable, and even more energy-efficient and space-efficient than conventional systems. For example, accelerator(s) 3014, when combined with CPU(s) 3006, GPU(s) 3008, and data store(s) 3016, may provide for a fast, efficient platform for Level 3-5 autonomous vehicles.

Computer vision algorithms may be executed on CPUs, which may be configured using a high-level programming language, such as, but not limited to, C, to execute a wide variety of processing algorithms across a wide variety of visual data. However, CPUs may be oftentimes unable to meet performance requirements of many computer vision applications, such as, but not limited to, those related to execution time and power consumption, for example. Many CPUs may be unable to execute complex object detection algorithms in real-time, which is used in in-vehicle ADAS applications and in practical Level 3-5 autonomous vehicles.

Embodiments described herein allow for multiple neural networks to be performed simultaneously and/or sequentially, and for results to be combined together to enable Level 3-5 autonomous driving functionality. For example, a CNN executing on a DLA or a discrete GPU (e.g., GPU(s) 3020) may include text and word recognition, allowing reading and understanding of traffic signs, including signs for which a neural network has not been specifically trained. A DLA may further include a neural network that is able to identify, interpret, and provide semantic understanding of a sign, and to pass that semantic understanding to path planning modules running on a CPU Complex.

Multiple neural networks may be run simultaneously, as for Level 3, 4, or 5 driving. For example, a warning sign stating "Caution: flashing lights indicate icy conditions," along with an electric light, may be independently or collectively interpreted by several neural networks. Such warning sign itself may be identified as a traffic sign by a first deployed neural network (e.g., a neural network that has been trained), text "flashing lights indicate icy conditions" may be interpreted by a second deployed neural network, which informs a vehicle's path planning software (preferably executing on a CPU Complex) that when flashing lights may be detected, icy conditions exist. A flashing light may be identified by operating a third deployed neural network over multiple frames, informing a vehicle's path-planning software of a presence (or an absence) of flashing lights. All three neural networks may run simultaneously, such as, but not limited to, within a DLA and/or on GPU(s) 3008.

A CNN for facial recognition and vehicle owner identification may use data from camera sensors to identify presence of an authorized driver and/or owner of vehicle 3000. An always-on sensor processing engine may be used to unlock a vehicle when an owner approaches a driver door and turns on lights, and, in a security mode, to disable such vehicle when an owner leaves such vehicle. In this way, SoC(s) 3004 can provide for security against theft and/or carjacking.

A CNN for emergency vehicle detection and identification may use data from microphones 3096 to detect and identify emergency vehicle sirens. SoC(s) 3004 use a CNN for classifying environmental and urban sounds, as well as classifying visual data. A CNN running on a DLA is trained to identify a relative closing speed of an emergency vehicle (e.g., by using a Doppler effect). A CNN may also be trained to identify emergency vehicles specific to a local area in which a vehicle is operating, as identified by GNSS sensor(s) 3058. When operating in Europe, a CNN may seek to detect European sirens, and when in North America, a CNN may seek to identify only North American sirens. Once an emergency vehicle is detected, a control program may be used to execute an emergency vehicle safety routine, slowing a vehicle, pulling over to a side of a road, parking a vehicle, and/or idling a vehicle, with assistance of ultrasonic sensor(s) 3062, until emergency vehicles pass.

Vehicle 3000 may include CPU(s) 3018 (e.g., discrete CPU(s), or dCPU(s)), that may be coupled to SoC(s) 3004 via a high-speed interconnect (e.g., PCIe). CPU(s) 3018 may include an X86 processor, for example. CPU(s) 3018 may be used to perform any of a variety of functions, including arbitrating potentially inconsistent results between ADAS sensors and SoC(s) 3004, and/or monitoring status and health of controller(s) 3036 and/or an infotainment system on a chip ("infotainment SoC") 3030, for example. SoC(s) 3004 may include one or more interconnects, and an interconnect can include a peripheral component interconnect express (PCIe).

Vehicle 3000 may include GPU(s) 3020 (e.g., discrete GPU(s), or dGPU(s)), that may be coupled to SoC(s) 3004 via a high-speed interconnect (e.g., NVIDIA's NVLINK channel). GPU(s) 3020 may provide additional artificial intelligence functionality, such as, but not limited to, by executing redundant and/or different neural networks, and may be used to train and/or update neural networks based at least in part on input (e.g., sensor data) from sensors of a vehicle 3000.

Vehicle 3000 may further include network interface 3024 which may include wireless antenna(s) (e.g., one or more wireless antennas 3026 for different communication protocols, such as, but not limited to, a cellular antenna, a Bluetooth antenna, etc.). Network interface 3024 may be used to enable wireless connectivity to Internet cloud services (e.g., with server(s) and/or other network devices), with other vehicles, and/or with computing devices (e.g., client devices of passengers). To communicate with other vehicles, a direct link may be established between vehicle 3000 and another vehicle and/or an indirect link may be established (e.g., across networks and over the Internet). Direct links may be provided using a vehicle-to-vehicle communication link. A vehicle-to-vehicle communication link may provide vehicle 3000 information about vehicles in proximity to vehicle 3000 (e.g., vehicles in front of, on a side of, and/or behind vehicle 3000). Such aforementioned functionality may be part of a cooperative adaptive cruise control functionality of vehicle 3000.

Network interface 3024 may include an SoC that provides modulation and demodulation functionality and enables controller(s) 3036 to communicate over wireless networks. Network interface 3024 may include a radio frequency front-end for up-conversion from baseband to radio frequency, and down conversion from radio frequency to baseband. Frequency conversions may be performed in any technically feasible fashion. For example, frequency conversions could be performed through well-known processes, and/or using superheterodyne processes. Radio frequency front end functionality may be provided by a separate chip. Network interfaces may include wireless functionality for communicating over LTE, WCDMA, UMTS, GSM, CDMA2000, Bluetooth, Bluetooth LE, Wi-Fi, Z-Wave, ZigBee, LoRaWAN, and/or other wireless protocols.

Vehicle 3000 may further include data store(s) 3028 which may include off-chip (e.g., off SoC(s) 3004) storage. Data store(s) 3028 may include one or more storage elements including RAM, SRAM, dynamic random-access memory ("DRAM"), video random-access memory ("VRAM"), flash memory, hard disks, and/or other components and/or devices that may store at least one bit of data.

Vehicle 3000 may further include GNSS sensor(s) 3058 (e.g., GPS and/or assisted GPS sensors), to assist in mapping, perception, occupancy grid generation, and/or path planning functions. Any number of GNSS sensor(s) 3058 may be used, including, for example, a GPS using a USB connector with an Ethernet-to-Serial (e.g., RS-232) bridge.

Vehicle 3000 may further include RADAR sensor(s) 3060. RADAR sensor(s) 3060 may be used by vehicle 3000 for long-range vehicle detection, even in darkness and/or severe weather conditions. RADAR functional safety levels may be ASIL B. RADAR sensor(s) 3060 may use a CAN bus and/or bus 3002 (e.g., to transmit data generated by RADAR sensor(s) 3060) for control and to access object tracking data, with access to Ethernet channels to access raw data in some examples. A wide variety of RADAR sensor types may be used. For example, RADAR sensor(s) 3060 may be suitable for front, rear, and side RADAR use. One or more sensor of RADAR sensors(s) 3060 is a Pulse Doppler RADAR sensor.

RADAR sensor(s) 3060 may include different configurations, such as, but not limited to, long-range with narrow field of view, short-range with wide field of view, short-range side coverage, etc. Long-range RADAR may be used for adaptive cruise control functionality. Long-range RADAR systems may provide a broad field of view realized by two or more independent scans, such as, but not limited to, within a 250 m (meter) range. RADAR sensor(s) 3060 may help in distinguishing between static and moving objects, and may be used by ADAS system 3038 for emergency brake assist and forward collision warning. Sensors 3060(s) included in a long-range RADAR system may include monostatic multimodal RADAR with multiple (e.g., six or more) fixed RADAR antennae and a high-speed CAN and FlexRay interface. With six antennae, a central four antennae may create a focused beam pattern, designed to record vehicle's 3000 surroundings at higher speeds with minimal interference from traffic in adjacent lanes. Another two antennae may expand field of view, making it possible to quickly detect vehicles entering or leaving a lane of vehicle 3000.

Mid-range RADAR systems may include, as an example, a range of up to 160 m (front) or 80 m (rear), and a field of view of up to 42 degrees (front) or 150 degrees (rear). Short-range RADAR systems may include any number of RADAR sensor(s) 3060 designed to be installed at both ends of a rear bumper. When installed at both ends of a rear bumper, a RADAR sensor system may create two beams that constantly monitor blind spots in a rear direction and next to a vehicle. Short-range RADAR systems may be used in ADAS system 3038 for blind spot detection and/or lane change assist.

Vehicle 3000 may further include ultrasonic sensor(s) 3062. Ultrasonic sensor(s) 3062, which may be positioned at a front, a back, and/or side location of vehicle 3000, may be used for parking assist and/or to create and update an occupancy grid. A wide variety of ultrasonic sensor(s) 3062 may be used, and different ultrasonic sensor(s) 3062 may be used for different ranges of detection (e.g., 2.5 m, 4 m). Ultrasonic sensor(s) 3062 may operate at functional safety levels of ASIL B.

Vehicle 3000 may include LIDAR sensor(s) 3064. LIDAR sensor(s) 3064 may be used for object and pedestrian detection, emergency braking, collision avoidance, and/or other functions. LIDAR sensor(s) 3064 may operate at functional safety level ASIL B. Vehicle 3000 may include multiple LIDAR sensors 3064 (e.g., two, four, six, etc.) that may use an Ethernet channel (e.g., to provide data to a Gigabit Ethernet switch).

LIDAR sensor(s) 3064 may be capable of providing a list of objects and their distances for a 360-degree field of view. Commercially available LIDAR sensor(s) 3064 may have an advertised range of approximately 100 m, with an accuracy of 2 cm to 3 cm, and with support for a 100 Mbps Ethernet connection, for example. One or more non-protruding LIDAR sensors may be used. LIDAR sensor(s) 3064 may include a small device that may be embedded into a front, a rear, a side, and/or a corner location of vehicle 3000. LIDAR sensor(s) 3064, in such an embodiment, may provide up to a 120-degree horizontal and 35-degree vertical field-of-view, with a 200 m range even for low-reflectivity objects. Front-mounted LIDAR sensor(s) 3064 may be configured for a horizontal field of view between 45 degrees and 135 degrees.

LIDAR technologies, such as, but not limited to, 3D flash LIDAR, may also be used. 3D flash LIDAR uses a flash of a laser as a transmission source, to illuminate surroundings of vehicle 3000 up to approximately 200 m. A flash LIDAR unit may include a receptor, which records laser pulse transit time and reflected light on each pixel, which in turn corresponds to a range from vehicle 3000 to objects. Flash LIDAR may allow for highly accurate and distortion-free images of surroundings to be generated with every laser flash. Four flash LIDAR sensors may be deployed, one at each side of vehicle 3000. 3D flash LIDAR systems include a solid-state 3D staring array LIDAR camera with no moving parts other than a fan (e.g., a non-scanning LIDAR device). Flash LIDAR device may use a 5 nanosecond class I (eye-safe) laser pulse per frame and may capture reflected laser light as a 3D range point cloud and co-registered intensity data.

Vehicle 3000 may further include IMU sensor(s) 3066. IMU sensor(s) 3066 may be located at a center of a rear axle of vehicle 3000. IMU sensor(s) 3066 may include, for example, accelerometer(s), magnetometer(s), gyroscope(s), a magnetic compass, magnetic compasses, and/or other sensor types. In six-axis applications, but not limited to, IMU sensor(s) 3066 may include accelerometers and gyroscopes. In nine-axis applications, but not limited to, IMU sensor(s) 3066 may include accelerometers, gyroscopes, and magnetometers.

IMU sensor(s) 3066 may be implemented as a miniature, high performance GPS-Aided Inertial Navigation System ("GPS/INS") that combines micro-electro-mechanical systems ("MEMS") inertial sensors, a high-sensitivity GPS receiver, and advanced Kalman filtering algorithms to provide estimates of position, velocity, and attitude. IMU sensor(s) 3066 may enable vehicle 3000 to estimate its heading without requiring input from a magnetic sensor by directly observing and correlating changes in velocity from a GPS to IMU sensor(s) 3066. IMU sensor(s) 3066 and GNSS sensor(s) 3058 may be combined in a single integrated unit.

Vehicle 3000 may include microphone(s) 3096 placed in and/or around vehicle 3000. Microphone(s) 3096 may be used for emergency vehicle detection and identification, among other things.

Vehicle 3000 may further include any number of camera types, including stereo camera(s) 3068, wide-view camera(s) 3070, infrared camera(s) 3072, surround camera(s) 3074, long-range camera(s) 3098, mid-range camera(s) 3076, and/or other camera types. Cameras may be used to capture image data around an entire periphery of vehicle 3000. Types of cameras used may depend on vehicle 3000. Any combination of camera types may be used to provide necessary coverage around vehicle 3000. A number of cameras deployed may differ depending on embodiment. For example, vehicle 3000 could include six cameras, seven cameras, ten cameras, twelve cameras, or another number of cameras. Cameras may support, as an example, Gigabit Multimedia Serial Link ("GMSL") and/or Gigabit Ethernet communications. Each camera might be as described with more detail previously herein.

Vehicle 3000 may further include vibration sensor(s) 3042. Vibration sensor(s) 3042 may measure vibrations of components of vehicle 3000, such as, but not limited to, axle(s). For example, changes in vibrations may indicate a change in road surfaces. When two or more vibration sensors 3042 may be used, differences between vibrations may be used to determine friction or slippage of road surface (e.g., when a difference in vibration is between a power-driven axle and a freely rotating axle).

Vehicle 3000 may include ADAS system 3038. ADAS system 3038 may include an SoC, in some examples. ADAS system 3038 may include any number and combination of an autonomous/adaptive/automatic cruise control ("ACC") system, a cooperative adaptive cruise control ("CACC") system, a forward crash warning ("FCW") system, an automatic emergency braking ("AEB") system, a lane departure warning ("LDW") system, a lane keep assist ("LKA") system, a blind spot warning ("BSW") system, a rear cross-traffic warning ("RCTW") system, a collision warning ("CW") system, a lane centering ("LC") system, and/or other systems, features, and/or functionality.

ACC system may use RADAR sensor(s) 3060, LIDAR sensor(s) 3064, and/or any number of camera(s). ACC system may include a longitudinal ACC system and/or a lateral ACC system. A longitudinal ACC system monitors and controls distance to another vehicle immediately ahead of vehicle 3000 and automatically adjusts speed of vehicle 3000 to maintain a safe distance from vehicles ahead. A lateral ACC system performs distance keeping, and advises vehicle 3000 to change lanes when necessary. A lateral ACC is related to other ADAS applications, such as, but not limited to, LC and CW.

A CACC system uses information from other vehicles that may be received via network interface 3024 and/or wireless antenna(s) 3026 from other vehicles via a wireless link, or indirectly, over a network connection (e.g., over the Internet). Direct links may be provided by a vehicle-to-vehicle ("V2V") communication link, while indirect links may be provided by an infrastructure-to-vehicle ("I2V") communication link. In general, V2V communication provides information about immediately preceding vehicles (e.g., vehicles immediately ahead of and in same lane as vehicle 3000), while I2V communication provides information about traffic further ahead. A CACC system may include either or both I2V and V2V information sources. Given information of vehicles ahead of vehicle 3000, a CACC system may be more reliable and it has potential to improve traffic flow smoothness and reduce congestion on road.

An FCW system is designed to alert a driver to a hazard, so that such driver may take corrective action. An FCW system uses a front-facing camera and/or RADAR sensor(s) 3060, coupled to a dedicated processor, DSP, FPGA, and/or ASIC, that is electrically coupled to provide driver feedback, such as, but not limited to, a display, speaker, and/or vibrating component. An FCW system may provide a warning, such as, but not limited to, in form of a sound, visual warning, vibration and/or a quick brake pulse.

An AEB system detects an impending forward collision with another vehicle or other object, and may automatically apply brakes if a driver does not take corrective action within a specified time or distance parameter. AEB system may use front-facing camera(s) and/or RADAR sensor(s) 3060, coupled to a dedicated processor, DSP, FPGA, and/or ASIC. When an AEB system detects a hazard, it will typically first alert a driver to take corrective action to avoid collision and, if that driver does not take corrective action, that AEB system may automatically apply brakes in an effort to prevent, or at least mitigate, an impact of a predicted collision. An AEB system may include techniques such as, but not limited to, dynamic brake support and/or crash imminent braking.

An LDW system provides visual, audible, and/or tactile warnings, such as, but not limited to, steering wheel or seat vibrations, to alert driver when vehicle 3000 crosses lane markings. An LDW system does not activate when a driver indicates an intentional lane departure, such as, but not limited to, by activating a turn signal. An LDW system may use frontside facing cameras, coupled to a dedicated processor, DSP, FPGA, and/or ASIC, that is electrically coupled to provide driver feedback, such as, but not limited to, a display, speaker, and/or vibrating component. An LKA system is a variation of an LDW system. An LKA system provides steering input or braking to correct vehicle 3000 if vehicle 3000 starts to exit its lane.

A BSW system detects and warns a driver of vehicles in an automobile's blind spot. A BSW system may provide a visual, audible, and/or tactile alert to indicate that merging or changing lanes is unsafe. A BSW system may provide an additional warning when a driver uses a turn signal. A BSW system may use rear-side facing camera(s) and/or RADAR sensor(s) 3060, coupled to a dedicated processor, DSP, FPGA, and/or ASIC, that is electrically coupled to driver feedback, such as, but not limited to, a display, speaker, and/or vibrating component.

An RCTW system may provide visual, audible, and/or tactile notification when an object is detected outside a rear-camera range when vehicle 3000 is backing up. An RCTW system includes an AEB system to ensure that vehicle brakes may be applied to avoid a crash. An RCTW system may use one or more rear-facing RADAR sensor(s) 3060, coupled to a dedicated processor, DSP, FPGA, and/or ASIC, that is electrically coupled to provide driver feedback, such as, but not limited to, a display, speaker, and/or vibrating component.

Conventional ADAS systems may be prone to false positive results which may be annoying and distracting to a driver, but typically may not be catastrophic, because conventional ADAS systems alert a driver and allow that driver to decide whether a safety condition truly exists and act accordingly. Vehicle 3000 itself decides, in case of conflicting results, whether to heed result from a primary computer or a secondary computer (e.g., a first controller or a second controller of controllers 3036). For example, ADAS system 3038 may be a backup and/or secondary computer for providing perception information to a backup computer rationality module. A backup computer rationality monitor may run redundant diverse software on hardware components to detect faults in perception and dynamic driving instructions. Outputs from ADAS system 3038 may be provided to a supervisory MCU. If outputs from a primary computer and outputs from a secondary computer conflict, a supervisory MCU can determine how to reconcile conflict to ensure safe operation.

A primary computer may be configured to provide a supervisory MCU with a confidence score, indicating that primary computer's confidence in a chosen result. If that confidence score exceeds a threshold, that supervisory MCU may follow that primary computer's direction, regardless of whether that secondary computer provides a conflicting or inconsistent result. Where a confidence score does not meet a threshold, and where primary and secondary computers indicate different results (e.g., a conflict), a supervisory MCU may arbitrate between computers to determine an appropriate outcome.

A supervisory MCU may be configured to run a neural network(s) that is trained and configured to determine, based at least in part on outputs from a primary computer and outputs from a secondary computer, conditions under which that secondary computer provides false alarms. Neural network(s) in a supervisory MCU may learn when a secondary computer's output may be trusted, and when it cannot. For example, when that secondary computer is a RADAR-based FCW system, a neural network(s) in that supervisory MCU may learn when an FCW system is identifying metallic objects that may not be, in fact, hazards, such as, but not limited to, a drainage grate or manhole cover that triggers an alarm. When a secondary computer is a camera-based LDW system, a neural network in a supervisory MCU may learn to override LDW when bicyclists or pedestrians may be present and a lane departure is, in fact, a safest maneuver. A supervisory MCU may include at least one of a DLA or a GPU suitable for running neural network(s) with associated memory. A supervisory MCU may comprise and/or be included as a component of SoC(s) 3004.

ADAS system 3038 may include a secondary computer that performs ADAS functionality using traditional rules of computer vision, and that secondary computer may use classic computer vision rules (if-then), and presence of a neural network(s) in a supervisory MCU may improve reliability, safety and performance. For example, diverse implementation and intentional non-identity makes an overall system more fault-tolerant, especially to faults caused by software (or software-hardware interface) functionality. For example, if there is a software bug or error in software running on a primary computer, and non-identical software code running on a secondary computer provides a consistent overall result, then a supervisory MCU may have greater confidence that an overall result is correct, and a bug in software or hardware on that primary computer is not causing a material error.

An output of ADAS system 3038 may be fed into a primary computer's perception block and/or a primary computer's dynamic driving instruction block. For example, if ADAS system 3038 indicates a forward crash warning due to an object immediately ahead, a perception block may use this information when identifying objects. A secondary computer may have its own neural network that is trained and thus reduces a risk of false positives, as described herein.

Vehicle 3000 may further include infotainment SoC 3030 (e.g., an in-vehicle infotainment system (IVI)). Although illustrated and described as an SoC, infotainment system SoC 3030, may not be an SoC, and may include two or more discrete components. Infotainment SoC 3030 may include a combination of hardware and software that may be used to provide audio (e.g., music, a personal digital assistant, navigational instructions, news, radio, etc.), video (e.g., TV, movies, streaming, etc.), phone (e.g., hands-free calling), network connectivity (e.g., LTE, WiFi, etc.), and/or information services (e.g., navigation systems, rear-parking assistance, a radio data system, vehicle related information such as, but not limited to, fuel level, total distance covered, brake fuel level, oil level, door open/close, air filter information, etc.) to vehicle 3000. For example, infotainment SoC 3030 could include radios, disk players, navigation systems, video players, USB and Bluetooth connectivity, carputers, in-car entertainment, WiFi, steering wheel audio controls, hands free voice control, a heads-up display ("HUD"), HMI display 3034, a telematics device, a control panel (e.g., for controlling and/or interacting with various components, features, and/or systems), and/or other components. Infotainment SoC 3030 may further be used to provide information (e.g., visual and/or audible) to user(s) of vehicle 3000, such as, but not limited to, information from ADAS system 3038, autonomous driving information such as, but not limited to, planned vehicle maneuvers, trajectories, surrounding environment information (e.g., intersection information, vehicle information, road information, etc.), and/or other information.

Infotainment SoC 3030 may include any amount and type of GPU functionality. Infotainment SoC 3030 may communicate over bus 3002 with other devices, systems, and/or components of vehicle 3000. Infotainment SoC 3030 may be coupled to a supervisory MCU such that a GPU of an infotainment system may perform some self-driving functions in event that primary controller(s) 3036 (e.g., primary and/or backup computers of vehicle 3000) fail. Infotainment SoC 3030 may put vehicle 3000 into a chauffeur to safe stop mode, as described herein.

Vehicle 3000 may further include instrument cluster 3032 (e.g., a digital dash, an electronic instrument cluster, a digital instrument panel, etc.). Instrument cluster 3032 may include a controller and/or supercomputer (e.g., a discrete controller or supercomputer). Instrument cluster 3032 may include any number and combination of a set of instrumentation such as, but not limited to, a speedometer, fuel level, oil pressure, tachometer, odometer, turn indicators, gearshift position indicator, seat belt warning light(s), parking-brake warning light(s), engine-malfunction light(s), supplemental restraint system (e.g., airbag) information, lighting controls, safety system controls, navigation information, etc. Information may be displayed and/or shared among infotainment SoC 3030 and instrument cluster 3032. Instrument cluster 3032 may be included as part of infotainment SoC 3030, or vice versa.

System may include server(s), network(s), and any number and type of vehicles, including vehicle 3000. Server(s) may include a plurality of GPUs, PCIe switches, and/or CPUs. GPUs, CPUs, and PCIe switches may be interconnected with high-speed interconnects such as, but not limited to, for example, NVLink interfaces developed by NVIDIA and/or PCIe connections. GPUs can be connected via any interconnects, such as NVLink and/or NVSwitch SoC, and GPUs and PCIe switches can be, for example, connected via PCIe interconnects. Each of server(s) may include any number of GPUs, CPUs, and/or PCIe switches, in any combination. For example, server(s) could each include eight, sixteen, thirty-two, and/or more GPUs.

Server(s) may receive, over network(s) and from vehicles, image data representative of images showing unexpected or changed road conditions, such as, but not limited to, recently commenced road-work. Server(s) may transmit, over network(s) and to vehicles, neural networks, updated or otherwise, and/or map information, including information regarding traffic and road conditions. Updates to map information may include updates for HD map, such as, but not limited to, information regarding construction sites, potholes, detours, flooding, and/or other obstructions. Neural networks, and/or map information may have resulted from new training and/or experiences represented in data received from any number of vehicles in an environment, and/or based at least in part on training performed at a data center (e.g., using server(s) and/or other servers).

Server(s) may be used to train machine learning models (e.g., neural networks) based at least in part on training data. Training data may be generated by vehicles, and/or may be generated in a simulation (e.g., using a game engine). Any amount of training data can be tagged (e.g., where associated neural network benefits from supervised learning) and/or undergoes other pre-processing. Any amount of training data may not be tagged and/or pre-processed (e.g., where associated neural network does not require supervised learning). Once machine learning models are trained, machine learning models may be used by vehicles (e.g., transmitted to vehicles over network(s)), and/or machine learning models may be used by server(s) to remotely monitor vehicles.

Server(s) may receive data from vehicles and apply data to up-to-date real-time neural networks for real-time intelligent inferencing. Server(s) may include deep-learning supercomputers and/or dedicated AI computers powered by GPU(s), such as, but not limited to, a DGX and DGX Station machines developed by NVIDIA. Alternatively, server(s) may include deep learning infrastructure that uses CPU-powered data centers.

Deep-learning infrastructure of server(s) may be capable of fast, real-time inferencing, and may use that capability to evaluate and verify health of processors, software, and/or associated hardware in vehicle 3000. For example, deep-learning infrastructure may receive periodic updates from vehicle 3000, such as, but not limited to, a sequence of images and/or objects that vehicle 3000 has located in that sequence of images (e.g., via computer vision and/or other machine learning object classification techniques). Deep-learning infrastructure may run its own neural network to identify objects and compare them with objects identified by vehicle 3000 and, if results do not match and deep-learning infrastructure concludes that AI in vehicle 3000 is malfunctioning, then server(s) may transmit a signal to vehicle instructing a fail-safe computer of vehicle 3000 to assume control, notify passengers, and complete a safe parking maneuver.

Server(s) may include GPU(s) and one or more programmable inference accelerators (e.g., NVIDIA's TensorRT 3 devices). A combination of GPU-powered servers and inference acceleration may make real-time responsiveness possible. Where performance is less critical, servers powered by CPUs, FPGAs, and other processors may be used for inferencing.

In at least one embodiment, autonomous vehicle 3000 described elsewhere herein, can include one or more circuits to perform an API to pause and/or resume one or more GPU instructions or otherwise perform any of the operations described above or elsewhere herein. One or more circuits in autonomous vehicle 3000 can be configured by software, e.g., programming platforms described herein, to perform an API to pause and/or resume one or more GPU instructions or otherwise perform any of the operations described above or elsewhere herein.

### CLOUD AND WEB-BASED SERVICES

The following description sets forth, without limitation, cloud-based and/or web-based services and/or systems that can be used to perform an application programming interface (API) to pause and/or cause one or more indicated instructions or otherwise perform some or all of processes, operations and/or and techniques described elsewhere herein. cloud-based and/or web-based services and/or systems can be configured by software to perform an application programming interface (API) to pause and/or cause one or more indicated instructions or otherwise perform any of the operations described above or elsewhere herein.

Cloud computing can include a style of computing in which dynamically scalable and often virtualized resources are provided as a service over the Internet. Users need not have knowledge of, expertise in, or control over technology infrastructure, which can be referred to as "in the cloud," that supports them. Cloud computing may incorporate infrastructure as a service, platform as a service, software as a service, and other variations that have a common theme of reliance on the Internet for satisfying computing needs of users. A typical cloud deployment, such as in a private cloud (e.g., enterprise network), or a data center (DC) in a public cloud (e.g., Internet) can include thousands of servers (or alternatively, VMs), hundreds of Ethernet, Fiber Channel or Fiber Channel over Ethernet (FCoE) ports, switching and storage infrastructure, etc. A cloud can also include network services infrastructure like IPsec VPN hubs, firewalls, load balancers, wide area network (WAN) optimizers etc. Remote subscribers can access cloud applications and services securely by connecting via a VPN tunnel, such as an IPsec VPN tunnel.

Cloud computing may include a model for enabling convenient, on-demand network access to a shared pool of configurable computing resources (e.g., networks, servers, storage, applications, and services) that can be rapidly provisioned and released with minimal management effort or service provider interaction.

Cloud computing may be characterized by on-demand self-service, in which a consumer can unilaterally provision computing capabilities, such as server time and network storage, as needed automatically without requiring human inter-action with each service's provider. Cloud computing may be characterized by broad network access, in which capabilities are available over a network and accessed through standard mechanisms that promote use by heterogeneous thin or thick client platforms (e.g., mobile phones, laptops, and PDAs). Cloud computing may be characterized by resource pooling, in which a provider's computing resources are pooled to serve multiple consumers using a multi-tenant model, with different physical and virtual resources dynamically as-signed and reassigned according to consumer demand. In at least one embodiment, there is a sense of location independence in that a customer generally has no control or knowledge over an exact location of provided resources, but may be able to specify location at a higher level of abstraction (e.g., country, state, or datacenter). Examples of resources include storage, processing, memory, network bandwidth, and virtual machines. Cloud computing may be characterized by rapid elasticity, in which capabilities can be rapidly and elastically provisioned, in some cases automatically, to quickly scale out and rapidly released to quickly scale in. In at least one embodiment, to a consumer, capabilities available for provisioning often appear to be unlimited and can be purchased in any quantity at any time. Cloud computing may be characterized by measured service, in which cloud systems automatically control and optimize resource use by leveraging a metering capability at some level of abstraction appropriate to a type of service (e.g., storage, processing, bandwidth, and active user accounts). Resource usage can be monitored, controlled, and reported providing transparency for both a provider and consumer of a utilized service.

Cloud computing may be associated with various services. Cloud Software as a Service (SaaS) may refer to as service in which a capability provided to a consumer is to use a provider's applications running on a cloud infrastructure. Applications can be accessible from various client devices through a thin client interface such as a web browser (e.g., web-based email). In at least one embodiment, consumer does not manage or control underlying cloud infrastructure including network, servers, operating systems, storage, or even individual application capabilities, with a possible exception of limited user-specific application configuration settings.

Cloud Platform as a Service (PaaS) may refer to a service in which a capability provided to consumer is to deploy onto cloud infrastructure consumer-created or acquired applications created using programming languages and tools supported by a provider. In at least one embodiment, a consumer does not manage or control underlying cloud infrastructure including networks, servers, operating systems, or storage, but has control over deployed applications and possibly application hosting environment configurations.

Cloud Infrastructure as a Service (IaaS) may refer to a service in which a capability provided to a consumer is to provision processing, storage, networks, and other fundamental computing resources where a consumer is able to deploy and run arbitrary software, which can include operating systems and applications. In at least one embodiment, consumer does not manage or control underlying cloud infrastructure, but has control over operating systems, storage, deployed applications, and possibly limited control of select networking components (e.g., host firewalls).

Cloud computing may be deployed in various ways. A private cloud may refer to a cloud infrastructure that is operated solely for an organization. A private cloud may be managed by an organization or a third party and may exist on-premises or off-premises. A community cloud may refer to a cloud infrastructure that is shared by several organizations and supports a specific community that has shared concerns (e.g., mission, security requirements, policy, and compliance considerations). A community cloud may be managed by organizations or a third party and may exist on-premises or off-premises. A public cloud may refer to a cloud infrastructure that is made available to a general public or a large industry group and is owned by an organization providing cloud services. A hybrid cloud may refer to a cloud infrastructure that is a composition of two or more clouds (private, community, or public) that remain unique entities, but are bound together by standardized or proprietary technology that enables data and application portability (e.g., cloud bursting for load-balancing between clouds). A cloud computing environment is service oriented with a focus on statelessness, low coupling, modularity, and semantic interoperability.

### LOGIC AND NEURAL NETWORK TRAINING AND DEPLOYMENT

The following figures set forth, without limitation, examples of logic and artificial intelligence-based systems that can be used to implement functionality and/or operations described herein.

FIGS. 31A and 31B illustrate logic 3115 which, as described elsewhere herein, can be used in one or more devices or systems (e.g., such as any of the processors (e.g., any processor in FIGS. 14-26), data centers, cloud or web-based services described herein) to perform operations such as, but not limited to, those discussed herein, in accordance with at least one embodiment. Logic can refer to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU). Logic 3115 illustrated in FIGS. 31A and 31B may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. Logic 3115 illustrated in FIG. 31A and 31B may be used in conjunction with central processing unit ("CPU") hardware, graphics processing unit ("GPU") hardware or other hardware, such as, but not limited to, field programmable gate arrays ("FPGAs").

Logic 3115 can be used to perform inferencing and/or training operations associated with one or more embodiments. Logic 3115 may be inference and/or training logic. In at least one embodiment, FIG. 31A illustrates inference and/or training logic 3115 used to perform inferencing and/or training operations associated with one or more embodiments. Inference and/or training logic 3115 may include code and/or data storage 3101 to store forward and/or output weight and/or input/output data, and/or other parameters to configure neurons or layers of a neural network trained and/or used for inferencing in aspects of one or more embodiments. Training logic 3115 may include, or be coupled to code and/or data storage 3101 to store graph code or other software to control timing and/or order, in which weight and/or other parameter information is to be loaded to configure, logic, including integer and/or floating point units (collectively, arithmetic logic units (ALUs). Code, such as, but not limited to, graph code, can load weight or other parameter information into processor ALUs based on an architecture of a neural network to which such code corresponds. Code and/or data storage 3101 can store weight parameters and/or input/output data of each layer of a neural network trained or used in conjunction with one or more embodiments during forward propagation of input/output data and/or weight parameters during training and/or inferencing using aspects of one or more embodiments. Any portion of code and/or data storage 3101 may be included with other on-chip or off-chip data storage, including a processor's L1, L2, or L3 cache or system memory.

Any portion of code and/or data storage 3101 may be internal or external to one or more processors or other hardware logic devices or circuits. Code and/or code and/or data storage 3101 may be cache memory, dynamic randomly addressable memory ("DRAM"), static randomly addressable memory ("SRAM"), non-volatile memory (e.g., flash memory), or other storage. A choice of whether code and/or code and/or data storage 3101 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

Inference and/or training logic 3115 may include a code and/or data storage 3105 to store backward and/or output weight and/or input/output data corresponding to neurons or layers of a neural network trained and/or used for inferencing in aspects of one or more embodiments. Code and/or data storage 3105 can store weight parameters and/or input/output data of each layer of a neural network trained or used in conjunction with one or more embodiments during backward propagation of input/output data and/or weight parameters during training and/or inferencing using aspects of one or more embodiments. Training logic 3115 may include, or be coupled to code and/or data storage 3105 to store graph code or other software to control timing and/or order, in which weight and/or other parameter information is to be loaded to configure, logic, including integer and/or floating point units (collectively, arithmetic logic units (ALUs).

Code, such as, but not limited to, graph code, may cause loading of weight or other parameter information into processor ALUs based on an architecture of a neural network to which such code corresponds. Any portion of code and/or data storage 3105 may be included with other on-chip or off-chip data storage, including a processor's L1, L2, or L3 cache or system memory. Any portion of code and/or data storage 3105 may be internal or external to one or more processors or other hardware logic devices or circuits. Code and/or data storage 3105 may be cache memory, DRAM, SRAM, non-volatile memory (e.g., flash memory), or other storage. A choice of whether code and/or data storage 3105 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

Code and/or data storage 3101 and code and/or data storage 3105 may be separate storage structures. Code and/or data storage 3101 and code and/or data storage 3105 may be a combined storage structure. Code and/or data storage 3101 and code and/or data storage 3105 may be partially combined and partially separate. Any portion of code and/or data storage 3101 and code and/or data storage 3105 may be included with other on-chip or off-chip data storage, including a processor's L1, L2, or L3 cache or system memory.

Inference and/or training logic 3115 may include one or more arithmetic logic unit(s) ("ALU(s)") 3110, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 3120 that may be functions of input/output and/or weight parameter data stored in code and/or data storage 3101 and/or code and/or data storage 3105. Activations stored in activation storage 3120 may be generated according to linear algebraic and or matrix-based mathematics performed by ALU(s) 3110 in response to performing instructions or other code, wherein weight values stored in code and/or data storage 3105 and/or data storage 3101 may be used as operands along with other values, such as, but not limited to, bias values, gradient information, momentum values, or other parameters or hyperparameters, any or all of which may be stored in code and/or data storage 3105 or code and/or data storage 3101 or another storage on or off-chip.

ALU(s) 3110 can be included within one or more processors or other hardware logic devices or circuits, whereas in another embodiment, ALU(s) 3110 may be external to a processor or other hardware logic device or circuit that uses them (e.g., a co-processor). ALUs 3110 may be included within a processor's execution units or otherwise within a bank of ALUs accessible by a processor's execution units either within same processor or distributed between different processors of different types (e.g., central processing units, graphics processing units, fixed function units, etc.). Code and/or data storage 3101, code and/or data storage 3105, and activation storage 3120 may share a processor or other hardware logic device or circuit, whereas in another embodiment, they may be in different processors or other hardware logic devices or circuits, or some combination of same and different processors or other hardware logic devices or circuits. Any portion of activation storage 3120 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

Activation storage 3120 may be cache memory, DRAM, SRAM, non-volatile memory (e.g., flash memory), or other storage. Activation storage 3120 may be completely or partially within or external to one or more processors or other logical circuits. A choice of whether activation storage 3120 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 3115 illustrated in FIG. 31A may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 3115 illustrated in FIG. 31A may be used in conjunction with central processing unit ("CPU") hardware, graphics processing unit ("GPU") hardware or other hardware, such as, but not limited to, field programmable gate arrays ("FPGAs").

FIG. 31B illustrates inference and/or training logic 3115, in accordance with at least one embodiment. Inference and/or training logic 3115 may include hardware logic in which computational resources may be dedicated or otherwise exclusively used in conjunction with weight values or other information corresponding to one or more layers of neurons within a neural network. Inference and/or training logic 3115 illustrated in FIG. 31B may be used in conjunction with an application-specific integrated circuit (ASIC), such as, but not limited to, TensorFlow^{®} Processing Unit from Google, an inference processing unit (IPU) from Graphcore^{™}, or a Nervana^{®} (e.g., "Lake Crest") processor from Intel Corp. Inference and/or training logic 3115 illustrated in FIG. 31B may be used in conjunction with central processing unit (CPU) hardware, graphics processing unit (GPU) hardware or other hardware, such as, but not limited to, field programmable gate arrays (FPGAs). Inference and/or training logic 3115 can include code and/or data storage 3101 and code and/or data storage 3105, which may be used to store code (e.g., graph code), weight values and/or other information, including bias values, gradient information, momentum values, and/or other parameter or hyperparameter information. In FIG. 31B, for example, each of code and/or data storage 3101 and code and/or data storage 3105 is associated with a dedicated computational resource, such as, but not limited to, computational hardware 3102 and computational hardware 3106, respectively. Each of computational hardware 3102 and computational hardware 3106 can include one or more ALUs that perform mathematical functions, such as, but not limited to, linear algebraic functions, only on information stored in code and/or data storage 3101 and code and/or data storage 3105, respectively, result of which is stored in activation storage 3120.

Each of code and/or data storage 3101 and 3105 and corresponding computational hardware 3102 and 3106, respectively, correspond to different layers of a neural network, such that resulting activation from one storage/computational pair 3101/3102 of code and/or data storage 3101 and computational hardware 3102 is provided as an input to a next storage/computational pair 3105/3106 of code and/or data storage 3105 and computational hardware 3106, in order to mirror a conceptual organization of a neural network. Each of storage/computational pairs 3101/3102 and 3105/3106 may correspond to more than one neural network layer. Additional storage/computation pairs (not shown) subsequent to or in parallel with storage/computation pairs 3101/3102 and 3105/3106 may be included in inference and/or training logic 3115.

In at least one embodiment, logic 3115 described elsewhere herein, can include one or more circuits to perform an API to pause and/or resume one or more GPU instructions or otherwise perform any of the operations described above or elsewhere herein. One or more circuits in logic 3115 can be configured by software described herein, to perform an API to pause and/or resume one or more GPU instructions or otherwise perform any of the operations described above or elsewhere herein.

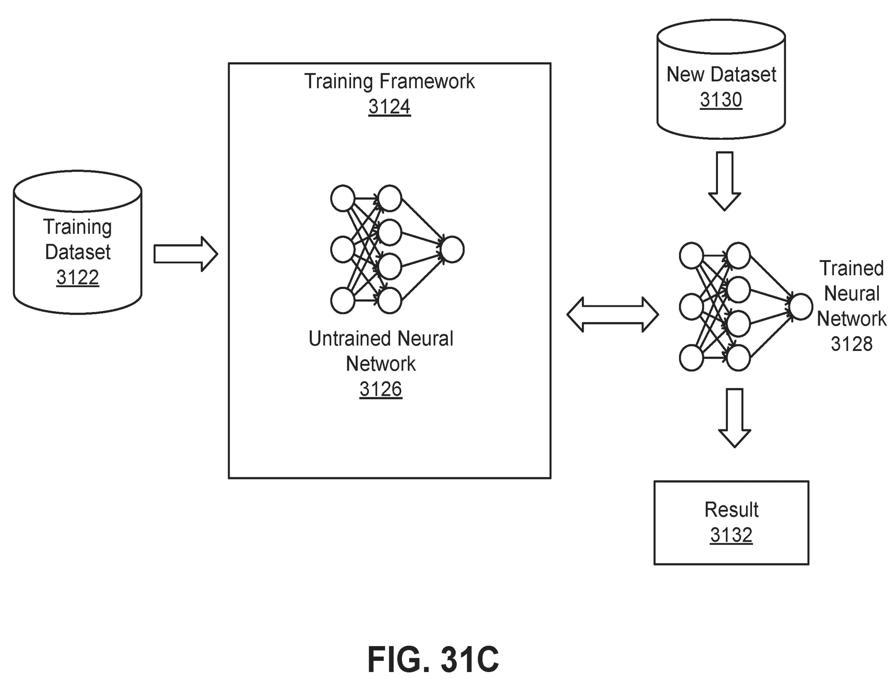

FIG. 31C illustrates training and deployment of a deep neural network, in accordance with at least one embodiment. An untrained neural network 3126 can be trained using a training dataset 3122. Training framework 3124 can be a PyTorch framework, and/or a training framework 3104 can include a TensorFlow, Boost, Caffe, Microsoft Cognitive Toolkit/CNTK, MXNet, Chainer, Keras, Deeplearning4j, or other training framework. Training framework 3124 can train an untrained neural network 3126 and enables it to be trained using processing resources described herein to generate a trained neural network 3128. Weights may be chosen randomly or by pre-training using a deep belief network. Training may be performed in either a supervised, partially supervised, or unsupervised manner.

Untrained neural network 3126 can be trained using supervised learning, wherein training dataset 3122 includes an input paired with a desired output for an input, or where training dataset 3122 includes input having a known output and an output of neural network 3126 is manually graded. Untrained neural network 3126 can be trained in a supervised manner and processes inputs from training dataset 3122 and compares resulting outputs against a set of expected or desired outputs. Errors can then be propagated back through untrained neural network 3126. Training framework 3124 can adjust weights that control untrained neural network 3126. Training framework 3124 can include tools to monitor how well untrained neural network 3126 is converging towards a model, such as, but not limited to, trained neural network 3128, suitable to generating correct answers, such as, but not limited to, in result 3132, based on input data such as, but not limited to, a new dataset 3130. Training framework 3124 can train untrained neural network 3126 repeatedly while adjust weights to refine an output of untrained neural network 3126 using a loss function and adjustment algorithm, such as, but not limited to, stochastic gradient descent. Training framework 3124 can train untrained neural network 3126 until untrained neural network 3126 achieves a desired accuracy. Trained neural network 3128 can then be deployed to implement any number of machine learning operations.

Untrained neural network 3126 can be trained using unsupervised learning, wherein untrained neural network 3126 attempts to train itself using unlabeled data. Unsupervised learning training dataset 3122 can include input data without any associated output data or "ground truth" data. Untrained neural network 3126 can learn groupings within training dataset 3122 and can determine how individual inputs may be related to untrained dataset 3122. Unsupervised training can be used to generate a self-organizing map in trained neural network 3128 capable of performing operations useful in reducing dimensionality of new dataset 3130. Unsupervised training can also be used to perform anomaly detection, which allows identification of data points in new dataset 3130 that deviate from normal patterns of new dataset 3130.

Semi-supervised learning may be used, which is a technique in which in training dataset 3122 includes a mix of labeled and unlabeled data. Training framework 3124 may be used to perform incremental learning, such as, but not limited to, through transferred learning techniques. Incremental learning can enable trained neural network 3128 to adapt to new dataset 3130 without forgetting knowledge instilled within trained neural network 3128 during initial training.

Training framework 3124 can include a framework processed in connection with a software development toolkit such as, but not limited to, an OpenVINO (Open Visual Inference and Neural network Optimization) toolkit. An OpenVINO toolkit can include a toolkit such as, but not limited to, those developed by Intel Corporation of Santa Clara, CA.

OpenVINO can include a toolkit for facilitating development of applications, specifically neural network applications, for various instructions and operations, such as, but not limited to, human vision emulation, speech recognition, natural language processing, recommendation systems, and/or variations thereof. OpenVINO can support neural networks such as, but not limited to, convolutional neural networks (CNNs), recurrent and/or attention-based neural networks, and/or various other neural network models. OpenVINO can support various software libraries such as, but not limited to, OpenCV, OpenCL, and/or variations thereof.

OpenVINO can support neural network models for various instructions and operations, such as, but not limited to, classification, segmentation, object detection, face recognition, speech recognition, pose estimation (e.g., humans and/or objects), monocular depth estimation, image inpainting, style transfer, action recognition, colorization, and/or variations thereof.

OpenVINO can include one or more software tools and/or modules for model optimization, also referred to as a model optimizer. A model optimizer can include a command line tool that facilitates transitions between training and deployment of neural network models. A model optimizer may optimize neural network models for execution on various devices and/or processing units, such as, but not limited to, a GPU, CPU, PPU, GPGPU, and/or variations thereof. A model optimizer can generate an internal representation of a model, and can optimize said model to generate an intermediate representation. A model optimizer may reduce a number of layers of a model. A model optimizer can remove layers of a model that may be utilized for training. A model optimizer may perform various neural network operations, such as, but not limited to, modifying inputs to a model (e.g., resizing inputs to a model), modifying a size of inputs of a model (e.g., modifying a batch size of a model), modifying a model structure (e.g., modifying layers of a model), normalization, standardization, quantization (e.g., converting weights of a model from a first representation, such as, but not limited to, floating point, to a second representation, such as, but not limited to, integer), and/or variations thereof.

Open VINO can include one or more software libraries for inferencing, also referred to as an inference engine. An inference engine can include a C++ library, or any suitable programming language library. An inference engine can be utilized to infer input data. An inference engine may implement various classes to infer input data and generate one or more results. An inference engine can implement one or more API functions to process an intermediate representation, set input and/or output formats, and/or execute a model on one or more devices.

Open VINO may provide various abilities for heterogeneous execution of one or more neural network models. Heterogeneous execution, or heterogeneous computing, can refer to one or more computing processes and/or systems that utilize one or more types of processors and/or cores. OpenVINO can provide various software functions to execute a program on one or more devices. OpenVINO may provide various software functions to execute a program and/or portions of a program on different devices. OpenVINO may provide various software functions to, for example, run a first portion of code on a CPU and a second portion of code on a GPU and/or FPGA. OpenVINO may provide various software functions to execute one or more layers of a neural network on one or more devices (e.g., a first set of layers on a first device, such as, but not limited to, a GPU, and a second set of layers on a second device, such as, but not limited to, a CPU).

OpenVINO can include various functionality similar to functionalities associated with a CUDA programming model, such as, but not limited to, various neural network model operations associated with frameworks such as, but not limited to, TensorFlow, PyTorch, and/or variations thereof. One or more CUDA programming model operations may be performed using OpenVINO. Various systems, methods, and/or techniques described herein may be implemented using OpenVINO.

In at least one embodiment, one or more circuits can be used to cause one or more neural networks and training frameworks described elsewhere herein to perform an API to pause and/or resume one or more GPU instructions or otherwise perform any of the operations described above or elsewhere herein. One or more neural networks and training frameworks can be configured by software to perform an API to pause and/or resume one or more GPU instructions or otherwise perform any of the operations described above or elsewhere herein.

At least one embodiment of the disclosure can be described in view of the following clauses:
Clause 1. One or more processors comprising:
   circuitry to perform an application programming interface (API) to pause performance of one or more graphics processing unit (GPU) instructions scheduled to be performed on a GPU, wherein the GPU instructions are identified by the API as being associated with a program that has invoked the API.
Clause 2. The one or more processors of Clause 1, wherein the one or more GPU instructions are associated with a plurality of GPU contexts.
Clause 3. The one or more processors of Clause 1 or 2, wherein the circuitry is to cause a scheduler to pause scheduling of instructions associated with the program.
Clause 4. The one or more processors of any of Clauses 1-3, wherein the circuitry is to perform one or more second instructions of a second program while instructions associated with the first program are paused.
Clause 5. The one or more processors of any of Clauses 1-4, wherein performing the API modifies the allocation of slices of time to be used by the GPU to perform instructions associated with the program relative to slices of time to be used by the GPU to perform instructions associated with a second program.
Clause 6. The one or more processors of any of Clauses 1-5, wherein performing the API causes the one or more instructions to be removed from a queue of instructions to be performed by the GPU.
Clause 7. The one or more processors of any of Clauses 1-6, wherein the circuitry is to perform a second API to resume performance of the one or more instructions.
Clause 8. A system, comprising:
   circuitry to perform an application programming interface (API) to pause performance of one or more graphics processing unit (GPU) instructions scheduled to be performed on a GPU, wherein the GPU instructions are identified by the API as being associated with a program that has invoked the API.
Clause 9. The system of Clause 8, wherein the one or more GPU instructions are associated with a plurality of GPU contexts.
Clause 10. The system of Clause 8 or 9, wherein the circuitry is to cause a scheduler to pause scheduling of instructions associated with the program.
Clause 11. The system of any of Clauses 8-10, wherein the circuitry is to perform one or more second instructions of a second program while instructions associated with the first program are paused.
Clause 12. The system of any of Clauses 8-11, wherein performing the API modifies the allocation of slices of time to be used by the GPU to perform instructions associated with the program relative to slices of time to be used by the GPU to perform instructions associated with a second program.
Clause 13. The system of any of Clauses 8-12, wherein performing the API causes the one or more instructions to be removed from a queue of instructions to be performed by the GPU.
Clause 14. The system of any of Clauses 8-13, wherein the circuitry is to perform a second API to resume performance of the one or more instructions.
Clause 15. A method, comprising: receiving, via an application programming interface (API), an indication that performance of one or more instructions scheduled to be performed on a graphics processing unit (GPU) instructions is to be paused;
   identifying one or more instructions associated with a program that has invoked the API; and
   causing, in response to the invocation of the API, the performance of the identified one or more scheduled instructions to be paused.
Clause 16. The method of Clause 15, wherein the one or more GPU instructions are associated with a plurality of GPU contexts of the program.
Clause 17. The method of Clause 15 or 16, further comprising:
   causing a scheduler to pause scheduling of GPU instructions associated with the program.
Clause 18. The method of any of Clauses 15-17, further comprising:
   performing one or more second instructions of a second program while instructions associated with the program are paused.
Clause 19. The method of any of Clauses 15-18, further comprising:
   modifying, in response an invocation of the API, allocation of slices of time to be used by the GPU to perform instructions associated with the program relative to slices of time to be used by the GPU to perform instructions associated with a second program.
Clause 20. The method of any of Clauses 15-19, further comprising:
   responding to invocation of a second API by resuming performance of the one or more instructions.
Clause 21. One or more processors comprising:
   circuitry to perform an application programming interface (API) to pause performance of one or more graphics processing unit (GPU) instructions scheduled to be performed on a GPU, wherein the GPU instructions are identified by the API as being associated with a program that has invoked the API.
Clause 22. The one or more processors of Clause 21, wherein the one or more GPU instructions are associated with a plurality of GPU contexts.
Clause 23. The one or more processors of Clause 21 or 22, wherein the circuitry is to cause a scheduler to pause scheduling of instructions associated with the program.
Clause 24. The one or more processors of any of Clauses 21-23, wherein the circuitry is to perform one or more second instructions of a second program while instructions associated with the first program are paused.
Clause 25. The one or more processors of any of Clauses 21-24, wherein performing the API modifies the allocation of slices of time to be used by the GPU to perform instructions associated with the program relative to slices of time to be used by the GPU to perform instructions associated with a second program.
Clause 26. The one or more processors of any of Clauses 21-25, wherein performing the API causes the one or more instructions to be removed from a queue of instructions to be performed by the GPU.
Clause 27. The one or more processors of any of Clauses 21-26, wherein the circuitry is to perform a second API to resume performance of the one or more instructions.

At least one embodiment of the disclosure can be described in view of the following clauses:
Clause 1. One or more processors comprising:
   circuitry to perform an application programming interface (API) to resume performance of one or more graphics processing unit (GPU) instructions whose scheduled performance on a GPU has been paused, wherein the GPU instructions are associated with one or more identifiers indicated to the API.
Clause 2. The one or more processors of Clause 1, wherein the one or more identifiers correspond to one or more contexts for controlling the GPU.
Clause 3. The one or more processors of Clause 1 or 2, wherein the API is to cause a state of one or more threads to perform the one or more paused GPU instructions to be restored.
Clause 4. The one or more processors of any of Clauses 1-3, wherein the GPU instructions are associated with a first context and the API is to cause time slices to be shared between second instructions associated with a second context and the GPU instructions associated with the first context.
Clause 5. The one or more processors of any of Clauses 1-4, wherein the API is to cause a scheduler to resume scheduling the GPU instructions to be performed by the GPU.
Clause 6. The one or more processors of any of Clauses 1-5, wherein the API is to cause one or more GPU instructions to be returned to one or more queues of instructions to be performed by the GPU.
Clause 7. The one or more processors of any of Clauses 1-6, wherein the GPU instructions were paused by invocation of a second API.
Clause 8. A system comprising:
   one or more processors to perform an application programming interface (API) to resume performance of one or more graphics processing unit (GPU) instructions whose scheduled performance on a GPU has been paused, wherein the GPU instructions are associated with one or more identifiers indicated to the API.
Clause 9. The system of Clause 8, wherein the one or more identifiers correspond to one or more contexts for controlling the GPU.
Clause 10. The system of Clause 8 or 9, wherein the API is to cause a state of one or more threads to perform the one or more paused GPU instructions to be restored.
Clause 11. The system of any of Clauses 8-10, wherein the GPU instructions are associated with a first context and the API is to cause time slices to be shared between second instructions associated with a second context and the GPU instructions associated with the first context.
Clause 12. The system of any of Clauses 8-11, wherein the API is to cause a scheduler to resume scheduling the GPU instructions to be performed by the GPU.
Clause 13. The system of any of Clauses 8-12, wherein the API is to cause one or more GPU instructions to be returned to one or more queues of instructions to be performed by the GPU.
Clause 14. The system of any of Clauses 8-13, wherein the GPU instructions correspond to GPU instructions paused by invocation of a second API.
Clause 15. A method, comprising:
   receiving one or more application programming interface (API) parameters indicating a context of graphics processing unit (GPU) instructions on a GPU;
   identifying one or more instructions associated with the indicated context that are paused on the GPU; and
   causing, in response to receiving the parameters, the performance of the one or more paused instructions to be resumed.
Clause 16. The method of Clause 15, wherein the one or more identifiers correspond to one or more contexts for controlling the GPU.
Clause 17. The method of Clause 15 or 16, further comprising:
   causing a state of one or more threads to perform the one or more paused GPU instructions to be restored.
Clause 18. The method of any of Clauses 15-17, wherein the GPU instructions are associated with a first context and the API is to cause time slices to be shared between second instructions associated with a second context and the GPU instructions associated with the first context.
Clause 19. The method of any of Clauses 15-18, further comprising:
   causing a scheduler to resume scheduling the GPU instructions to be performed by the GPU.
Clause 20. The method of any of Clauses 15-19, further comprising:
   causing one or more GPU instructions to be returned to one or more queues of instructions to be performed by the one or more processors.
Clause 21. One or more processors comprising:
   circuitry to perform an application programming interface (API) to resume performance of one or more graphics processing unit (GPU) instructions whose performance on a GPU has been paused, wherein the GPU instructions are identified by the API as being associated with a program that has invoked the API.
Clause 22. The one or more processors of Clause 21, wherein the one or more GPU instructions are associated with a plurality of GPU contexts.
Clause 23. The one or more processors of Clause 21 or 22, wherein the circuitry is to cause a scheduler to resume scheduling of the GPU instructions associated with the program.
Clause 24. The one or more processors of any of Clauses 21-23, wherein the API is to cause time slices to be shared between second instructions associated with a second program and the GPU instructions associated with the program.
Clause 25. The one or more processors of any of Clauses 21-24, wherein the API is to restore a state of one or more threads to perform the GPU instructions associated with the program.
Clause 26. The one or more processors of any of Clauses 21-25, wherein the API is to cause the one or more GPU instructions associated with the program to be returned to one or more queues of instructions to be performed by the GPU.
Clause 27. The one or more processors of any of Clauses 21-26, wherein the GPU instructions correspond to GPU instructions paused by invocation of a second API.

At least one embodiment of the disclosure can be described in view of the following clauses:
Clause 1. One or more processors comprising:
   circuitry to perform an application programming interface (API) to pause performance of one or more graphics processing unit (GPU) instructions scheduled to be performed on a GPU, wherein the GPU instructions are identified by the API as being associated with a program that has invoked the API.
Clause 2. The one or more processors of Clause 1, wherein the one or more GPU instructions are associated with a plurality of GPU contexts.
Clause 3. The one or more processors of Clause 1 or 2, wherein the circuitry is to cause a scheduler to pause scheduling of instructions associated with the program.
Clause 4. The one or more processors of any of Clauses 1-3, wherein the circuitry is to perform one or more second instructions of a second program while instructions associated with the first program are paused.
Clause 5. The one or more processors of any of Clauses 1-4, wherein performing the API modifies the allocation of slices of time to be used by the GPU to perform instructions associated with the program relative to slices of time to be used by the GPU to perform instructions associated with a second program.
Clause 6. The one or more processors of any of Clauses 1-5, wherein performing the API causes the one or more instructions to be removed from a queue of instructions to be performed by the GPU.
Clause 7. The one or more processors of any of Clauses 1-6, wherein the circuitry is to perform a second API to resume performance of the one or more instructions.
Clause 8. A system, comprising:
   circuitry to perform an application programming interface (API) to pause performance of one or more graphics processing unit (GPU) instructions scheduled to be performed on a GPU, wherein the GPU instructions are identified by the API as being associated with a program that has invoked the API.
Clause 9. The system of Clause 8, wherein the one or more GPU instructions are associated with a plurality of GPU contexts.
Clause 10. The system of Clause 8 or 9, wherein the circuitry is to cause a scheduler to pause scheduling of instructions associated with the program.
Clause 11. The system of any of Clauses 8-10, wherein the circuitry is to perform one or more second instructions of a second program while instructions associated with the first program are paused.
Clause 12. The system of any of Clauses 8-11, wherein performing the API modifies the allocation of slices of time to be used by the GPU to perform instructions associated with the program relative to slices of time to be used by the GPU to perform instructions associated with a second program.
Clause 13. The system of any of Clauses 8-12, wherein performing the API causes the one or more instructions to be removed from a queue of instructions to be performed by the GPU.
Clause 14. The system of any of Clauses 8-13, wherein the circuitry is to perform a second API to resume performance of the one or more instructions.
Clause 15. A method, comprising:
   receiving, via an application programming interface (API), an indication that performance of one or more instructions scheduled to be performed on a graphics processing unit (GPU) instructions is to be paused;
   identifying one or more instructions associated with a program that has invoked the API; and
   causing, in response to the invocation of the API, the performance of the identified one or more scheduled instructions to be paused.
Clause 16. The method of Clause 15, wherein the one or more GPU instructions are associated with a plurality of GPU contexts of the program.
Clause 17. The method of Clause 15 or 16, further comprising:
   causing a scheduler to pause scheduling of GPU instructions associated with the program.
Clause 18. The method of any of Clauses 15-17, further comprising:
   performing one or more second instructions of a second program while instructions associated with the program are paused.
Clause 19. The method of any of Clauses 15-18, further comprising:
   modifying, in response an invocation of the API, allocation of slices of time to be used by the GPU to perform instructions associated with the program relative to slices of time to be used by the GPU to perform instructions associated with a second program.
Clause 20. The method of any of Clauses 15-19, further comprising:
   responding to invocation of a second API by resuming performance of the one or more instructions.

At least one embodiment of the disclosure can be described in view of the following clauses:
Clause 1. One or more processors comprising:
   circuitry to perform an application programming interface (API) to resume performance of one or more graphics processing unit (GPU) instructions whose performance on a GPU has been paused, wherein the GPU instructions are identified by the API as being associated with a program that has invoked the API.
Clause 2. The one or more processors of Clause 1, wherein the one or more GPU instructions are associated with a plurality of GPU contexts.
Clause 3. The one or more processors of Clause 1 or 2, wherein the circuitry is to cause a scheduler to resume scheduling of the GPU instructions associated with the program.
Clause 4. The one or more processors of any of Clauses 1-3, wherein the API is to cause time slices to be shared between second instructions associated with a second program and the GPU instructions associated with the program.
Clause 5. The one or more processors of any of Clauses 1-4, wherein the API is to restore a state of one or more threads to perform the GPU instructions associated with the program.
Clause 6. The one or more processors of any of Clauses 1-5, wherein the API is to cause the one or more GPU instructions associated with the program to be returned to one or more queues of instructions to be performed by the GPU.
Clause 7. The one or more processors of any of Clauses 1-6, wherein the GPU instructions correspond to GPU instructions paused by invocation of a second API.
Clause 8. A system comprising:
   one or more processors to perform an application programming interface (API) to resume performance of one or more graphics processing unit (GPU) instructions whose performance on a GPU has been paused, wherein the GPU instructions are identified by the API as being associated with a program that has invoked the API.
Clause 9. The system of Clause 8, wherein the one or more GPU instructions are associated with a plurality of GPU contexts.
Clause 10. The system of Clause 8 or 9, wherein the circuitry is to cause a scheduler to resume scheduling of the GPU instructions associated with the program.
Clause 11. The system of any of Clauses 8-10, wherein the API is to cause time slices to be shared between second instructions associated with a second program and the GPU instructions associated with the program.
Clause 12. The system of any of Clauses 8-11, wherein the API is to restore a state of one or more threads to perform the GPU instructions associated with the program.
Clause 13. The system of any of Clauses 8-12, wherein the API is to cause the one or more GPU instructions associated with the program to be returned to one or more queues of instructions to be performed by the GPU.
Clause 14. The system of any of Clauses 8-13, wherein the GPU instructions correspond to GPU instructions paused by invocation of a second API.
Clause 15. A method, comprising:
   receiving, via an application programming interface (API), an indication that performance of one or more paused instructions a graphics processing unit (GPU) instructions is to be resumed;
   identifying one or more paused instructions associated with a program that has invoked the API; and
   causing, in response to the invocation of the API, the performance of the identified one or more paused instructions to be resumed.
Clause 16. The method of Clause 15, wherein the one or more GPU instructions are associated with a plurality of GPU contexts.
Clause 17. The method of Clause 15 or 16, wherein the circuitry is to cause a scheduler to resume scheduling of the GPU instructions associated with the program.
Clause 18. The method of any of Clauses 15-17, further comprising:
   responding to invocation of the API by causing time slices to be shared between second instructions associated with a second program and the GPU instructions associated with the program.
Clause 19. The method of any of Clauses 15-18, further comprising:
   responding to invocation of the API by restoring a state of one or more threads to perform the GPU instructions associated with the program.
Clause 20. The method of any of Clauses 15-19, wherein the API is to cause the one or more GPU instructions associated with the program to be returned to one or more queues of instructions to be performed by the GPU.

At least one embodiment of the disclosure can be described in view of the following clauses:
Clause 1. One or more processors comprising:
   circuitry to perform an application programming interface (API) to pause performance of one or more graphics processing unit (GPU) instructions scheduled to be performed on a GPU, wherein the GPU instructions are associated with one or more identifiers indicated to the API.
Clause 2. The one or more processors of clause 1, wherein the one or more identifiers correspond to one or more contexts for controlling the GPU.
Clause 3. The one or more processors of clause 1, wherein the GPU instructions scheduled to be performed are associated with a first context for controlling the GPU, and wherein other instructions associated with a second context are to be performed while the instructions associated with the first context are paused.
Clause 4. The one or more processors of clause 1, wherein the circuitry is to pause the performance of the one or more GPU instructions by causing one or more schedulers to suspend scheduling of instructions associated with the one or more identifiers.
Clause 5. The one or more processors of clause 1, wherein performing the API modifies an allocation of slices of time to be used by the GPU to perform the instructions.
Clause 6. The one or more processor of clause 1, wherein performing the API causes the one or more GPU instructions to be removed from a queue of GPU instructions to be performed by the GPU.
Clause 7. The one or more processors of clause 1, wherein the circuitry is to perform a second API to resume performance of the one or more GPU instructions.
Clause 8. A system, comprising:
   circuitry to perform an application programming interface (API) to pause performance of one or more graphics processing unit (GPU) instructions scheduled to be performed on a GPU, wherein the GPU instructions are associated with one or more identifiers indicated to the API.
Clause 9. The system of clause 8, wherein the one or more identifiers correspond to one or more contexts for controlling the GPU.
Clause 10. The system of clause 8, wherein the GPU instructions scheduled to be performed are associated with a first context for controlling the GPU, and wherein other instructions associated with a second context are to be performed while the instructions associated with the first context are paused.
Clause 11. The system of clause 8, wherein the circuitry is to pause the performance of the one or more GPU instructions by causing one or more schedulers to suspend scheduling of instructions associated with the one or more identifiers.
Clause 12. The system of clause 8, wherein performing the API modifies an allocation of slices of time to be used by the GPU to perform the instructions.
Clause 13. The system of clause 8, wherein performing the API causes the one or more GPU instructions to be removed from a queue of GPU instructions to be performed by the GPU.
Clause 14. The system of clause 8, wherein the circuitry is to perform a second API to resume performance of the one or more GPU instructions.
Clause 15. A method, comprising:
   receiving one or more application programming interface (API) parameters indicating a context of performing graphics processing unit (GPU) instructions on a GPU;
   identifying one or more instructions associated with the indicated context that are scheduled to be performed on the GPU; and
   causing, in response to receiving the parameters, the performance of the one or more instructions to be paused.
Clause 16. The method of clause 15, further comprising:
   causing other instructions associated with a second context to be performed on the GPU while the instructions associated with the first context are paused.
Clause 17. The method of clause 15, wherein the performance of the one or more GPU instructions is paused by at least causing one or more schedulers to suspend scheduling of instructions associated with the one or more identifiers.
Clause 18. The method of clause 15, wherein the API modifies the allocation of slices of time to be used by the GPU to perform the one or more instructions.
Clause 19. The method of clause 15, wherein the context indicates of a group of instructions each associated with a task to be performed by the GPU.
Clause 20. The method of clause 15, further comprising:
   performing a second API to resume performance of the one or more instructions.
Clause 21. One or more processors comprising:
   circuitry to perform an application programming interface (API) to pause performance of one or more graphics processing unit (GPU) instructions scheduled to be performed on a GPU, wherein the GPU instructions are identified by the API as being associated with a program that has invoked the API.
Clause 22. The one or more processors of clause 21, wherein the one or more GPU instructions are associated with a plurality of GPU contexts.
Clause 23. The one or more processors of clause 21, wherein the circuitry is to cause a scheduler to pause scheduling of instructions associated with the program.
Clause 24. The one or more processors of clause 21, wherein the circuitry is to perform one or more second instructions of a second program while instructions associated with the first program are paused.
Clause 25. The one or more processors of clause 21, wherein performing the API modifies the allocation of slices of time to be used by the GPU to perform instructions associated with the program relative to slices of time to be used by the GPU to perform instructions associated with a second program.
Clause 26. The one or more processors of clause 21, wherein performing the API causes the one or more instructions to be removed from a queue of instructions to be performed by the GPU.
Clause 27. The one or more processors of clause 21, wherein the circuitry is to perform a second API to resume performance of the one or more instructions.

As will be apparent to one of ordinary skill in the art, other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Use of "may" and/or "can" is intended to indicate by way of example without limiting any particular embodiment or component or other function described above, below, or elsewhere herein. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as, but not limited to, phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). Number of items in a plurality can be at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. A process such as, but not limited to, those processes described herein (or variations and/or combinations thereof) can be performed under control of one or more computer systems configured with executable instructions and is implemented as code (e.g., executable instructions, one or more computer programs or one or more applications) executing collectively on one or more processors, by hardware or combinations thereof. Code can be stored on a computer-readable storage medium, for example, in form of a computer program comprising a plurality of instructions executable by one or more processors. A computer-readable storage medium can be a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. Code (e.g., executable code or source code) can be stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media can include multiple non-transitory computer-readable storage media and one or more of individual non-transitory storage media of multiple non-transitory computer-readable storage media lack all of code while multiple non-transitory computer-readable storage media collectively store all of code. Executable instructions can be executed such that different instructions are executed by different processors - for example, a non-transitory computer-readable storage medium store instructions and a main central processing unit ("CPU") executes some of instructions while a graphics processing unit ("GPU") executes other instructions. Different components of a computer system can have separate processors and different processors execute different subsets of instructions.

An arithmetic logic unit can include a set of combinational logic circuitry that takes one or more inputs to produce a result. An arithmetic logic unit can be used by a processor to implement mathematical operation such as, but not limited to, addition, subtraction, or multiplication. An arithmetic logic unit is used to implement logical operations such as, but not limited to, logical AND/OR or XOR. An arithmetic logic unit can be stateless, and made from physical switching components such as, but not limited to, semiconductor transistors arranged to form logical gates. An arithmetic logic unit may operate internally as a stateful logic circuit with an associated clock. An arithmetic logic unit may be constructed as an asynchronous logic circuit with an internal state not maintained in an associated register set. An arithmetic logic unit can be used by a processor to combine operands stored in one or more registers of the processor and produce an output that can be stored by the processor in another register or a memory location.

As a result of processing an instruction retrieved by the processor, the processor may present one or more inputs or operands to an arithmetic logic unit, causing the arithmetic logic unit to produce a result based at least in part on an instruction code provided to inputs of the arithmetic logic unit. The instruction codes provided by the processor to the ALU may be based at least in part on the instruction executed by the processor. Combinational logic in the ALU may process the inputs and produces an output which is placed on a bus within the processor. A processor can select a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

One or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Computer systems can be configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or example language (e.g., "such as, but not limited to,") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as, but not limited to, "processing," "computing," "calculating," "determining," or like, refer to action and/or processes of a computer or computing system, or similar electronic computing device, that manipulate and/or transform data represented as physical, such as, but not limited to, electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as, but not limited to, instructions, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

References may be made to obtaining, acquiring, receiving, or inputting analog or digital data into a subsystem, computer system, or computer-implemented machine. Processes of obtaining, acquiring, receiving, or inputting analog and digital data can be accomplished in a variety of ways such as, but not limited to, by receiving data as a parameter of a function call or a call to an application programming interface. Processes of obtaining, acquiring, receiving, or inputting analog or digital data can be accomplished by transferring data via a serial or parallel interface. Processes of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as example forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. One or more processors comprising:
circuitry to perform an application programming interface (API) to pause performance of one or more graphics processing unit (GPU) instructions scheduled to be performed on a GPU, wherein the GPU instructions are associated with one or more identifiers indicated to the API.

2. The one or more processors of claim 1, wherein the one or more identifiers correspond to one or more contexts for controlling the GPU.

3. The one or more processors of claim 1 or 2, wherein the GPU instructions scheduled to be performed are associated with a first context for controlling the GPU, and wherein other instructions associated with a second context are to be performed while the instructions associated with the first context are paused.

4. The one or more processors of claim 1, 2, or 3, wherein the circuitry is to pause the performance of the one or more GPU instructions by causing one or more schedulers to suspend scheduling of instructions associated with the one or more identifiers.

5. The one or more processors of any of claims 1-4, wherein performing the API modifies an allocation of slices of time to be used by the GPU to perform the instructions.

6. The one or more processor of any of claims 1-5, wherein performing the API causes the one or more GPU instructions to be removed from a queue of GPU instructions to be performed by the GPU.

7. The one or more processors of any of claims 1-6, wherein the circuitry is to perform a second API to resume performance of the one or more GPU instructions.

8. A system, comprising:
circuitry to perform an application programming interface (API) to pause performance of one or more graphics processing unit (GPU) instructions scheduled to be performed on a GPU, wherein the GPU instructions are associated with one or more identifiers indicated to the API.

9. A method, comprising:
receiving one or more application programming interface (API) parameters indicating a context of performing graphics processing unit (GPU) instructions on a GPU;
identifying one or more instructions associated with the indicated context that are scheduled to be performed on the GPU; and
causing, in response to receiving the parameters, the performance of the one or more instructions to be paused.

10. The method of claim 9, further comprising:
causing other instructions associated with a second context to be performed on the GPU while the instructions associated with the first context are paused.

11. The method of claim 9, wherein the performance of the one or more GPU instructions is paused by at least causing one or more schedulers to suspend scheduling of instructions associated with the one or more identifiers, wherein the API modifies the allocation of slices of time to be used by the GPU to perform the one or more instructions, wherein the context indicates of a group of instructions each associated with a task to be performed by the GPU, further comprising:
performing a second API to resume performance of the one or more instructions.

12. One or more processors comprising:
circuitry to perform an application programming interface (API) to pause performance of one or more graphics processing unit (GPU) instructions scheduled to be performed on a GPU, wherein the GPU instructions are identified by the API as being associated with a program that has invoked the API.

13. The one or more processors of claim 12, wherein the one or more GPU instructions are associated with a plurality of GPU contexts.

14. The one or more processors of claim 12, wherein the circuitry is to cause a scheduler to pause scheduling of instructions associated with the program, wherein the circuitry is to perform one or more second instructions of a second program while instructions associated with the first program are paused, wherein performing the API modifies the allocation of slices of time to be used by the GPU to perform instructions associated with the program relative to slices of time to be used by the GPU to perform instructions associated with a second program.

15. The one or more processors of claim 12, wherein performing the API causes the one or more instructions to be removed from a queue of instructions to be performed by the GPU, wherein the circuitry is to perform a second API to resume performance of the one or more instructions.
